(19) Europäisches Patentamt

European Patent Office

Office européen des brevets

(11) **EP 4 589 535 A1**

(12) **EUROPEAN PATENT APPLICATION**

(43) Date of publication:
**23.07.2025 Bulletin 2025/30**

(21) Application number: **25152370.0**

(22) Date of filing: **16.01.2025**

(51) International Patent Classification (IPC):
**G06T 9/00** $^{(2006.01)}$ **H04N 19/597** $^{(2014.01)}$
**H04N 19/96** $^{(2014.01)}$

(52) Cooperative Patent Classification (CPC):
**H04N 19/96; G06T 9/00; G06T 9/004; H04N 19/597**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.01.2024 US 202463621552 P**

(71) Applicant: **Comcast Cable Communications, LLC
Philadelphia, PA 19103 (US)**

(72) Inventors:
• **TAQUET, Jonathan
Philadelphia, 19103 (US)**
• **LASSERRE, Sébastien
Philadelphia, 19103 (US)**

(74) Representative: **V.O.
P.O. Box 87930
2508 DH Den Haag (NL)**

(54) **APPROXIMATION FOR RECOLORING OF POINT CLOUDS**

(57) Systems, apparatuses, methods, and computer-readable media are described for determining projected attributes of a point cloud frame associated with content. The projected attributes, associated with a reconstructed geometry of the point cloud frame, may be determined based on an approximation of a neighbor search. The approximation of the neighbor search may be used to find a set of close reference points to determine attribute predictors.

Decode points of a cloud frame to determine reconstructed points of the
point cloud frame
*2702*

↓

Determine attribute predictors of attributes of the reconstructed points
based on attributes of a reference point cloud frame, a motion vector
field applied to the reconstructed points, and approximation information
for selecting reference points for the reconstructed points
*2704*

↓

Decode the attributes of the reconstructed points based on the attribute
predictors
*2706*

↘ *2700*

*FIG. 27*

EP 4 589 535 A1

**Description**

## CROSS-REFERENCE TO RELATED APPLICATIONS

This application claims the benefit of U.S. Provisional Application No. 63/621,552 filed on January 16, 2024. The above referenced applications are hereby incorporated by reference in their entirety.

## BACKGROUND

An object or scene may be described using volumetric visual data consisting of a series of points. The points may be stored as a point cloud format that includes a collection of points in three-dimensional space. As point clouds can get quite large in data size, transmitting and processing point cloud data may need a data compression scheme that is specifically designed with respect to the unique characteristics of point cloud data.

## SUMMARY

The following summary presents a simplified summary of certain features. The summary is not an extensive overview and is not intended to identify key or critical elements.

Point cloud information associated with content may comprise geometry information and attribute information (e.g., color or texture of the geometry). Projected attributes for points in a point cloud may be determined for compressing the attribute information. Approximating a neighbor search to find a set of reference points may be used to determine the attribute information. The approximating neighbor search may reduce computational complexity for compressing the attribute information.

These and other features and advantages are described in greater detail below.

## BRIEF DESCRIPTION OF THE DRAWINGS

Some features are shown by way of example, and not by limitation, in the accompanying drawings. In the drawings, like numerals reference similar elements.

FIG. 1 shows an example point cloud coding system.
FIG. 2 shows an example Morton order.
FIG. 3 shows an example scanning order.
FIG. 4 shows an example neighborhood of cuboids for entropy coding the occupancy of a child cuboid.
FIG. 5 shows an example of a dynamic reduction function DR that may be used in dynamic OBUF.
FIG. 6 shows an example method for coding occupancy of a cuboid using dynamic OBUF.
FIG. 7 shows an example of an occupied cuboid.
FIG. 8A shows an example cuboid corresponding to a TriSoup node.
FIG. 8B shows an example refinement to the TriSoup model.
FIG. 8C shows an example of coding a centroid residual value.
FIG. 9A shows an example of voxelization.
FIG. 9B shows an example of voxelization using barycentric coordinates.
FIG. 10 shows an example encoding method using inter frame prediction.
FIG. 11 shows an example method for encoding point cloud attributes based on prediction transform.
FIG. 12 shows an example method for decoding point cloud attributes based on prediction transform.
FIG. 13 shows an example method for encoding point cloud attributes based on prediction with lifting transform.
FIG. 14 shows an example method for decoding point cloud attributes based on prediction with lifting transform.
FIG. 15 shows an example region adaptive hierarchical transform (RAHT)transformation used for an octree.
FIG. 16 shows another example of the RAHT transformation used for an octree.
FIG. 17 shows an example method for encoding point cloud frames.
FIG. 18 shows an example method for decoding point cloud frames.
FIG. 19 shows an example method for obtaining projected attributes.
FIG. 20A and FIG. 20B show examples of different approaches of projecting attributes.
FIG. 21 shows an example method for obtaining projected attributes.
FIG. 22 shows an example method for obtaining projected attributes.
FIG. 23 shows an example process for finding reference points.
FIG. 24 shows an example method for finding approximately nearest points.
FIG. 25 shows an example method for finding approximately nearest points.

FIG. 26 shows an example method for encoding attributes of a point cloud frame.

FIG. 27 shows an example method for decoding attributes of a point cloud frame.

FIG. 28 shows an example computer system in which examples of the present disclosure may be implemented.

FIG. 29 shows example elements of a computing device that may be used to implement any of the various devices described herein.

## DETAILED DESCRIPTION

The accompanying drawings and descriptions provide examples. It is to be understood that the examples shown in the drawings and/or described are non-exclusive, and that features shown and described may be practiced in other examples. Examples are provided for operation of point cloud or point cloud sequence encoding or decoding systems. More particularly, the technology disclosed herein may relate to point cloud compression as used in encoding and/or decoding devices and/or systems.

At least some visual data may describe an object or scene in content and/or media using a series of points. Each point may comprise a position in two dimensions (x and y) and one or more optional attributes like color. Volumetric visual data may add another positional dimension to these visual data. For example, volumetric visual data may describe an object or scene in content and/or media using a series of points that each may comprise a position in three dimensions (x, y, and z) and one or more optional attributes like color, reflectance, time stamp, etc. Volumetric visual data may provide a more immersive way to experience visual data, for example, compared to the at least some visual data. For example, an object or scene described by volumetric visual data may be viewed from any (or multiple) angles, whereas the at least some visual data may generally only be viewed from the angle in which it was captured or rendered. As a format for the representation of visual data (e.g., volumetric visual data, three-dimensional video data, etc.) point clouds are versatile in their capability in representing all types of three-dimensional (3D) objects, scenes, and visual content. Point clouds are well suited for use in various applications including, among others: movie post-production, real-time 3D immersive media or telepresence, extended reality, free viewpoint video, geographical information systems, autonomous driving, 3D mapping, visualization, medicine, multi-view replay, and real-time Light Detection and Ranging (LiDAR) data acquisition.

As explained herein, volumetric visual data may be used in many applications, including extended reality (XR). XR encompasses various types of immersive technologies, including augmented reality (AR), virtual reality (VR), and mixed reality (MR). Sparse volumetric visual data may be used in the automotive industry for the representation of three-dimensional (3D) maps (e.g., cartography) or as input to assisted driving systems. In the case of assisted driving systems, volumetric visual data may be typically input to driving decision algorithms. Volumetric visual data may be used to store valuable objects in digital form. In applications for preserving cultural heritage, a goal may be to keep a representation of objects that may be threatened by natural disasters. For example, statues, vases, and temples may be entirely scanned and stored as volumetric visual data having several billions of samples. This use-case for volumetric visual data may be particularly relevant for valuable objects in locations where earthquakes, tsunamis and typhoons are frequent. Volumetric visual data may take the form of a volumetric frame. The volumetric frame may describe an object or scene captured at a particular time instance. Volumetric visual data may take the form of a sequence of volumetric frames (referred to as a volumetric sequence or volumetric video). The sequence of volumetric frames may describe an object or scene captured at multiple different time instances.

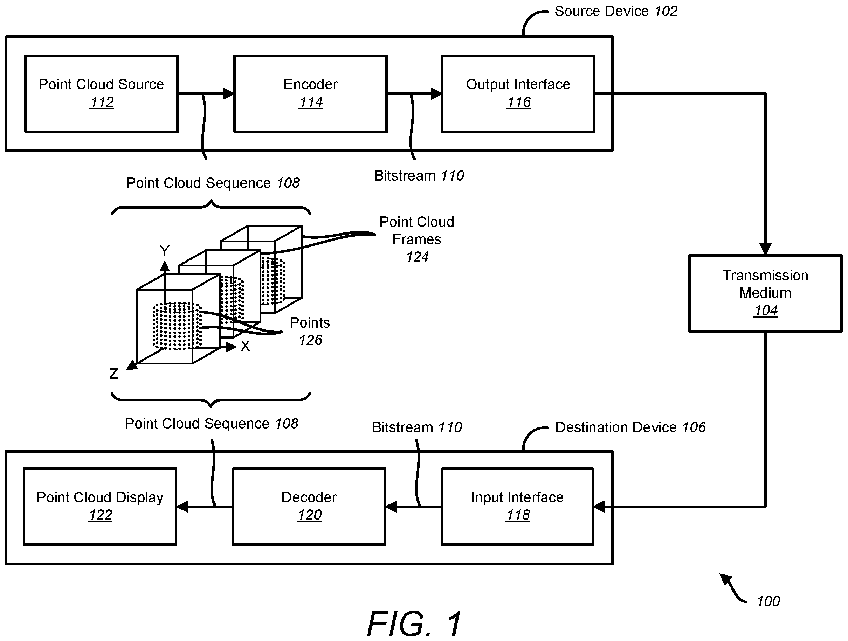

Volumetric visual data may be stored in various formats. A point cloud may comprise a collection of points in a 3D space. Such points may be used create a mesh comprising vertices and polygons, or other forms of visual content. As described herein, point cloud data may take the form of a point cloud frame, which describes an object or scene in content that is captured at a particular time instance. Point cloud data may take the form of a sequence of point cloud frames (e.g., point cloud video). As further described herein, point cloud data may be encoded by a source device (e.g., source device 102 as described herein with respect to FIG. 1) that outputs a bitstream containing the encoded point cloud data. The source device may encode the point cloud data based on point cloud compression coding, for example, geometry-based point cloud compression (G-PCC) coding and/or video-based point cloud compression (V-PCC) coding, or next generation coding. A destination device (e.g., destination device 106 as described herein with respect to FIG. 1) receives the bitstream containing the point cloud data and decodes the bitstream containing the point cloud data. The destination device may decode the point cloud data by performing point cloud decompression coding. The decompression coding may be an inverse process of the point cloud compression coding. The point cloud decompression coding may include, for example, G-PCC coding. Decoding may be used to decompress the point cloud data for display and/or other forms of consumption (e.g., further analysis, storage, etc.). The destination device (or a different device) may include, for example, a renderer for rendering the decoded point cloud data. The renderer may output content, for example, by rendering the point cloud data. The renderer may output content, for example, by rendering the point cloud data along with other data (e.g., audio data).

One format for storing volumetric visual data may be point clouds. A point cloud may comprise a collection of points in 3D space. Each point in a point cloud may comprise geometry information that may indicate the point's position in 3D space. For example, the geometry information may indicate the point's position in 3D space, for example, using three Cartesian coordinates (x, y, and z) and/or using spherical coordinates (r, phi, theta) (e.g., if acquired by a rotating sensor). The positions of points in a point cloud may be quantized according to a space precision. The space precision may be the same or different in each dimension. The quantization process may create a grid in 3D space. One or more points residing within each sub-grid volume may be mapped to the sub-grid center coordinates, referred to as voxels. A voxel may be considered as a 3D extension of pixels corresponding to the 2D image grid coordinates. For example, similar to a pixel being the smallest unit in the example of dividing the 2D space (or 2D image) into discrete, uniform (e.g., equally sized) regions, a voxel may be the smallest unit of volume in the example of dividing 3D space into discrete, uniform regions. A point in a point cloud may comprise one or more types of attribute information. Attribute information may indicate a property of a point's visual appearance. For example, attribute information may indicate a texture (e.g., color) of the point, a material type of the point, transparency information of the point, reflectance information of the point, a normal vector to a surface of the point, a velocity at the point, an acceleration at the point, a time stamp indicating when the point was captured, or a modality indicating how the point was captured (e.g., running, walking, or flying). A point in a point cloud may comprise light field data in the form of multiple view-dependent texture information. Light field data may be another type of optional attribute information.

The points in a point cloud may describe an object or a scene. For example, the points in a point cloud may describe the external surface and/or the internal structure of an object or scene. The object or scene may be synthetically generated by a computer. The object or scene may be generated from the capture of a real-world object or scene. The geometry information of a real-world object or a scene may be obtained by 3D scanning and/or photogrammetry. 3D scanning may include different types of scanning, for example, laser scanning, structured light scanning, and/or modulated light scanning. 3D scanning may obtain geometry information. 3D scanning may obtain geometry information, for example, by moving one or more laser heads, structured light cameras, and/or modulated light cameras relative to an object or scene being scanned. Photogrammetry may obtain geometry information. Photogrammetry may obtain geometry information, for example, by triangulating the same feature or point in different spatially shifted 2D photographs. Point cloud data may take the form of a point cloud frame. The point cloud frame may describe an object or scene captured at a particular time instance. Point cloud data may take the form of a sequence of point cloud frames. The sequence of point cloud frames may be referred to as a point cloud sequence or point cloud video. The sequence of point cloud frames may describe an object or scene captured at multiple different time instances.

The data size of a point cloud frame or point cloud sequence may be excessive (e.g., too large) for storage and/or transmission in many applications. For example, a single point cloud may comprise over a million points or even billions of points. Each point may comprise geometry information and one or more optional types of attribute information. The geometry information of each point may comprise three Cartesian coordinates (x, y, and z) and/or spherical coordinates (r, phi, theta) that may be each represented, for example, using at least 10 bits per component or 30 bits in total. The attribute information of each point may comprise a texture corresponding to a plurality of (e.g., three) color components (e.g., R, G, and B color components). Each color component may be represented, for example, using 8-10 bits per component or 24-30 bits in total. For example, a single point may comprise at least 54 bits of information, with at least 30 bits of geometry information and at least 24 bits of texture. If a point cloud frame includes a million such points, each point cloud frame may require 54 million bits or 54 megabits to represent. For dynamic point clouds that change over time, at a frame rate of 30 frames per second, a data rate of 1.32 gigabits per second may be required to send (e.g., transmit) the points of the point cloud sequence. Raw representations of point clouds may require a large amount of data, and the practical deployment of point-cloud-based technologies may need compression technologies that enable the storage and distribution of point clouds with a reasonable cost.

Encoding may be used to compress and/or reduce the data size of a point cloud frame or point cloud sequence to provide for more efficient storage and/or transmission. Decoding may be used to decompress a compressed point cloud frame or point cloud sequence for display and/or other forms of consumption (e.g., by a machine learning based device, neural network-based device, artificial intelligence-based device, or other forms of consumption by other types of machine-based processing algorithms and/or devices). Compression of point clouds may be lossy (introducing differences relative to the original data) for the distribution to and visualization by an end-user, for example, on AR or VR glasses or any other 3D-capable device. Lossy compression may allow for a high ratio of compression but may imply a trade-off between compression and visual quality perceived by an end-user. Other frameworks, for example, frameworks for medical applications or autonomous driving, may require lossless compression to avoid altering the results of a decision obtained, for example, based on the analysis of the sent (e.g., transmitted) and decompressed point cloud frame.

FIG. 1 shows an example point cloud coding (e.g., encoding and/or decoding) system 100. Point cloud coding system 100 may comprise a source device 102, a transmission medium 104, and a destination device 106. Source device 102 may encode a point cloud sequence 108 into a bitstream 110 for more efficient storage and/or transmission. Source device 102 may store and/or send (e.g., transmit) bitstream 110 to destination device 106 via transmission medium 104. Destination device 106 may decode bitstream 110 to display point cloud sequence 108 or for other forms of consumption (e.g., further analysis, storage, etc.). Destination device 106 may receive bitstream 110 from source device 102 via a storage medium or transmission medium 104. Source device 102 and destination device 106 may include any number of different devices. Source device 102 and destination device 106 may include, for example, a cluster of interconnected computer systems acting as a pool of seamless resources (also referred to as a cloud of computers or cloud computer), a server, a desktop computer, a laptop computer, a tablet computer, a smart phone, a wearable device, a television, a camera, a video gaming console, a set-top box, a video streaming device, a vehicle (e.g., an autonomous vehicle), or a head-mounted display. A head-mounted display may allow a user to view a VR, AR, or MR scene and adjust the view of the scene, for example, based on movement of the user's head. A head-mounted display may be connected (e.g., tethered) to a processing device (e.g., a server, a desktop computer, a set-top box, or a video gaming console) or may be fully self-contained.

A source device 102 may comprise a point cloud source 112, an encoder 114, and an output interface 116. A source device 102 may comprise a point cloud source 112, an encoder 114, and an output interface 116, for example, to encode point cloud sequence 108 into a bitstream 110. Point cloud source 112 may provide (e.g., generate) point cloud sequence 108, for example, from a capture of a natural scene and/or a synthetically generated scene. A synthetically generated scene may be a scene comprising computer generated graphics. Point cloud source 112 may comprise one or more point cloud capture devices, a point cloud archive comprising previously captured natural scenes and/or synthetically generated scenes, a point cloud feed interface to receive captured natural scenes and/or synthetically generated scenes from a point cloud content provider, and/or a processor(s) to generate synthetic point cloud scenes. The point cloud capture devices may include, for example, one or more laser scanning devices, structured light scanning devices, modulated light scanning devices, and/or passive scanning devices.

Point cloud sequence 108 may comprise a series of point cloud frames 124 (e.g., an example shown in FIG. 1). A point cloud frame may describe an object or scene captured at a particular time instance. Point cloud sequence 108 may achieve the impression of motion by using a constant or variable time to successively present point cloud frames 124 of point cloud sequence 108. A point cloud frame may comprise a collection of points (e.g., voxels) 126 in 3D space. Each point 126 may comprise geometry information that may indicate the point's position in 3D space. The geometry information may indicate, for example, the point's position in 3D space using three Cartesian coordinates (x, y, and z). One or more of points 126 may comprise one or more types of attribute information. Attribute information may indicate a property of a point's visual appearance. For example, attribute information may indicate, for example, a texture (e.g., color) of a point, a material type of a point, transparency information of a point, reflectance information of a point, a normal vector to a surface of a point, a velocity at a point, an acceleration at a point, a time stamp indicating when a point was captured, a modality indicating how a point was captured (e.g., running, walking, or flying), etc. One or more of points 126 may comprise, for example, light field data in the form of multiple view-dependent texture information. Light field data may be another type of optional attribute information. Color attribute information of one or more of points 126 may comprise a luminance value and two chrominance values. The luminance value may represent the brightness (e.g., luma component, Y) of the point. The chrominance values may respectively represent the blue and red components of the point (e.g., chroma components, Cb and Cr) separate from the brightness. Other color attribute values may be represented, for example, based on different color schemes (e.g., an RGB or monochrome color scheme).

Encoder 114 may encode point cloud sequence 108 into a bitstream 110. To encode point cloud sequence 108, encoder 114 may use one or more lossless or lossy compression techniques to reduce redundant information in point cloud sequence 108. To encode point cloud sequence 108, encoder 114 may use one or more prediction techniques to reduce redundant information in point cloud sequence 108. Redundant information is information that may be predicted at a decoder 120 and may not be needed to be sent (e.g., transmitted) to decoder 120 for accurate decoding of point cloud sequence 108. For example, Motion Picture Expert Group (MPEG) introduced a geometry-based point cloud compression (G-PCC) standard (ISO/IEC standard 23090-9: Geometry-based point cloud compression). G-PCC specifies the encoded bitstream syntax and semantics for transmission and/or storage of a compressed point cloud frame and the decoder operation for reconstructing the compressed point cloud frame from the bitstream. During standardization of G-PCC, a reference software (ISO/IEC standard 23090-21: Reference Software for G-PCC) was developed to encode the geometry and attribute information of a point cloud frame. To encode geometry information of a point cloud frame, the G-PCC reference software encoder may perform voxelization. The G-PCC reference software encoder may perform voxelization, for example, by quantizing positions of points in a point cloud. Quantizing positions of points in a point cloud may create a grid in 3D space. The G-PCC reference software encoder may map the points to the center coordinates of the sub-grid volume (e.g., voxel) that their quantized locations reside in. The G-PCC reference software encoder may perform geometry analysis using an occupancy tree to compress the geometry information. The G-PCC reference software encoder may entropy encode the result of the geometry analysis to further compress the geometry information. To encode attribute information of a point cloud, the G-PCC reference software encoder may use a transform tool, such as Region Adaptive Hierarchical Transform (RAHT), the Predicting Transform, and/or the Lifting Transform. The Lifting Transform may be built on top of the Predicting Transform. The Lifting Transform may include an extra update/lifting step. The Lifting Transform and the Predicting Transform may be referred to as Predicting/Lifting Transform or pred lift. Encoder 114 may operate in a same or similar manner to an encoder provided by the G-PCC reference software.

Output interface 116 may be configured to write and/or store bitstream 110 onto transmission medium 104. The bitstream 110 may be sent (e.g., transmitted) to destination device 106. In addition or alternatively, output interface 116 may be configured to send (e.g., transmit), upload, and/or stream bitstream 110 to destination device 106 via transmission medium 104. Output interface 116 may comprise a wired and/or wireless transmitter configured to send (e.g., transmit), upload, and/or stream bitstream 110 according to one or more proprietary, open-source, and/or standardized communication protocols. The one or more proprietary, open-source, and/or standardized communication protocols may include, for example, Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, Wireless Application Protocol (WAP) standards, and/or any other communication protocol.

Transmission medium 104 may comprise a wireless, wired, and/or computer readable medium. For example, transmission medium 104 may comprise one or more wires, cables, air interfaces, optical discs, flash memory, and/or magnetic memory. In addition or alternatively, transmission medium 104 may comprise one or more networks (e.g., the Internet) or file server(s) configured to store and/or send (e.g., transmit) encoded video data.

Destination device 106 may decode bitstream 110 into point cloud sequence 108 for display or other forms of consumption. Destination device 106 may comprise one or more of an input interface 118, a decoder 120, and/or a point cloud display 122. Input interface 118 may be configured to read bitstream 110 stored on transmission medium 104. Bitstream 110 may be stored on transmission medium 104 by source device 102. In addition or alternatively, input interface 118 may be configured to receive, download, and/or stream bitstream 110 from source device 102 via transmission medium 104. Input interface 118 may comprise a wired and/or wireless receiver configured to receive, download, and/or stream bitstream 110 according to one or more proprietary, open-source, standardized communication protocols, and/or any other communication protocol. Examples of the protocols include Digital Video Broadcasting (DVB) standards, Advanced Television Systems Committee (ATSC) standards, Integrated Services Digital Broadcasting (ISDB) standards, Data Over Cable Service Interface Specification (DOCSIS) standards, 3rd Generation Partnership Project (3GPP) standards, Institute of Electrical and Electronics Engineers (IEEE) standards, Internet Protocol (IP) standards, and Wireless Application Protocol (WAP) standards.

Decoder 120 may decode point cloud sequence 108 from encoded bitstream 110. For example, decoder 120 may operate in a same or similar manner as a decoder provided by G-PCC reference software. Decoder 120 may decode a point cloud sequence that approximates a point cloud sequence 108. Decoder 120 may decode a point cloud sequence that approximates a point cloud sequence 108 due to, for example, lossy compression of the point cloud sequence 108 by encoder 114 and/or errors introduced into encoded bitstream 110, for example, if transmission to destination device 106 occurs.

Point cloud display 122 may display a point cloud sequence 108 to a user. The point cloud display 122 may comprise, for example, a cathode rate tube (CRT) display, a liquid crystal display (LCD), a plasma display, a light emitting diode (LED) display, a 3D display, a holographic display, a head-mounted display, or any other display device suitable for displaying point cloud sequence 108.

Point cloud coding (e.g., encoding/decoding) system 100 is presented by way of example and not limitation. Point cloud coding systems different from the point cloud coding system 100 and/or modified versions of the point cloud coding system 100 may perform the methods and processes as described herein. For example, the point cloud coding system 100 may comprise other components and/or arrangements. Point cloud source 112 may, for example, be external to source device 102. Point cloud display device 122 may, for example, be external to destination device 106 or omitted altogether (e.g., if point cloud sequence 108 is intended for consumption by a machine and/or storage device). Source device 102 may further comprise, for example, a point cloud decoder. Destination device 106 may comprise, for example, a point cloud encoder. For example, source device 102 may be configured to further receive an encoded bit stream from destination device 106. Receiving an encoded bit stream from destination device 106 may support two-way point cloud transmission between the devices.

As described herein, an encoder may quantize the positions of points in a point cloud according to a space precision, which may be the same or different in each dimension of the points. The quantization process may create a grid in 3D space. The encoder may map any points residing within each sub-grid volume to the sub-grid center coordinates, referred to as a voxel or a volumetric pixel. A voxel may be considered as a 3D extension of pixels corresponding to 2D image grid coordinates.

An encoder may represent or code a point cloud (e.g., a voxelized). An encoder may represent or code a point cloud, for example, using an occupancy tree. For example, the encoder may split the initial volume or cuboid containing the point cloud into sub-cuboids. The initial volume or cuboid may be referred to as a bounding box. A cuboid may be, for example, a cube. The encoder may recursively split each sub-cuboid that contains at least one point of the point cloud. The encoder may not further split sub-cuboids that do not contain at least one point of the point cloud. A sub-cuboid that contains at least one point of the point cloud may be referred to as an occupied sub-cuboid. A sub-cuboid that does not contain at least one point of the point cloud may be referred to as an unoccupied sub-cuboid. The encoder may split an occupied sub-cuboid into, for example, two sub-cuboids (to form a binary tree), four sub-cuboids (to form a quadtree), or eight sub-cuboids (to form an octree). The encoder may split an occupied sub-cuboid to obtain further sub-cuboids. The sub-cuboids may have the same size and shape at a given depth level of the occupancy tree. The sub-cuboids may have the same size and shape at a given depth level of the occupancy tree, for example, if the encoder splits the occupied sub-cuboid along a plane passing through the middle of edges of the sub-cuboid.

The initial volume or cuboid containing the point cloud may correspond to the root node of the occupancy tree. Each occupied sub-cuboid, split from the initial volume, may correspond to a node (of the root node) in a second level of the occupancy tree. Each occupied sub-cuboid, split from an occupied sub-cuboid in the second level, may correspond to a node (off the occupied sub-cuboid in the second level from which it was split) in a third level of the occupancy tree. The occupancy tree structure may continue to form in this manner for each recursive split iteration until, for example, some maximum depth level of the occupancy tree is reached or each occupied sub-cuboid has a volume corresponding to one voxel.

Each non-leaf node of the occupancy tree may comprise or be associated with an occupancy word representing the occupancy state of the cuboid corresponding to the node. For example, a node of the occupancy tree corresponding to a cuboid that is split into 8 sub-cuboids may comprise or be associated with a 1-byte occupancy word. Each bit (referred to as an occupancy bit) of the 1-byte occupancy word may represent or indicate the occupancy of a different one of the eight sub-cuboids. Occupied sub-cuboids may be each represented or indicated by a binary "1" in the 1-byte occupancy word. Unoccupied sub-cuboids may be each represented or indicated by a binary "0" in the 1-byte occupancy word. Occupied and unoccupied sub-cuboids may be represented or indicated by opposite 1-bit binary values (e.g., a binary "0" representing or indicating an occupied sub-cuboid and a binary "1" representing or indicating an unoccupied sub-cuboid) in the 1-byte occupancy word.

Each bit of an occupancy word may represent or indicate the occupancy of a different one of the eight sub-cuboids. Each bit of an occupancy word may represent or indicate the occupancy of a different one of the eight sub-cuboids, for example, following the so-called Morton order. For example, the least significant bit of an occupancy word may represent or indicate, for example, the occupancy of a first one of the eight sub-cuboids following the Morton order. The second least significant bit of an occupancy word may represent or indicate, for example, the occupancy of a second one of the eight sub-cuboids following the Morton order, etc.

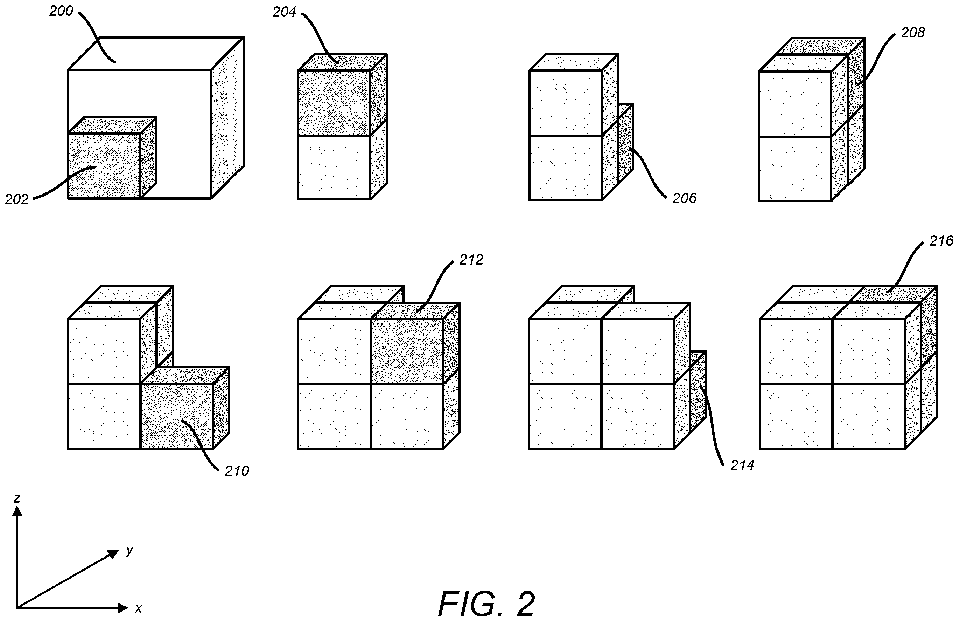

FIG. 2 shows an example Morton order. More specifically, FIG. 2 shows a Morton order of eight sub-cuboids 202-216 split from a cuboid 200. Sub-cuboids 202-216 may be labeled, for example, based on their Morton order, with child node 202 being the first in Morton order and child node 216 being the last in Morton order. The Morton order for sub-cuboids 202-216 may be a local lexicographic order in xyz.

The geometry of a point cloud may be represented by, and may be determined from, the initial volume and the occupancy words of the nodes in an occupancy tree. An encoder may send (e.g., transmit) the initial volume and the occupancy words of the nodes in the occupancy tree in a bitstream to a decoder for reconstructing the point cloud. The encoder may entropy encode the occupancy words. The encoder may entropy encode the occupancy words, for example, before sending (e.g., transmitting) the initial volume and the occupancy words of the nodes in the occupancy tree. The encoder may encode an occupancy bit of an occupancy word of a node corresponding to a cuboid. The encoder may encode an occupancy bit of an occupancy word of a node corresponding to a cuboid, for example, based on one or more occupancy bits of occupancy words of other nodes corresponding to cuboids that are adjacent or spatially close to the cuboid of the occupancy bit being encoded.

An encoder and/or a decoder may code (e.g., encode and/or decode) occupancy bits of occupancy words in sequence of a scan order. The scan order may also be referred to as a scanning order. For example, an encoder and/or a decoder may scan an occupancy tree in breadth-first order. All the occupancy words of the nodes of a given depth (e.g., level) within the occupancy tree may be scanned. All the occupancy words of the nodes of a given depth (e.g., level) within the occupancy tree may be scanned, for example, before scanning the occupancy words of the nodes of the next depth (e.g., level). Within a given depth, the encoder and/or decoder may scan the occupancy words of nodes in the Morton order. Within a given node, the encoder and/or decoder may scan the occupancy bits of the occupancy word of the node further in the Morton order.

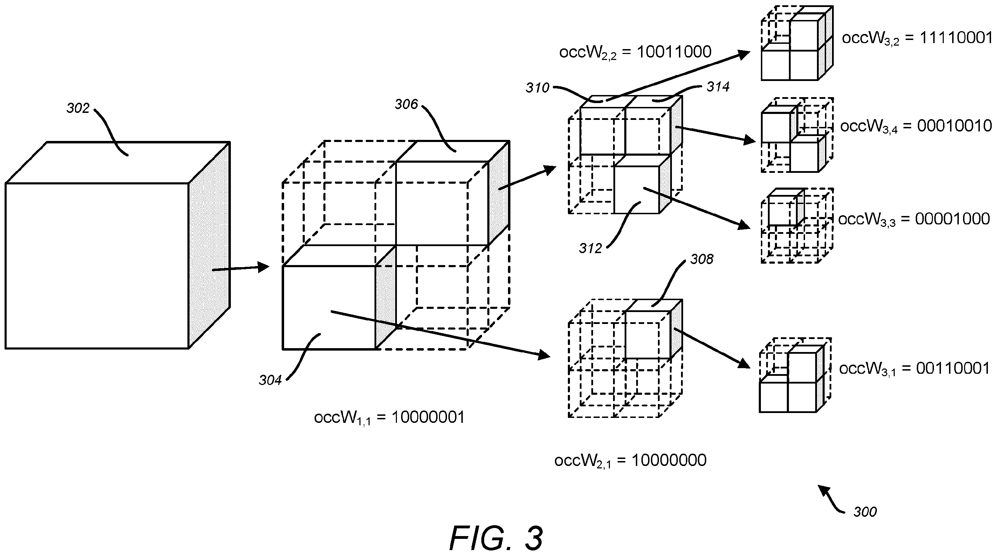

FIG. 3 shows an example scanning order. FIG. 3 shows an example scanning order (e.g., breadth-first order as described herein) for an occupancy tree 300. More specifically, FIG. 3 shows a scanning order for the first three example levels of an occupancy tree 300. In FIG. 3, a cuboid (e.g., cube) 302 corresponding to a root node of the occupancy tree 300 may be divided into eight sub-cuboids (e.g., sub-cubes). Two sub-cuboids 304 and 306 of the eight sub-cuboids may be occupied. The other six sub-cuboids of the eight sub-cuboids may be unoccupied. Following the Morton order, a first eight-bit occupancy word (e.g., $occW_{1,1}$) may be constructed to represent the occupancy word of the root node. An (e.g., each) occupancy bit of the first eight-bit occupancy word (e.g., $occW_{1,1}$) may represent or indicate the occupancy of a sub-cube of the eight sub-cuboids in the Morton order. For example, the least significant occupancy bit of the first eight-bit occupancy word $occW_{1,1}$ may represent or indicate the occupancy of the first sub-cuboid of the eight sub-cuboids in the Morton order.

The second least significant occupancy bit of the first eight-bit occupancy word $occW_{1,1}$ may represent or indicate the occupancy of the second sub-cuboid of the eight sub-cuboids in the Morton order, etc.

Each of occupied sub-cuboids (e.g., two occupied sub-cuboids 304 and 306) may correspond to a node off the root node in a second level of an occupancy tree 300. The occupied sub-cuboids (e.g., two occupied sub-cuboids 304 and 306) may be each further split into eight sub-cuboids. For example, one of the sub-cuboids 308 of the eight sub-cuboids split from the sub-cube 304 may be occupied, and the other seven sub-cuboids may be unoccupied. Three of the sub-cuboids 310, 312, and 314 of the eight sub-cuboids split from the sub-cube 306 may be occupied, and the other five sub-cuboids of the eight sub-cuboids split from the sub-cube 306 may be unoccupied. Two second eight-bit occupancy words $occW_{2,1}$ and $occW_{2,2}$ may be constructed in this order to respectively represent the occupancy word of the node corresponding to the sub-cuboid 304 and the occupancy word of the node corresponding to the sub-cuboid 306.

Each of occupied sub-cuboids (e.g., four occupied sub-cuboids 308, 310, 312, and 314) may correspond to a node in a third level of an occupancy tree 300. The occupied sub-cuboids (e.g., four occupied sub-cuboids 308, 310, 312, and 314) may be each further split into eight sub-cuboids or 32 sub-cuboids in total. For example, four third level eight-bit occupancy words $occW_{3,1}$, $occW_{3,2}$, $occW_{3,3}$ and $occW_{3,4}$ may be constructed in this order to respectively represent the occupancy word of the node corresponding to the sub-cuboid 308, the occupancy word of the node corresponding to the sub-cuboid 310, the occupancy word of the node corresponding to the sub-cuboid 312, and the occupancy word of the node corresponding to the sub-cuboid 314.

Occupancy words of an example occupancy tree 300 may be entropy coded (e.g., entropy encoded by an encoder and/or entropy decoded by a decoder), for example, following the scanning order discussed herein (e.g., Morton order). The occupancy words of the example occupancy tree 300 may be entropy coded (e.g., entropy encoded by an encoder and/or entropy decoded by a decoder) as the succession of the seven occupancy words $occW_{1,1}$ to $occW_{3,4}$, for example, following the scanning order discussed herein. The scanning order discussed herein may be a breadth-first scanning order. The occupancy word(s) of all node(s) having the same depth (or level) as a current parent node may have already been entropy coded, for example, if the occupancy word of a current child node belonging to the current parent node is being entropy coded. For example, the occupancy word(s) of all node(s) having the same depth (e.g., level) as the current child node and having a lower Morton order than the current child node may have also already been entropy coded. Part of the already coded occupancy word(s) may be used to entropy code the occupancy word of the current child node. The already coded occupancy word(s) of neighboring parent and child node(s) may be used, for example, to entropy code the occupancy word of the current child node. The occupancy bit(s) of the occupancy word having a lower Morton order than a particular occupancy bit may have also already been entropy coded and may be used to code the occupancy bit of the occupancy word of the current child node, for example, if the particular occupancy bit of the occupancy word of the current child node is being coded (e.g., entropy coded).

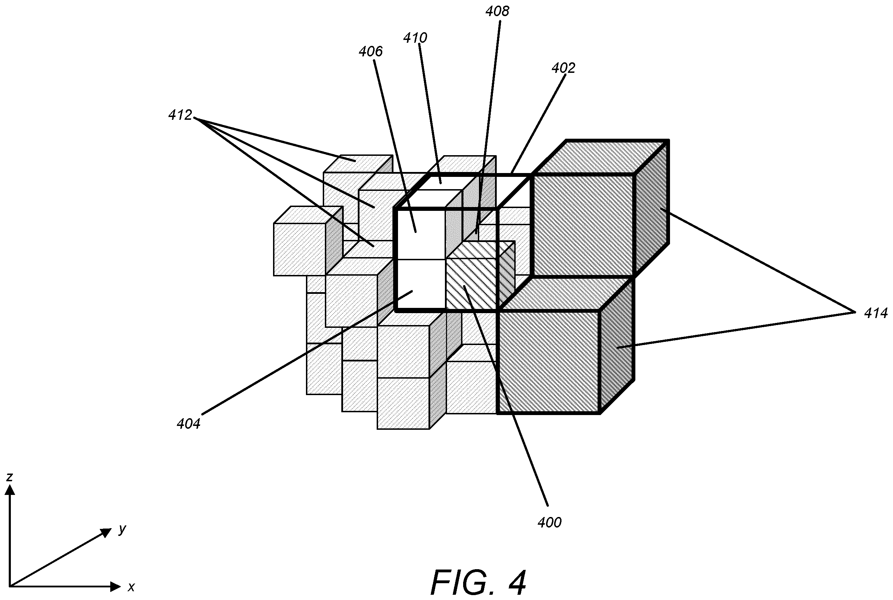

FIG. 4 shows an example neighborhood of cuboids for entropy coding the occupancy of a child cuboid. More specifically, FIG. 4 shows an example neighborhood of cuboids with already-coded occupancy bits. The neighborhood of cuboids with already-coded occupancy bits may be used to entropy code the occupancy bit of a current child cuboid 400. The neighborhood of cuboids with already-coded occupancy bits may be determined, for example, based on the scanning order of an occupancy tree representing the geometry of the cuboids in FIG. 4 as discussed herein. The neighborhood of cuboids, of a current child cuboid, may include one or more of: a cuboid adjacent to the current child cuboid, a cuboid sharing a vertex with the current child cuboid, a cuboid sharing an edge with the current child cuboid, a cuboid sharing a face with the current child cuboid, a parent cuboid adjacent to the current child cuboid, a parent cuboid sharing a vertex with the current child cuboid, a parent cuboid sharing an edge with the current child cuboid, a parent cuboid sharing a face with the current child cuboid, a parent cuboid adjacent to the current parent cuboid, a parent cuboid sharing a vertex with the current parent cuboid, a parent cuboid sharing an edge with the current parent cuboid, a parent cuboid sharing a face with the current parent cuboid, etc. As shown in FIG. 4, current child cuboid 400 may belong to a current parent cuboid 402. Following the scanning order of the occupancy words and occupancy bits of nodes of the occupancy tree, the occupancy bits of four child cuboids 404, 406, 408, and 410, belonging to the same current parent cuboid 402, may have already been coded. The occupancy bit of child cuboids 412 of preceding parent cuboids may have already been coded. The occupancy bits of parent cuboids 414, for which the occupancy bits of child cuboids have not already been coded, may have already been coded. The already-coded occupancy bits of cuboids 404, 406, 408, 410, 412, and 414 may be used to code the occupancy bit of the current child cuboid 400.

The number (e.g., quantity) of possible occupancy configurations (e.g., sets of one or more occupancy words and/or occupancy bits) for a neighborhood of a current child cuboid may be $2^N$, where N is the number (e.g., quantity) of cuboids in the neighborhood of the current child cuboid with already-coded occupancy bits. The neighborhood of the current child cuboid may comprise several dozens of cuboids. The neighborhood of the current child cuboid (e.g., several dozens of cuboids) may comprise 26 adjacent parent cuboids sharing a face, an, edge, and/or a vertex with the parent cuboid of the current child cuboid and also several adjacent child cuboids having occupancy bits already coded sharing a face, an edge, or a vertex with the current child cuboid. The occupancy configuration for a neighborhood of the current child cuboid may have billions of possible occupancy configurations, even limited to a subset of the adjacent cuboids, making its direct use impractical. An encoder and/or decoder may use the occupancy configuration for a neighborhood of the current child cuboid to select the context (e.g., a probability model), among a set of contexts, of a binary entropy coder (e.g., binary arithmetic coder) that may code the occupancy bit of the current child cuboid. The context-based binary entropy coding may be similar to the Context Adaptive Binary Arithmetic Coder (CABAC) used in MPEG-H Part 2 (also known as High Efficiency Video Coding (HEVC)).

An encoder and/or a decoder may use several methods to reduce the occupancy configurations for a neighborhood of a current child cuboid being coded to a practical number (e.g., quantity) of reduced occupancy configurations. The $2^6$ or 64 occupancy configurations of the six adjacent parent cuboids sharing a face with the parent cuboid of the current child cuboid may be reduced to 9 occupancy configurations. The occupancy configurations may be reduced by using geometry invariance. An occupancy score for the current child cuboid may be obtained from the $2^{26}$ occupancy configurations of the 26 adjacent parent cuboids. The score may be further reduced into a ternary occupancy prediction (e.g., "predicted occupied," "unsure", or "predicted unoccupied") by using score thresholds. The number (e.g., quantity) of occupied adjacent child cuboids and the number (e.g., quantity) of unoccupied adjacent child cuboids may be used instead of the individual occupancies of these child cuboids.

An encoder and/or a decoder using/employing one or more of the methods described herein may reduce the number (e.g., quantity) of possible occupancy configurations for a neighborhood of a current child cuboid to a more manageable number (e.g., a few thousands). It has been observed that instead of associating a reduced number (e.g., quantity) of contexts (e.g., probability models) directly to the reduced occupancy configurations, another mechanism may be used, namely Optimal Binary Coders with Update on the Fly (OBUF). An encoder and/or a decoder may implement OBUF to limit the number (e.g., quantity) of contexts to a lower number (e.g., 32 contexts).

OBUF may use a limited number (e.g., 32) of contexts (e.g., probability models). The number (e.g., quantity) of contexts in OBUF may be a fixed number (e.g., fixed quantity). The contexts used by OBUF may be ordered, referred to by a context index (e.g., a context index in the range of 0 to 31), and associated from a lowest virtual probability to a highest virtual probability to code a "1". A Look-Up Table (LUT) of context indices may be initialized at the beginning of a point cloud coding process. For example, the LUT may initially point to a context (e.g., with a context index 15) with the median virtual probability to code a "1" for all input. The LUT may initially point to a context with the median virtual probability to code a "1", among the limited number (e.g., quantity) of contexts, for all input. This LUT may take an occupancy configuration for a neighborhood of current child cuboid as input and output the context index associated with the occupancy configuration. The LUT may have as many entries as reduced occupancy configurations (e.g., around a few thousand entries). The coding of the occupancy bit of a current child cuboid may comprise steps including determining the reduced occupancy configuration of the current child node, obtaining a context index by using the reduced occupancy configuration as an entry to the LUT, coding the occupancy bit of the current child cuboid by using the context pointed to (or indicated) by the context index, and updating the LUT entry corresponding to the reduced occupancy configuration, for example, based on the value of the coded occupancy bit of the current child cuboid. The LUT entry may be decreased to a lower context index value, for example, if a binary "0" (e.g., indicating the current child cuboid is unoccupied) is coded. The LUT entry may be increased to a higher context index value, for example, if a binary "1" (e.g., indicating the current child cuboid is occupied) is coded. The update process of the context index may be, for example, based on a theoretical model of optimal distribution for virtual probabilities associated with the limited number (e.g., quantity) of contexts. This virtual probability may be fixed by a model and may be different from the internal probability of the context that may evolve, for example, if the coding of bits of data occurs. The evolution of the internal context may follow a well-known process similar to the process in CABAC.

An encoder and/or a decoder may implement a "dynamic OBUF" scheme. The "dynamic OBUF" scheme may enable an encoder and/or a decoder to handle a much larger number (e.g., quantity) of occupancy configurations for a neighborhood of a current child cuboid, for example, than general OBUF. The use of a larger number (e.g., quantity) of occupancy configurations for a neighborhood of a current child cuboid may lead to improved compression capabilities, and may maintain complexity within reasonable bounds. By using an occupancy tree compressed by OBUF, an encoder and/or a decoder may reach a lossless compression performance as good as 1 bit per point (bpp) for coding the geometry of dense point clouds. An encoder and/or a decoder may implement dynamic OBUF to potentially further reduce the bit rate by more than 25% to 0.7 bpp.

OBUF may not take as input a large variety of reduced occupancy configurations for a neighborhood of a current child cuboid, and may potentially cause a loss of useful correlation. With OBUF, the size of the LUT of context indices may be increased to handle more various occupancy configurations for a neighborhood of a current child cuboid as input. Due to such increase, statistics may be diluted, and compression performance may be worsened. For example, if the LUT has millions of entries and the point cloud has a hundred thousand points, then most of the entries may be never visited (e.g., looked up, accessed, etc.). Many entries may be visited only a few times and their associated context index may not be updated enough times to reflect any meaningful correlation between the occupancy configuration value and the probability of occupancy of the current child cuboid. Dynamic OBUF may be implemented to mitigate the dilution of statistics due to the increase of the number (e.g., quantity) of occupancy configurations for a neighborhood of a current child cuboid. This mitigation may be performed by a "dynamic reduction" of occupancy configurations in dynamic OBUF.

Dynamic OBUF may add an extra step of reduction of occupancy configurations for a neighborhood of a current child cuboid, for example, before using the LUT of context indices. This step may be called a dynamic reduction because it evolves, for example, based on the progress of the coding of the point cloud or, more precisely, based on already visited (e.g., looked up in the LUT) occupancy configurations.

As discussed herein, many possible occupancy configurations for a neighborhood of a current child cuboid may be potentially involved but only a subset may be visited if the coding of a point cloud occurs. This subset may characterize the type of the point cloud. For example, most of the visited occupancy configurations may exhibit occupied adjacent cuboids of a current child cuboid, for example, if AR or VR dense point clouds are being coded. On the other hand, most of the visited occupancy configurations may exhibit only a few occupied adjacent cuboids of a current child cuboid, for example, if sensor-acquired sparse point clouds are being coded. The role of the dynamic reduction may be to obtain a more precise correlation, for example, based on the most visited occupancy configuration while putting aside (e.g., reducing aggressively) other occupancy configurations that are much less visited. The dynamic reduction may be updated on-the-fly. The dynamic reduction may be updated on-the-fly, for example, after each visit (e.g., a lookup in the LUT) of an occupancy configuration, for example, if the coding of occupancy data occurs.

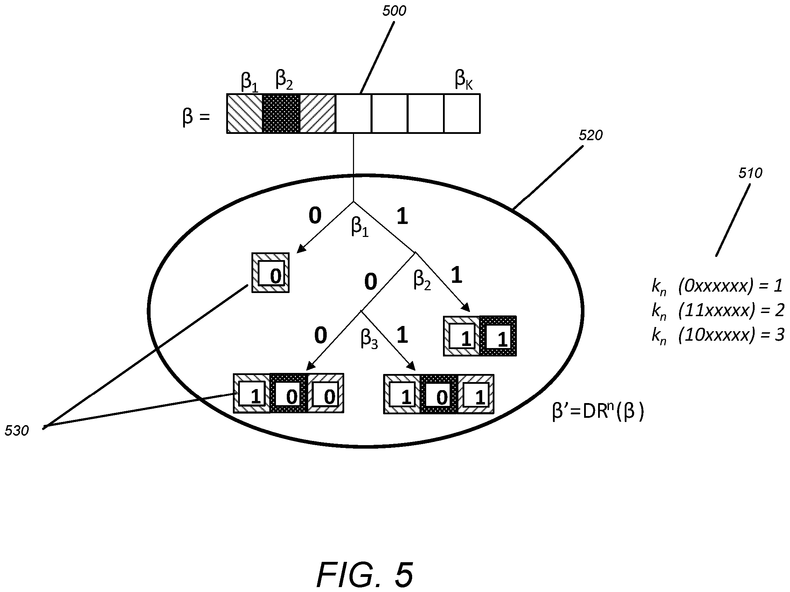

FIG. 5 shows an example of a dynamic reduction function DR that may be used in dynamic OBUF. The dynamic reduction function DR may be obtained by masking bits $\beta_j$ of occupancy configurations 500

$$\beta = \beta_1 \ldots \beta_K$$

made of K bits. The size of the mask may decrease, for example, if occupancy configurations are visited (e.g., looked up in the LUT) a certain number (e.g., quantity) of times. The initial dynamic reduction function $DR^0$ may mask all bits for all occupancy configurations such that it is a constant function $DR^0(\beta) = 0$ for all occupancy configurations $\beta$. The dynamic reduction function may evolve from a function $DR^n$ to an updated function $DR^{n+1}$. The dynamic reduction function may evolve from a function $DR^n$ to an updated function $DR^{n+1}$, for example, after each coding of an occupancy bit. The function may be defined by

$$\beta' = DR^n(\beta) = \beta_1 \ldots \beta_{k_n(\beta)}$$

where $k_n(\beta)$ 510 is the number (e.g., quantity) of non-masked bits. The initialization of $DR^0$ may correspond to $k_0(\beta)=0$, and the natural evolution of the reduction function toward finer statistics may lead to an increasing number (e.g., quantity) of non-masked bits $k_n(\beta) \leq k_{n+1}(\beta)$. The dynamic reduction function may be entirely determined by the values of $k_n$ for all occupancy configurations $\beta$.

The visits (e.g., instances of a lookup in the LUT) to occupancy configurations may be tracked by a variable $NV(\beta')$ for all dynamically reduced occupancy configurations $\beta' = DR^n(\beta)$. The corresponding number (e.g., quantity) of visits $NV(\beta^{V'})$ may be increased by one, for example, after each instance of coding of an occupancy bit based on an occupancy configuration $\beta^V$. If this number (e.g., quantity) of visits $NV(\beta^{V'})$ is greater than a threshold thv,

$$NV(\beta^{V'}) > th_V$$

then the number (e.g., quantity) of unmasked bits $k_n(\beta)$ may be increased by one for all occupancy configurations $\beta$ being dynamically reduced to $\beta^{V'}$. This corresponds to replacing the dynamically reduced occupancy configuration $\beta^{V'}$ by the two new dynamically reduced occupancy configurations $\beta^{0'}$ and $\beta^{1'}$ defined by

$$\beta^{0'} = \beta^{V'}0 = \beta^V_1 \ldots \beta^V_{k_n(\beta)}0 \ \text{ and } \ \beta^{1'} = \beta^{V'}1 = \beta^V_1 \ldots \beta^V_{k_n(\beta)}1.$$

In other words, the number (e.g., quantity) of unmasked bits has been increased by one $k_{n+1}(\beta) = k_n(\beta) + 1$ for all occupancy configurations $\beta$ such that $DR^n(\beta) = \beta^{V'}$. The number (e.g., quantity) of visits of the two new dynamically reduced occupancy configurations may be initialized to zero

$$NV(\beta^{0'}) = NV(\beta^{1'}) = 0. \hspace{2cm} (I)$$

At the start of the coding, the initial number (e.g., quantity) of visits for the initial dynamic reduction function $DR^0$ may be set to

$$NV(DR^0(\beta)) = NV(0) = 0,$$

and the evolution of NV on dynamically reduced occupancy configurations may be entirely defined.

The corresponding LUT entry LUT[$\beta^{V'}$] may be replaced by the two new entries LUT[$\beta^{0'}$] and LUT[$\beta^{1'}$] that are initialized by the coder index associated with $\beta^{V'}$. The corresponding LUT entry LUT[$\beta^{V'}$] may be replaced by the two new entries LUT[$\beta^{0'}$] and LUT[$\beta^{1'}$] that are initialized by the coder index associated with $\beta^{V'}$, for example, if a dynamically reduced occupancy configuration $\beta^{V'}$ is replaced by the two new dynamically reduced occupancy configurations $\beta^{0'}$ and $\beta^{1'}$,

$$LUT[\beta^{0'}] = LUT[\beta^{1'}] = LUT[\beta^{V'}], \qquad (II)$$

and then evolve separately. The evolution of the LUT of coder indices on dynamically reduced occupancy configurations may be entirely defined.

The reduction function $DR^n$ may be modeled by a series of growing binary trees $T^n$ 520 whose leaf nodes 530 are the reduced occupancy configurations $\beta' = DR^n(\beta)$. The initial tree may be the single root node associated with $0 = DR^0(\beta)$. The replacement of the dynamically reduced to $\beta^{V'}$ by $\beta^{0'}$ and $\beta^{1'}$ may correspond to growing the tree $T''$ from the leaf node associated with $\beta^{V'}$, for example, by attaching to it two new nodes associated with $\beta^{0'}$ and $\beta^{1'}$. The tree $T^{n+1}$ may be obtained by this growth. The number (e.g., quantity) of visits NV and the LUT of context indices may be defined on the leaf nodes and evolve with the growth of the tree through equations (I) and (II).

The practical implementation of dynamic OBUF may be made by the storage of the array NV[$\beta'$] and the LUT[$\beta'$] of context indices, as well as the trees $T^n$ 520. An alternative to the storage of the trees may be to store the array $k_n[\beta]$ 510 of the number (e.g., quantity) of non-masked bits.

A limitation for implementing dynamic OBUF may be its memory footprint. In some applications, a few million occupancy configurations may be practically handled, leading to about 20 bits $\beta_i$ constituting an entry configuration $\beta$ to the reduction function DR. Each bit $\beta_i$ may correspond to the occupancy status of a neighboring cuboid of a current child cuboid or a set of neighboring cuboids of a current child cuboid.

Higher (e.g., more significant) bits $\beta_i$ (e.g., $\beta_0$, $\beta_1$, etc.) may be the first bits to be unmasked. Higher (e.g., more significant) bits $\beta_i$ (e.g., $\beta_0$, $\beta_1$, etc.) may be the first bits to be unmasked, for example, during the evolution of the dynamic reduction function DR. The order of neighbor-based information put in the bits $\beta_i$ may impact the compression performance. Neighboring information may be ordered from higher (e.g., highest) priority to lower priority and put in this order into the bits $\beta_i$, from higher to lower weight. The priority may be, from the most important to the least important, occupancy of sets of adjacent neighboring child cuboids, then occupancy of adjacent neighboring child cuboids, then occupancy of adjacent neighboring parent cuboids, then occupancy of non-adjacent neighboring child nodes, and finally occupancy of non-adjacent neighboring parent nodes. Adjacent nodes sharing a face with the current child node may also have higher priority than adjacent nodes sharing an edge (but not sharing a face) with the current child node. Adjacent nodes sharing an edge with the current child node may have higher priority than adjacent nodes sharing only a vertex with the current child node.

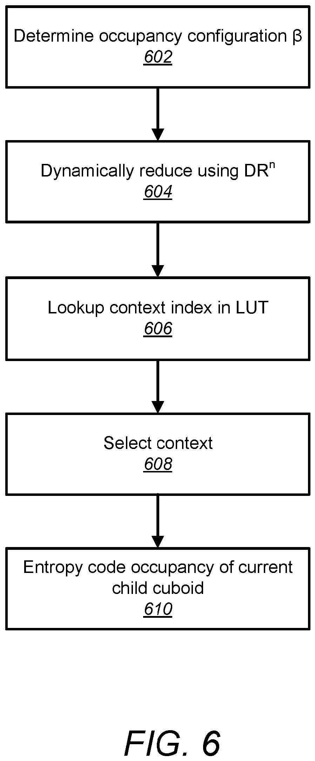

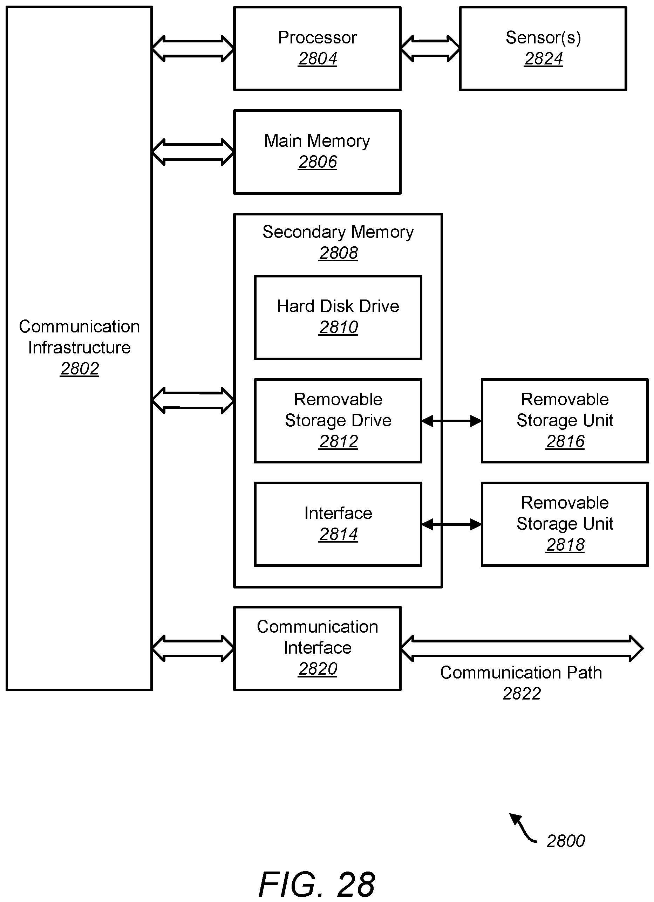

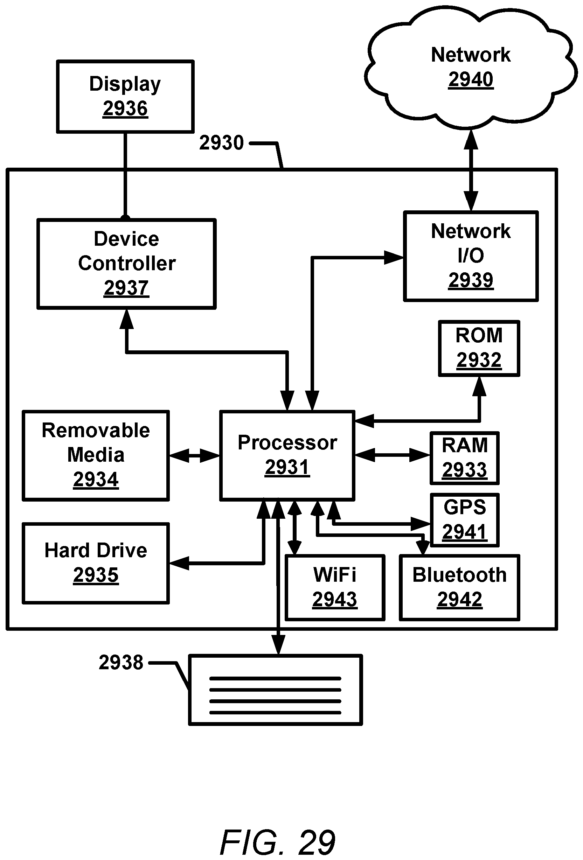

FIG. 6 shows an example method for coding occupancy of a cuboid using dynamic OBUF. More specifically, FIG. 6 shows an example method for coding occupancy bit of a current child cuboid using dynamic OBUF. One or more steps of FIG. 6 may be performed by an encoder and/or a decoder (e.g., the encoder 114 and/or decoder 120 in FIG. 1). All or portions of the flowchart may be implemented by a coder (e.g., the encoder 114 and/or decoder 120 in FIG. 1), an example computer system 2800 in FIG. 28, and/or an example computing device 2930 in FIG. 29.

At step 602, an occupancy configuration (e.g., occupancy configuration $\beta$) of the current child cuboid may be determined. The occupancy configuration (e.g., occupancy configuration $\beta$) of the current child cuboid may be determined, for example, based on occupancy bits of already-coded cuboids in a neighborhood of the current child cuboid. At step 604, the occupancy configuration (e.g., occupancy configuration $\beta$) may be dynamically reduced. The occupancy configuration may be dynamically reduced, for example, using a dynamic reduction function $DR^n$. For example, the occupancy configuration $\beta$ may be dynamically reduced into a reduced occupancy configuration $\beta' = DR^n(\beta)$. At step 606, context index may be looked up, for example, in a look-up table (LUT). For example, the encoder and/or decoder may look up context index LUT[$\beta'$] in the LUT of the dynamic OBUF. At step 608, context (e.g., probability model) may be selected. For example, the context (e.g., probability model) pointed to by the context index may be selected. At step 610, occupancy of the current child cuboid may be entropy coded. For example, the occupancy bit of the current child cuboid may be entropy coded (e.g., arithmetic coded), for example, based on the context. The occupancy bit of the current child cuboid may be coded based on the occupancy bits of the already-coded cuboids neighboring the current child cuboid.

Although not shown in FIG. 6, the encoder and/or decoder may update the reduction function and/or update the context index. For example, the encoder and/or decoder may update the reduction function $DR^n$ into $DR^{n+1}$ and/or update the context index LUT[$\beta'$], for example, based on the occupancy bit of the current child cuboid. The method of FIG. 6 may be repeated for additional or all child cuboids of parent cuboids corresponding to nodes of the occupancy tree in a scan order, such as the scan order discussed herein with respect to FIG. 3.

In general, the occupancy tree is a lossless compression technique. The occupancy tree may be adapted to provide lossy compression, for example, by modifying the point cloud on the encoder side (e.g., down-sampling, removing points, moving points, etc.). The performance of the lossy compression may be weak. The lossy compression may be a useful lossless compression technique for dense point clouds.

One approach to lossy compression for point cloud geometry may be to set the maximum depth of the occupancy tree to not reach the smallest volume size of one voxel but instead to stop at a bigger volume size (e.g., NxNxN cuboids (e.g., cubes), where N > 1). The geometry of the points belonging to each occupied leaf node associated with the bigger volumes may then be modeled. This approach may be particularly suited for dense and smooth point clouds that may be locally modeled by smooth functions such as planes or polynomials. The coding cost may become the cost of the occupancy tree plus the cost of the local model in each of the occupied leaf nodes.

A scheme for modeling the geometry of the points belonging to each occupied leaf node associated with a volume size larger than one voxel may use sets of triangles as local models. The scheme may be referred to as the "TriSoup" scheme. TriSoup is short for "Triangle Soup" because the connectivity between triangles may not be part of the models. An occupied leaf node of an occupancy tree that corresponds to a cuboid with a volume greater than one voxel may be referred to as a TriSoup node. An edge belonging to at least one cuboid corresponding to a TriSoup node may be referred to as a TriSoup edge. A TriSoup node may comprise a presence flag ($s_k$) for each TriSoup edge of its corresponding occupied cuboid. A presence flag ($s_k$) of a TriSoup edge may indicate whether a TriSoup vertex ($V_k$) is present or not on the TriSoup edge. At most one TriSoup vertex ($V_k$) may be present on a TriSoup edge. For each vertex ($V_k$) present on a TriSoup edge of an occupied cuboid, the TriSoup node corresponding to the occupied cuboid may comprise a position ($p_k$) of the vertex ($V_k$) along the TriSoup edge.

In addition to the occupancy words of an occupancy tree, an encoder may entropy encode, for each TriSoup node of the occupancy tree, the TriSoup vertex presence flags and positions of each TriSoup edge belonging to TriSoup nodes of the occupancy tree. A decoder may similarly entropy decode the TriSoup vertex presence flags and positions of each TriSoup edge and vertex along a respective TriSoup edge belonging to a TriSoup node of the occupancy tree, in addition to the occupancy words of the occupancy tree.

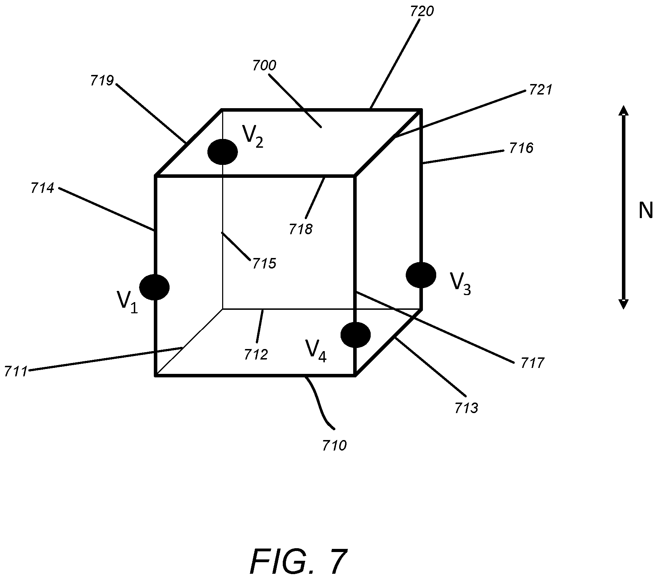

FIG. 7 shows an example of an occupied cuboid (e.g., cube) 700. More specifically, FIG. 7 shows an example of an occupied cuboid (e.g., cube) 700 of size NxNxN (where N > 1) that corresponds to a TriSoup node of an occupancy tree. An occupied cuboid 700 may comprise edges (e.g., TriSoup edges 710 - 721). The TriSoup node, corresponding to the occupied cuboid 700, may comprise a presence flag ($s_k$) for each edge (e.g., each TriSoup edge of the TriSoup edges 710-721). For example, the presence flag of a TriSoup edge 714 may indicate that a TriSoup vertex $V_1$ is present on the TriSoup edge 714. The presence flag of a TriSoup edge 715 may indicate that a TriSoup vertex $V_2$ is present on the TriSoup edge 715. The presence flag of a TriSoup edge 716 may indicate that a TriSoup vertex $V_3$ is present on the TriSoup edge 716. The presence flag of a TriSoup edge 717 may indicate that a TriSoup vertex $V_4$ is present on the TriSoup edge 717. The presence flags of the remaining TriSoup edges each may indicate that a TriSoup vertex is not present on their corresponding TriSoup edge. The TriSoup node, corresponding to the occupied cuboid 700, may comprise a position for each TriSoup vertex present along one of its TriSoup edges 710-721. More specifically, the TriSoup node, corresponding to the occupied cuboid 700, may comprise a position $p_1$ for TriSoup vertex $V_1$, a position $p_2$ for TriSoup vertex $V_2$, a position $p_3$ for TriSoup vertex $V_3$, and a position $p_4$ for TriSoup vertex $V_4$. The TriSoup vertices may be shared among TriSoup nodes along common TriSoup edge(s).

A presence flag ($s_k$) and, if the presence flag ($s_k$) may indicate the presence of a vertex, a position ($p_k$) of a current TriSoup edge may be entropy coded. The presence flag ($s_k$) and position ($p_k$) may be individually or collectively referred to as vertex information or TriSoup vertex information. A presence flag ($s_k$) and, if the presence flag ($s_k$) indicates the presence of a vertex, a position ($p_k$) of a current TriSoup edge may be entropy coded, for example, based on already-coded presence flags and positions, of present TriSoup vertices, of TriSoup edges that neighbor the current TriSoup edge. A presence flag ($s_k$) and, if the presence flag ($s_k$) may indicate the presence of a vertex, a position ($p_k$) of a current TriSoup edge (e.g., indicating a position of the vertex the edge is along) may be additionally or alternatively entropy coded. The presence flag ($s_k$) and the position ($p_k$) of a current TriSoup edge may be additionally or alternatively entropy coded, for example, based on occupancies of cuboids that neighbor the current TriSoup edge. Similar to the entropy coding of the occupancy bits of the occupancy tree, a configuration $\beta_{TS}$ for a neighborhood (also referred to as a neighborhood configuration $\beta_{TS}$) of a current TriSoup edge may be obtained and dynamically reduced into a reduced configuration $\beta_{TS}' = DR^n(\beta_{TS})$, for example, by using a dynamic OBUF scheme for TriSoup. A context index LUT[$\beta_{TS}'$] may be obtained from the OBUF LUT. At least a part of the vertex information of the current TriSoup edge may be entropy coded using the context (e.g., probability model) pointed to by the context index.

The TriSoup vertex position ($p_k$) (if present) along its TriSoup edge may be binarized. The TriSoup vertex position ($p_k$) (if present) along its TriSoup edge may be binarized, for example, to use a binary entropy coder to entropy code at least part of the vertex information of the current TriSoup edge. A number (e.g., quantity) of bits $N_b$ may be set for the quantization of the TriSoup vertex position ($p_k$) along the TriSoup edge of length N. The TriSoup edge of length N may be uniformly divided into $2^{N_b}$ quantization intervals. By doing so, the TriSoup vertex position ($p_k$) may be represented by $N_b$

bits ($p_k^j$, j=1, ..., $N_b$) that may be individually coded by the dynamic OBUF scheme as well as the bit corresponding to the presence flag ($s_k$). The neighborhood configuration $\beta_{TS}$, the OBUF reduction function $DR^n$, and the context index may depend on the nature, characteristic, and/or property of the coded bit (e.g., a presence flag ($s_k$), a highest position bit ($p_{k1}$), a second highest position bit ($p_{k2}$), etc.) of the coded bit (e.g., presence flag ($s_k$), highest position bit ($p_k^1$), second highest position bit ($p_k^2$), etc.). There may practically be several dynamic OBUF schemes, each dedicated to a specific bit of information (e.g., presence flag ($s_k$) or position bit ($p_k^j$)) of the vertex information.

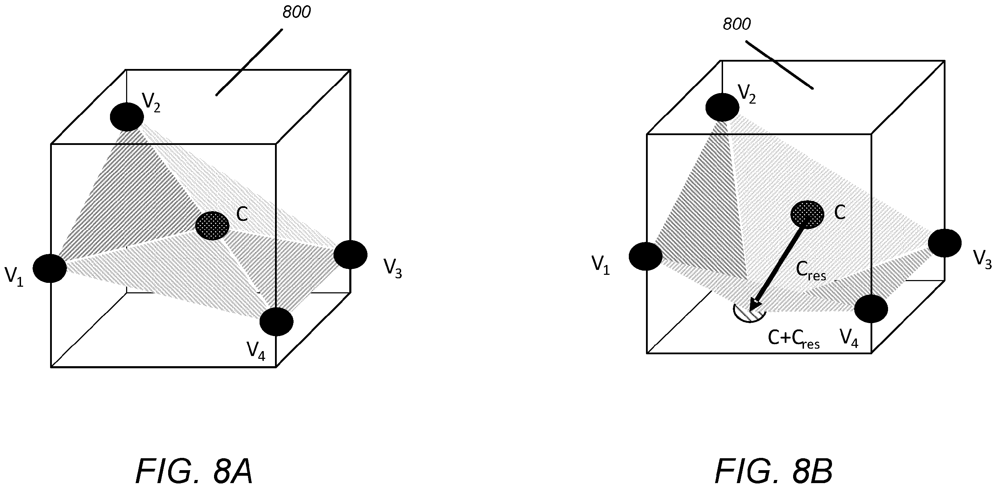

FIG. 8A shows an example cuboid 800 (e.g., a cube) corresponding to a TriSoup node. A cuboid 800 may correspond to a TriSoup node with a number K of TriSoup vertices $V_k$. Within cuboid 800, TriSoup triangles may be constructed from the TriSoup vertices $V_k$. TriSoup triangles may be constructed from the TriSoup vertices $V_k$, for example, if at least three (K≥3) TriSoup vertices are present on the TriSoup edges of cuboid 800. For example, with respect to FIG. 8A, four TriSoup vertices may be present and TriSoup triangles may be constructed. The TriSoup triangles may be constructed around the centroid vertex C defined as the mean of the TriSoup vertices $V_k$. A dominant direction may be determined, then vertices $V_k$ may be ordered by turning around this direction, and the following K TriSoup triangles (listed as triples of vertices) may be constructed: $V_1V_2C$, $V_2V_3C$, ..., $V_KV_1C$. The dominant direction may be chosen among the three directions respectively parallel to the axes of the 3D space to increase or maximize the 2D surface of the triangles, for example, if the triangles are projected along the dominant direction. By doing so, the dominant direction may be somewhat perpendicular to a local surface defined by the points of the point cloud belonging to the TriSoup node.

FIG. 8B shows an example refinement to the TriSoup model. The TriSoup model may be refined by coding a centroid residual value. A centroid residual value $C_{res}$ may be coded into the bitstream. A centroid residual value $C_{res}$ may be coded into the bitstream, for example, to use $C+C_{res}$ instead of C as a pivoting vertex for the triangles. By using $C+C_{res}$ as the pivoting vertex for the triangles, the vertex $C+C_{res}$ may be closer to the points of the point cloud than the centroid C, the reconstruction error may be lowered, leading to lower distortion at the cost of a small increase in bitrate needed for coding $C_{res}$.

The reconstruction of a decoded point cloud from a set of TriSoup triangles may be referred to as "voxelization" and may be performed, for example, by ray tracing or rasterization, for each triangle individually before duplicate voxels from the voxelized triangles are removed.

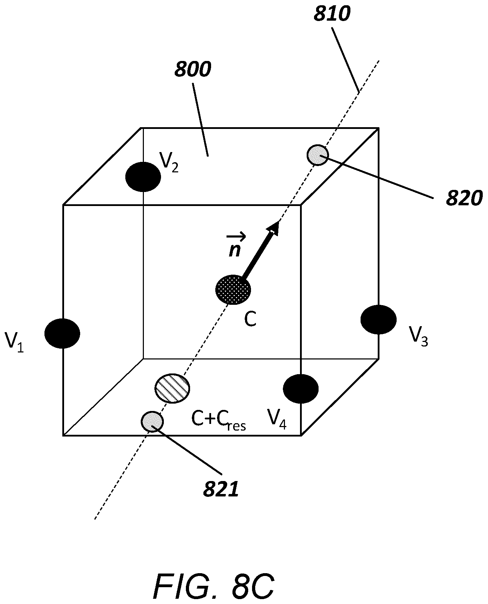

FIG. 8C shows an example of coding a centroid residual value. More specifically, FIG. 8C shows a more detailed example of coding a centroid residual value $C_{res}$ in/from the bitstream such that an adjusted centroid $C+C_{res}$ is used instead of centroid C for generating TriSoup triangles of a cuboid 800 (corresponding to a TriSoup node) corresponding to a portion of a point cloud. The TriSoup triangles may be generated, for example, based on the adjusted centroid $C+C_{res}$ and adjacent pairs of vertices of an ordering of the vertices $V_1$-$V_4$, determined as described herein with respect to FIG. 8A. As described herein, the TriSoup triangles of the cuboid 800 may be voxelized at the decoder, for example, to generate voxels representing (or modeling) the portion, of the point cloud, corresponding to the cuboid 800. A unit vector $\vec{n}$ (e.g., also referred to as a normalized vector) may be determined as a normalized mean vector of normal vectors to the triangles ($V_1V_2C$, $V_2V_3C$, ..., $V_KV_1C$) constructed by the centroid C and pairs of the vertices of the cuboid 800 by pivoting around the centroid C (e.g., as described herein with respect to FIG. 8A). The unit vector $\vec{n}$ may be determined as the normalized vector, for example, based on a mean of cross-products representing areas of the triangles $(\overrightarrow{V_1C} \times \overrightarrow{V_2C} + \overrightarrow{V_2C} \times \overrightarrow{V_3C} + \cdots + \overrightarrow{V_KC} \times \overrightarrow{V_1C})/K$. For example, the unit vector $\vec{n}$ may be determined by dividing the mean vector (n) by the norm (or length) of the mean vector (e.g., $\vec{n}$ = n / ‖n‖).

A value resulting from each cross product is equal to an area of a parallelogram formed by the two vectors in the cross product. The value may be representative of an area of a triangle formed by the two vectors, for example, because the area of the triangle is equal to half of the value. The vector $\vec{n}$ may be indicative of the direction normal to a local surface representative of the portion of the point cloud, for example, because the vector $\vec{n}$ may indicate a direction of the triangles (e.g., TriSoup triangles) representing (e.g., modeling) the portion of the point cloud. A one-component residual $\alpha_{res}$ along the line (C, $\vec{n}$) 810 may be coded instead of a 3D residual, for example, to maximize the effect of the centroid residual and/or minimize its coding cost.

$$C_{res} = \alpha_{res}\vec{n}$$

The residual value $\alpha_{res}$ may be determined, for example, by the encoder as the intersection between the current point cloud and the line (C, $\vec{n}$), which may be along the same direction of the normalized vector $\vec{n}$. For example, a set of points, of the portion of the point cloud, closest (e.g., within a threshold distance, a threshold quantity/number of points) to the line may be determined by the encoder. The set of points may be projected on the line and the residual value $\alpha_{res}$ may be determined by the encoder as the mean component along the line of the projected points. The mean may be determined, for example, as a weighted mean whose weights may depend on the distance of the set of points from the line. For example, a point from the set closer to the line may have a higher weight than another point from the set farther from the line.

The residual value $\alpha_{res}$ may be quantized. For example, the residual value $\alpha_{res}$ may be quantized by a uniform quantization function having quantization step similar to the quantization precision of the TriSoup vertices $V_k$. By quantizing the residual value $\alpha_{res}$ by a uniform quantization function having quantization step similar to the quantization precision of the TriSoup vertices $V_k$, the quantization error may be maintained to be uniform over all vertices $V_k$ and $C+C_{res}$ such that the local surface may be uniformly approximated.

The residual value $\alpha_{res}$ may be binarized and/or entropy coded into the bitstream, for example, by using a unary-based coding scheme. The residual value $\alpha_{res}$ may be coded, for example, using a set of flags. For example, a flag $f_0$ may be coded to indicate if the residual value $\alpha_{res}$ is equal to zero. If the flag $f_0$ indicates the residual value $\alpha_{res}$ is zero, no further syntax elements may be needed. If the flag $f_0$ indicates the residual value $\alpha_{res}$ is not zero, a sign bit indicating a sign may be coded and/or the residual magnitude $|\alpha_{res}|-1$ may be coded using an entropy code. For example, the residual magnitude may be coded using a unary coding scheme that may code successive flags $f_i$ ($i \geq 1$) indicating if the residual value magnitude $|\alpha_{res}|$ is equal to 'i'. A coder (e.g., a binary entropy coder) may binarize the residual value $\alpha_{res}$ into the flags $f_i$ ($i \geq 0$) and code (e.g., entropy code) the binarized residual value as well as the sign bit.

Compression of the residual value $\alpha_{res}$ may be improved, for example, by determining bounds as shown in FIG. 8C. As described herein with respect to FIG. 8C, the line $(C, \vec{n})$ 810 may intersect the current cuboid 1100 (corresponding to a TriSoup node) at two bounding points, 820 and 821, and the encoder may impose that the adjusted centroid vertex $C+C_{res}$ may be located between the two bounding points 820 and 821. These bounding points, 820 and 821, may bound the residual value $\alpha_{res}$ (which may be quantized), ensuring it belongs to an integral interval [m, M], where $m \leq 0 \leq M$. By doing so, some bits of the binarized residual value $\alpha_{res}$ may be inferred. For example, if m=M=0, residual value $\alpha_{res}$ is necessarily equal to zero. For example, if m=0<M, the sign bit is necessarily positive. If the residual value $\alpha_{res}$ is not equal to zero and its sign is known, its magnitude $|\alpha_{res}|$ may be determined to be bounded by either lml or M such that the magnitude may be coded by a truncated unary coding scheme that may infer the value of the last of successive flags $f_i$ ($i \geq 1$).

The binary entropy coder that may be used to code the binarized residual value $\alpha_{res}$ may be a context-adaptive binary arithmetic coder (CABAC) such that the probability model (also referred to as a context or a specific entropy coder) that may be used to code at least one bit (e.g., $f_i$ or sign bit) of the binarized residual value $\alpha_{res}$ may be updated depending on precedingly coded bits. The probability model of the binary entropy coder may be determined, for example, based on contextual information such as the values of the bounds m and M, the position of vertices $V_k$, and/or the size of the cuboid. The selection of the probability model (i.e., also referred equivalently as an entropy coder or context) may be performed by a dynamic OBUF scheme with the contextual information described herein as inputs.

The reconstruction of a decoded point cloud from a set of TriSoup triangles may be referred to as "voxelization" and may be performed, for example, by ray tracing or rasterization, for each triangle individually before duplicate voxels from the voxelized triangles are removed.

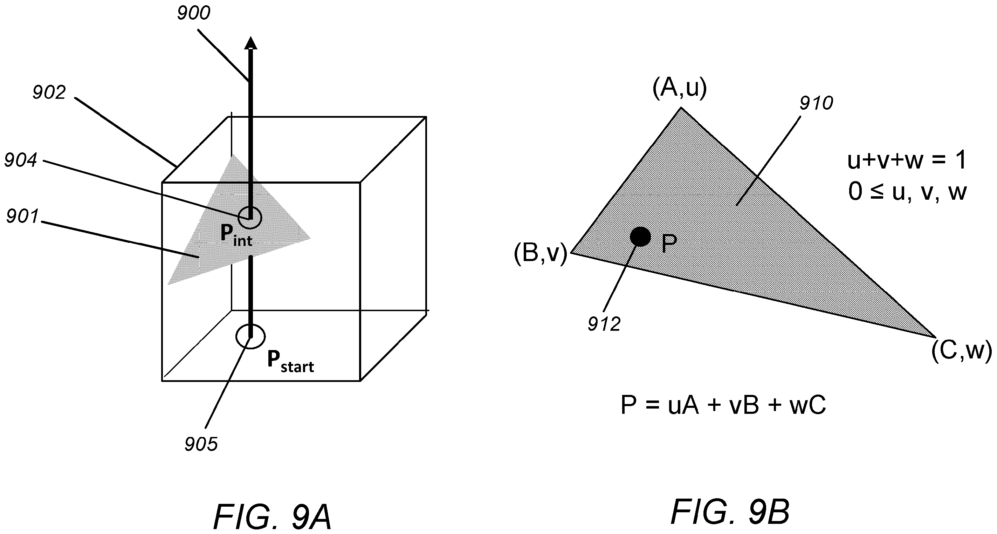

FIG. 9A shows an example of voxelization using ray tracing. Ray-triangle intersection algorithms, such as the Möller-Trumbore algorithm, may take advantage of launching rays, for example, to determine whether rays intersect with TriSoup triangles and if so, at what points of the TriSoup triangles. Rays may be launched from integral coordinates that correspond to the centers of voxels. As shown in FIG. 9A, rays, for example, ray 900 may be launched substantially parallel to one of the three coordinate axes of the 3D space, starting from integral coordinates (sometimes referred to as integer coordinates) such as an origin point 905 (shown as origin or starting point $P_{start}$ in FIG. 9A).

An intersection point 904 (shown as $P_{int}$ in FIG. 9A), if any, between ray 900 and a TriSoup triangle 901 belonging to a cube 902, corresponding to a TriSoup node, may be rounded (or, e.g., quantized) to obtain a decoded point corresponding to a voxel. A ray, for example, launched substantially parallel to a coordinate axis in 3D space, may intersect a TriSoup triangle. The ray may intersect the TriSoup triangle, for example, if and only if the projection, along the ray direction, of the center of a voxel belongs to the TriSoup triangle. In other words, the ray may be determined to intersect the TriSoup triangle if the point of intersection corresponds to the center of the voxel. This intersection may be determined, for example, by using a ray-triangle intersection algorithm (e.g., tracing or ray casting technique) such as the Möller-Trumbore algorithm to generate voxels representing the triangle.

Ray tracing techniques such as the Möller-Trumbore algorithm is based on generating, with respect to a triangle, barycentric coordinates of points of intersection between rays and a plane of the triangle. Then, points of the triangle may be determined from the barycentric coordinates.

FIG. 9B shows an example of voxelization using barycentric coordinates. More particularly, FIG. 9B shows an example of voxelization using barycentric coordinates (u, v, w) of a point 912 (P) relative to a TriSoup triangle 910 having vertices labeled A, B, and C in the 3D space. Point 912 may be determined as an intersection between a ray and a plane of TriSoup triangle 910 (e.g., containing or passing through the three vertices A, B, and C of TriSoup triangle 910). The ray may be launched, for example, substantially parallel to one of the three coordinate axes in 3D space. In some examples, this intersection point 912 may be uniquely represented as a sum of the three vertices of TriSoup triangle 910:

$$P = uA + vB + wC$$

under the condition u + v + w = 1. Therefore, any point P of the plane (containing TriSoup triangle 910) has unique coordinates (u,v,w) in the barycentric coordinate system. A point with barycentric coordinates (u,v,w) may include an ordered triple of numbers u, v, and w. A point with barycentric coordinates (u,v,w) that sum to 1 (e.g., u + v + w = 1) may be referred to as homogeneous barycentric coordinates and/or normalized barycentric coordinates. The barycentric coordinates of the intersection point with respect to TriSoup triangle 910 may be determined using algorithms, for example, the Möller-Trumbore algorithm.

By converting points with Cartesian coordinates in 3D space to homogeneous barycentric coordinates, the three vertices A, B, C of TriSoup triangle 910 may comprise respective barycentric coordinates A(1,0,0), B(0,1,0) and C(0,0,1). The convex hull (e.g., the TriSoup triangle 910) of the three vertices A, B, and C may be equal to the set of all points such that the barycentric coordinates u, v, and w is each greater than or equal to zero:

$$0 \leq u, v, w$$

Therefore, the intersection point may be determined to belong to TriSoup triangle 910, for example, based on the intersection point having barycentric coordinates with an ordered triple of values that are each greater than or equal to zero. Relatedly, if at least one of barycentric coordinates (i.e., one of u, v, or w) is negative or less than 0, then the intersection point may be determined to not belong to TriSoup triangle because it will be on the plane, but not on an edge or within the TriSoup triangle. A point determined to belong to TriSoup triangle 910 may be the ray intersecting TriSoup triangle 910 (e.g., within or at an edge of TriSoup triangle 910).

In video compression, performance may be improved by using inter frame prediction. Bitrates for compressing interframes may be one to two orders of magnitude lower than bitrates of intra frames, which may not use inter frame prediction. Point cloud data may behave differently from, for example, 2D video data. The 3D geometry, for point cloud data, may be coded by 3D point positions. Each point position of the 3D point positions may be associated with attributes (e.g., colors). Geometry and/or attributes may change between frames. Different 3D point positions and/or attributes associated with the corresponding 3D point positions may be coded, for example, for each frame. 2D video data may obtained, for example, by the projection of the 3D geometry and/or attributes onto a 2D plane having a fixed geometry (e.g., a camera sensor). For video coding, the attributes may be coded but the geometry may not be coded (and may not need to be coded). It may be expected that inter frame prediction between 3D point clouds may provide improved compression capability as compared to intra frame prediction (e.g., intra frame prediction alone) within a point cloud, even if, for example, 2D-projected attributes is expected to temporally have a higher correlation than the underlying 3D geometry. The octree may benefit from inter frame prediction and/or geometry compression gains. The general framework of inter frame prediction for 3D point clouds may be similar to the one of video compression.

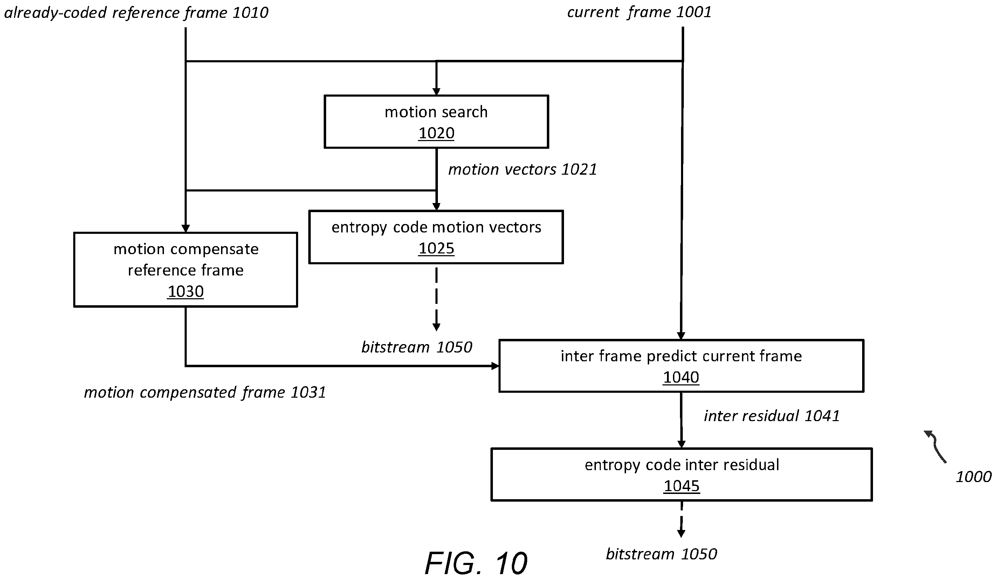

FIG. 10 shows an example encoding method 1000. One or more steps of FIG. 10 may be performed by an encoder (e.g., the encoder 114). Encoding method 1000 may use inter frame prediction between different point cloud frames. A current frame 1001 (e.g., an image or a point cloud) may be coded relative to an already-coded reference frame 1010 (e.g., an image or a point cloud). At step 1020, a motion search may be performed from the already-coded reference frame 1010 toward the current frame 1001 to determine motion vectors 1021 that represents a motion flow between the two frames 1010 and 1001. In video compression, motion vectors may be 2-component (or 2D) vectors representing the motion from reference blocks of pixels to current blocks of pixels. In point cloud compression, motion vectors may be 3-component (or 3D) vectors representing the motion from reference sets of 3D points (e.g., in a reference point cloud) to current sets of 3D points (e.g., in a current point cloud). At step 1025, motion vectors 1021 may be entropy coded into bitstream 1050. At step 1030, the reference frame 1010 may be motion compensated to determine a motion compensated frame 1031. Motion compensation may involve moving the pixels of the reference image based on the 2D (motion vectors, and/or moving the points of the reference point cloud based on the 3D motion vectors. The determined motion compensated frame may be "closer" to the current frame than the reference frame, for example, the color difference (or point distance) between the motion compensated frame 1031 and the current frame 1001 may be, on average, smaller than the color difference (or point distance) between the reference frame 1010 and the current frame 1001. At step 1040, inter frame prediction may be performed to determine inter residuals 1041. At step 1045, the inter residuals 1045 may be entropy coded into bitstream 1050. The inter residuals may carry more compressible information than the current frame that may or may not have undergone an intra prediction process. Therefore, the entropy coding performed at step 1045 may be more efficient for determining a bitstream 1050 with reduced size, compared to a bitstream determined by coding the current frame 1001 that has not benefited from inter frame prediction.

In video coding, inter residuals may be constructed as the difference of colors, pixel per pixel, between a current block of pixels belonging to the current frame (e.g., image) and a co-located compensated block of pixels belonging to the motion compensated frame (e.g., image). Inter residuals may be arrays of color differences that have typically small magnitude and may be efficiently compressed.

In point cloud compression, there may not be a "difference" between two sets of points, because there may not be a one-to-one mapping of the two sets of points. The concept of an inter residual may not be straightforwardly used (e.g., generalized) with respect to point clouds. For prediction of an octree representing a point cloud, the concept of inter residual may be replaced by conditional entropy coding, where conditional information for performing conditional entropy coding may be constructed based on a motion compensated point cloud. This may be extended to the framework of dynamic OBUF.

As described herein, the occupancy of a current volume (e.g., the current volume associated with a current node of an octree) may be provided by a quantity of occupancy bits, e.g., 8 occupancy bits. A current occupancy bit of the octree may be coded by an entropy coder selected by the output of a dynamic OBUF LUT of coder indices that takes a neighborhood configuration $\beta$ as input. The neighborhood configuration $\beta$ may be constructed based on already-coded occupancy bits. The already-coded occupancy bits may be associated with neighboring volumes (e.g., associated with neighboring nodes of the current node). The construction of the neighborhood configuration $\beta$ may be extended using inter frame information. An inter predictor occupancy bit may be indicated by (e.g., defined for) a current occupancy bit as a bit representative of the presence of at least one point of a motion compensated point cloud within the current volume. A strong correlation between the current occupancy bit and the inter predictor occupancy bit may exist, for example, if that motion compensation is efficient. This may be because the current and motion compensated point clouds are likely close to each other. Using the inter predictor occupancy bit as a bit of the neighborhood configuration $\beta$ may lead to better compression performance of the octree (e.g., dividing the size of the octree bitstream by a factor two).

The motion field between octrees may comprise 3D motion vectors associated with 3D prediction units (PU). The PUs may have volumes that may include at least a part of one or several volumes (e.g., cuboids) associated with nodes of the octree. The motion compensation may be performed volume per volume (e.g., cuboid per cuboid) based on the 3D motion vectors for determining a motion compensated point cloud in one or more current volumes. The inter predictor occupancy bit may be determined, for example, based on the presence of at least one point of this motion compensated point cloud.

The TriSoup scheme may benefit from the motion compensated frame determined while the octree coding is performed, for example, before the TriSoup coding. Predictors of the presence and/or position of TriSoup vertices may be determined based on the motion compensated point cloud. The predictors may be determined, for example, based on the intersection of the compensated point cloud with the edges of the TriSoup nodes. Predictors of the centroid residual values may be determined.

The entropy coding of TriSoup vertices and/or centroid residual values may be performed, for example, by using these inter predictors. Inter predictors may constitute a part of a contextual information $\beta_{inter}$ input of a dynamic OBUF instance that codes a TriSoup syntax element. Alternatively or additionally, a context may be selected based on inter predictors. The selected context may be used by an entropy coder (e.g., CABAC) to determine a probability for arithmetically entropy coding of a TriSoup syntax element.

Attributes associated with points of a point cloud may be coded, for example, after the coding of the underlying geometry (e.g., the positions of the points in the 3D space) has been performed. If the geometry coding is a lossless coding (e.g., by using an octree scheme), the encoder may have direct access to the attribute values associated with the coded points. The coded geometry may differ from the original geometry, for example, if the geometry coding is a lossy coding (e.g., by using a TriSoup scheme). The original attributes may be mapped by the encoder from the original geometry to the coded geometry for determining mapped attributes on the coded geometry.

As described herein, attributes may indicate a property of a point's visual appearance (e.g., texture, color, material, transparency, reflectance, time stamp, or velocity). For attributes that are colors, the attribute mapping performed by the encoder may be referred to as a recoloring process. This may be because the colors of the original geometry may be used to color (e.g., recolor) the coded geometry (e.g., a reconstructed geometry).

The coded geometry associated with the mapped attributes for the coded geometry may comprise a point cloud representative of the original point cloud in geometry and attributes. There may be more than one (e.g., two) attribute coding schemes that may be used and/or selected for coding attributes associated with the coded geometry. The attribute coding schemes may comprise, for example, the prediction with lifting transform ("pred-lift") scheme, and/or the region-adaptive hierarchical transform ("RAHT") scheme. The attribute coding schemes may be used, for example, in G-PCC.

The pred-lift scheme first may perform a decomposition of the coded geometry into Levels of Details (also known as LoD). For a set (S) of points (e.g., all points) of the coded geometry, the set may be decomposed into disjoint subsets S' such that $S = \bigcup_{i=0}^{L-1} S^i$. L levels of details may be defined as a tower of point cloud geometries

$$S^0 \subset S^0 \cup S^1 \subset \cdots \subset S^0 \cup ... \cup S^{L-1} = S$$

where the set $S^0$ of points may be the first (e.g., coarsest) level of details, and the set $S^0 \cup ... \cup S^{L-1}$ of points may be the $L^{th}$ (e.g., finest) level of details, for example, if the set may be decomposed into disjoint subsets S' such that $S = \bigcup_{i=0}^{L-1} S^i$.

Attributes $a_j$ may be associated with the points $s_j$ of the set S of all points of the coded geometry. Considering subsets $a^0, ..., a^{L-1}$ of attributes, attributes $a^i_j$ of a subset $a^i$ may be associated with the points $s^i_j$ of the subset $S^i$. The $i^{th}$ level

of details ($S^0$ U ... U $S^{i-1}$) may have associated attributes comprising the concatenation of attributes of subsets $a^0$, ..., $a^{i-1}$. The set 'a' of attributes (e.g., all attributes) may be partitioned into subsets $a^0$, ..., $a^{L-1}$.

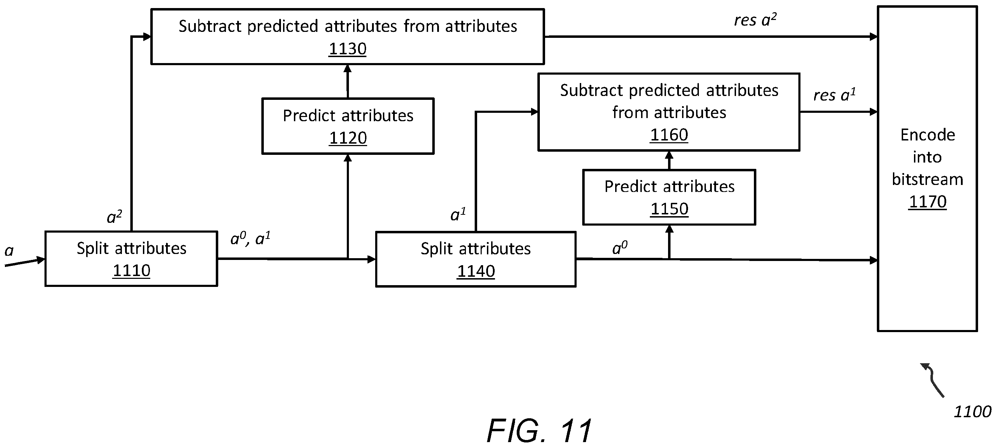

FIGs. 11, 12, 13, and 14 show examples for coding (e.g., encoding or decoding) point cloud attributes. The coding may be based on intra transform schemes such as a prediction transform scheme or a pred-lift scheme. The prediction transform scheme may be a variation of pred-lift scheme without update operations. The intra transform schemes may be examples of wavelet transforms that may convert (e.g., transform) attribute values into wavelet coefficients, which may be more efficiently compressed than the original attribute values. The wavelet coefficients may represent values of residual attributes, which may be smaller and more efficiently compressed than the values of the original attributes. The residual attributes may be referred to as and/or comprise wavelet coefficients (or transform/transformed coefficients). The wavelet coefficients may result from application of the prediction transform scheme and/or pred-lift scheme.

As described herein, the prediction transform scheme and/or pred-lift scheme may operate using prediction for and/or between levels of details of attributes. At the encoder, attributes at a higher (e.g., finer) level of detail may be predicted based on attributes at a lower (e.g., coarser) level of detail. Each level of detail starting from the highest level may be successively predicted, for example, based on lower level(s) of detail. The decoder may perform inverse operations such that attributes at a lower level of detail may be predicted and/or reconstructed, for example, based on residual attributes of higher level(s) of detail. Each level of detail starting from the lowest level may be successively predicted and reconstructed, for example, based on higher level(s) of detail. Although the examples shown in FIGS. 11-14 show three levels of details (LoDs), it is appreciated that a different number of LoDs may be used, for example, by extending (e.g., iteratively) the decomposition scheme.

FIG. 11 shows an example method for encoding point cloud attributes. The encoding may be based on a prediction transform scheme. One or more steps of FIG. 11 may be performed by an encoder (e.g., the encoder 114 in FIG. 1).

A set 'a' of attributes may be coded, for example, using prediction for and between one or more (e.g., three) levels of details, from a highest (e.g., first predicted) level of details (e.g., associated with highest frequencies such as res $a^2$) to a lowest (e.g., third) level of details (e.g., associated with lowest frequencies such as $a^0$). At step 1110, an encoder may split a set 'a' of attributes into a first set of attributes comprising the attributes of the subset $a^2$ and a second set of attributes comprising the attributes of the two subsets $a^0$ and $a^1$. At step 1120, the encoder may determine predictive values of the attributes of the first set of attributes ($a^2$) from the attributes of the second set of attributes ($a^0$ and $a^1$). At step 1130, the encoder may determine first residual values 'res $a^2$'. The encoder may determine first residual values 'res $a^2$', for example, by subtracting the predictive values from the attributes of the first set of attributes ($a^2$). At step 1170, the encoder may encode the first residual values 'res $a^2$' into the bitstream. The operations at steps 1120-1130 may be iteratively used for (e.g., applied to) each successively lower (e.g., coarser) LoD.

At step 1140, the encoder may split the second set of attributes ($a^0$ and $a^1$) into a third set of attributes and a fourth set of attributes. The third set of attributes may comprise the attributes of the subsets $a^1$. The fourth set of attributes may comprise the attributes of the subset $a^0$. At step 1150, the encoder may determine predictive values of the attributes of the third set of attributes ($a^1$) from the attributes of the fourth set of attributes ($a^0$). At step 1160, the encoder may determine second residual values 'res $a^1$'. The encoder may determine second residual values 'res $a^1$', for example, by subtracting predictive values from the attributes of the third set ($a^1$). At step 1170, the encoder may encode the second residual values 'res $a^1$' into the bitstream. The encoder may encode the attributes of the fourth set of attributes ($a^0$) into the bitstream.

The bitstream may comprise data representative of first residual values 'res $a^2$', second residual values 'res $a^1$', and/or the attributes of the subset $a^0$ (e.g., the fourth set of attributes). At step 1170, the residual values may be entropy coded. The encoder may encode the attributes of the subset $a^0$ into the bitstream. Additionally or alternatively, the encoder may perform intra prediction of a current attribute $a^0_j$ of the subset $a^0$ to be coded. The encoder may perform intra prediction of a current attribute $a^0_j$ of the subset $a^0$ to be coded, for example, based on already-coded attributes of the subset $a^0$. This may improve the compression efficiency of the attributes of the subset $a^0$.

The encoder may quantize the attributes of the subset $a^0$, the first residual value 'res $a^2$', and/or the second residual value 'res $a^1$', for example, if lossy attribute coding is allowed. The encoder may encode (e.g., entropy encode), into the bitstream, the attributes of the subset $a^0$ (or the quantized attributes of the subset $a^0$), the first residual value 'res $a^2$' (or the quantized first residual values 'res $a^2$'), and/or the second residual value 'res $a^1$' (or the quantized second residual value 'res $a^1$').

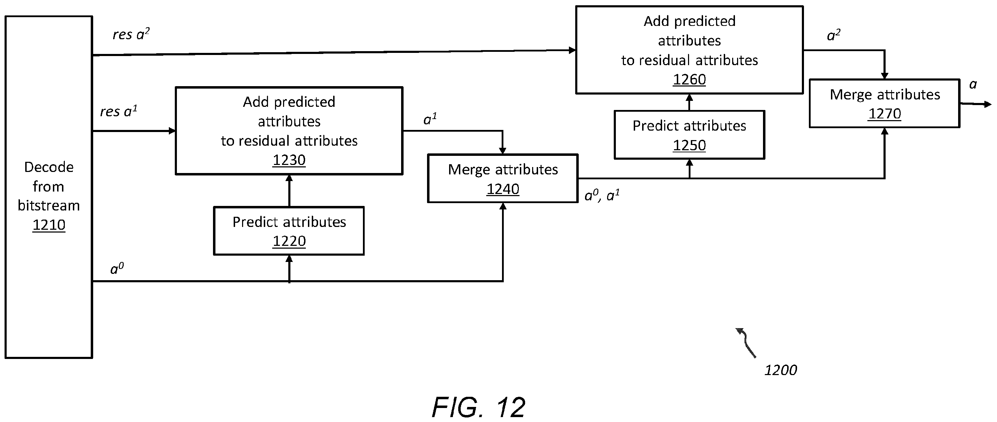

FIG. 12 shows an example method for decoding point cloud attributes. The decoding may be based on a prediction transform scheme. One or more steps of FIG. 12 may be performed by a decoder (e.g., the decoder 120 in FIG. 1). A set 'a' of attributes may be decoded. The set of 'a' attributes may be encoded, for example, as described herein with respect to FIG. 11. The decoding may use prediction between one or more (e.g., three) levels of details, from a lowest (e.g., third) level of details to a highest (e.g., first) level of details (e.g., in reverse order of the encoder described herein with respect to FIG. 11).

At step 1210, the decoder may decode the first residual values 'res $a^2$', the second residual values 'res $a^1$', and/or attributes of a fourth set of attributes ($a^0$) from the bitstream. The decoder may use (e.g., apply) dequantization (e.g., for lossy compression). At step 1220, the decoder may determine predictive values of the attributes of a third set of attributes ($a^1$) from the decoded attributes of the fourth set of attributes ($a^0$). The decoder may determine the predictive values, for example, in a way similar to that described with respect to step 1150 of FIG. 11. At step 1230, the decoder may determine decoded attributes of the third set of attributes ($a^1$), for example, by adding the predictive values to the decoded first residual values 'res $a^1$'. The operations at steps 1120-1230 may be iteratively used for (e.g., applied to) each successively higher (e.g., finer) LoD.

At step 1240, the decoder may determine a second set of attributes ($a^0$ and $a^1$). The decoder may determine a second set of attributes ($a^0$ and $a^1$), for example, by merging the third set of attributes ($a^1$) and the fourth set of attributes ($a^0$). Step 1240 may be an inverse of step 1140. At step 1250, the decoder may determine predictive values of the attributes of a first set of attributes ($a^2$) from the attributes of the second set of attributes ($a^0$ and $a^1$). The decoder may determine predictive values in a way similar to that described with respect to step 1120. At step 1260, the decoder may determine decoded attributes of the first set of attributes ($a^2$), for example, by adding the predictive values to the decoded second residual values 'res $a^2$'. At step 1270, the decoder may determine the set 'a' of decoded attributes for the coded geometry S (e.g., the whole coded geometry S), for example, by merging the first set of attributes ($a^2$) and the second set of attributes ($a^0$ and $a^1$). Step 1270 may be an inverse of step 1110.

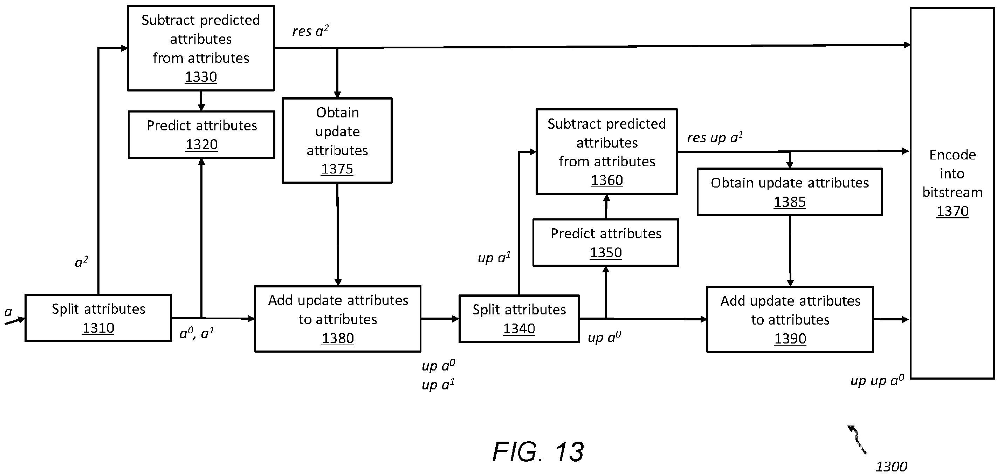

FIG. 13 shows an example method for encoding point cloud attributes. The encoding may be based on a pred-lift transform scheme with prediction and update. One or more steps of FIG. 13 may be performed by an encoder (e.g., the encoder 114 in FIG. 1). A set 'a' of attributes may be encoded using prediction between one or more (e.g., three) levels of details, from a highest (e.g., first) level of details (e.g., associated with highest frequencies such as res $a^2$) to a lowest (e.g., third) level of details (e.g., associated with lowest frequencies such as up up $a^0$).

At step 1310, an encoder may split a set 'a' of attributes into a first set of attributes comprising the attributes of the subset $a^2$ and a second set of attributes comprising the attributes of the two subsets $a^0$ and $a^1$. Step 1310 may be performed similar to that described herein with respect to step 1110 of FIG. 11. At step 1320, the encoder may determine predictive values of the attributes of the first set of attributes ($a^2$) from the attributes of the second set of attributes ($a^0$ and $a^1$). Step 1320 may be performed similar to that described herein with respect to step 1120. At step 1330, the encoder may determine first residual values 'res $a^2$', for example, by subtracting predictive values from the attributes of the first set of attributes ($a^2$). Step 1320 may be performed similar to that described herein with respect to step 1130. At step 1370, the encoder may encode the first residual values 'res $a^2$' into the bitstream. Step 1370 may be performed similar to that described herein with respect to step 1170.

At step 1375, the encoder may determine update attribute values from the first residual values 'res $a^2$'. The encoder may determine an update attribute value, for example, based on a first residual value. The update attribute value may be determined as the first residual value multiplied by a scaling factor (e.g., ½, ¼, 1/8) that may be predetermined or signaled in the bitstream. At step 1380, the encoder may update attribute values 'up $a^0$' and 'up $a^1$' of the second set of attributes ($a^0$ and $a^1$) by adding the update attribute values to the attribute values of the second set of attributes ($a^0$ and $a^1$). The operations at steps 1320, 1330, 1375, and 1380 may be iteratively used for (e.g., applied to) each successively lower (e.g., coarser) LoD.

At step 1340, the encoder may split the second set of attributes ($a^0$ and $a^1$) into a third set of attributes and a fourth set of attributes. The third set of attributes may comprise the updated attribute values 'up $a^1$' of the subset $a^1$. The fourth set of attributes may comprise the updated attribute values 'up $a^0$' of the subset $a^0$. At step 1350, the encoder may determine predictive values of the updated attribute values 'up $a^1$' of the third set of attributes ($a^1$) from the updated attribute values 'up $a^0$' of the fourth set of attributes ($a^0$). At step 1360, the encoder may determine third residual values 'res up $a^1$', for example, by subtracting predictive values from the updated attribute values 'up $a^1$' of the third set of attributes ($a^1$). At step 1370, the encoder may encode the third residual values 'res up $a^1$' into the bitstream. At step 1385, the encoder may determine update attribute values from the third residual values 'res up $a^1$'. At step 1390, the encoder may determine further updated attribute values 'up up $a^0$' of the fourth set of attributes ($a^0$), for example, by adding the update attribute values to the updated attribute values 'up $a^0$' of the fourth set of attributes ($a^0$). At step 1370, the encoder may encode the further updated attribute values 'up up $a^0$' of the fourth set of attributes ($a^0$) into the bitstream.

The bitstream may comprise data representative of transformed attributes (e.g., data representative of the first residual values 'res $a^2$', third residual values 'res up $a^1$' and/or further updated attribute values 'up up $a^0$' of the fourth set of attributes). The encoder may encode the further updated attribute values 'up up $a^0$' of the fourth set of attributes into the bitstream. The encoder may perform intra prediction of a current further updated attribute values 'up up $a^0_j$' to be coded, for example, based on already-coded attributes of the fourth set of attributes. This may improve the compression efficiency of the further updated attribute values 'up up $a^0$' of the fourth set of attributes.

The encoder may quantize the further updated attribute values 'up up $a^0$' of the fourth set of attributes, the first residual value 'res $a^2$' and/or the third residual value 'res up $a^1$', for example, if lossy attribute coding is allowed. The encoder may entropy encode into the bitstream the further updated attribute values 'up up $a^0$' of the fourth set of attributes, the first residual value 'res $a^2$' (or the quantized first residual values 'res $a^2$'), and/or the third residual value 'res up $a^1$' (or the quantized third residual value 'res up $a^1$').

**EP 4 589 535 A1**

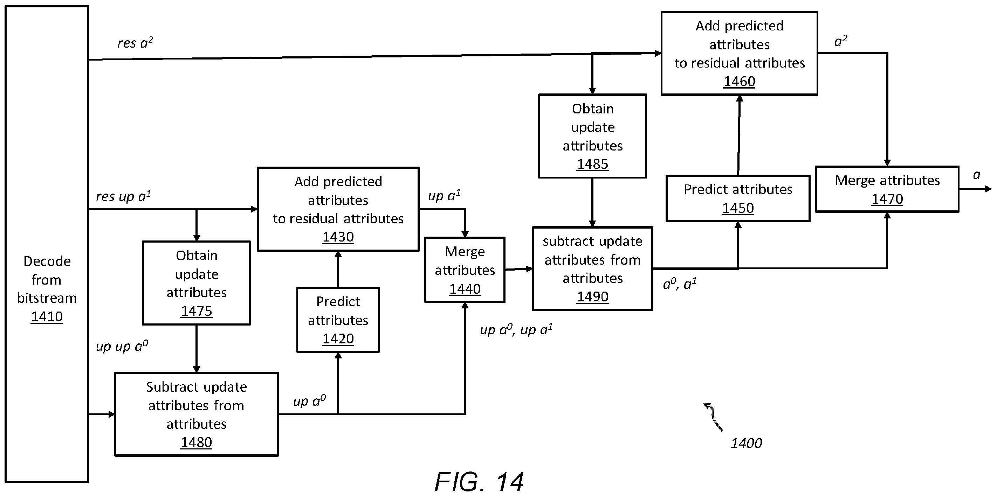

FIG. 14 shows an example method for decoding point cloud attributes. The decoding may be based on a pred-lift transform scheme with prediction and update. One or more steps of FIG. 14 may be performed by a decoder (e.g., the decoder 120 in FIG. 1). A set of 'a' attributes may be encoded as described herein with respect to Fig. 13. The set 'a' of attributes (e.g., encoded set 'a' of attributes) may be decoded. The decoding may use prediction between one or more (e.g., three) levels of details, from a lowest (e.g., third) level of details to a highest (e.g., first) level of details (in reverse order of the encoder described herein with respect to FIG. 13).

At step 1410, the decoder may decode the first residual values 'res $a^2$', the third residual values 'res up $a^1$', and/or further updated attribute values 'up up $a^0$' of a fourth set of attributes ($a^0$) from the bitstream. The decoder may use (e.g., apply) an optional dequantization for lossy compression. At step 1475, the decoder may determine update attribute values from the decoded third residual values 'res up $a^1$'. Step 1475 may be performed in a manner similar to that described herein with respect to step 1385. The decoder may determine an update attribute value based on the third residual values. The update attribute value may be determined as the third residual values multiplied by a scaling factor (e.g., ½, ¼, 1/8) that may be predetermined or signaled in the bitstream.

At step 1480, the decoder may determine updated attribute values 'up $a^0$' of the fourth set of attributes ($a^0$), for example, by subtracting the update attribute values from the decoded further updated attribute values 'up up $a^0$' of the fourth set of attributes ($a^0$). At step 1420, the decoder may determine predictive values of the updated attribute values 'up $a^1$' of a third set of attributes ($a^1$) from the updated attribute values 'up $a^0$' of the fourth set of attributes ($a^0$). Step 1420 may be performed in a similar manner as described herein with respect to step 1350. At step 1430, the decoder may determine updated attribute values 'up $a^1$' of the third set of attributes ($a^1$), for example, by adding the predictive values to the decoded third residual values 'res up $a^1$'. At step 1440, the decoder may determine a second set of attributes ($a^0$ and $a^1$), for example, by merging the third set of attributes ($a^1$) and the fourth set of attributes ($a^0$). Step 1440 may be an inverse of step 1340. The second set of attributes ($a^0$ and $a^1$) may comprise updated attribute values 'up $a^0$' and updated attribute values 'up $a^1$'. At step 1485, the decoder may determine update attribute values from the decoded first residual values 'res $a^2$'. Step 1485 may be performed in a manner similar to that as described herein with respect to step 1375. The operations at steps 1420, 1430, 1440, 1475, and 1480 may be iteratively used for (e.g., applied to) each successively higher (e.g., finer) LoD.

At step 1490, the decoder may determine attribute values '$a^0$' and attribute values '$a^1$' of the second set of attributes ($a^0$ and $a^1$), for example, by subtracting the update attribute values from the updated attribute values 'up $a^0$' and from updated attribute values 'up $a^1$' of the second set of attributes ($a^0$ and $a^1$). At step 1450, the decoder may determine predictive values of the attributes of a first set of attributes ($a^2$) from the attributes of the second set of attributes ($a^0$ and $a^1$). Step 1450 may be performed in a manner similar to that described herein with respect to step 1320. At step 1460, the decoder may determine decoded attributes of the first set of attributes ($a^2$), for example, by adding the predictive values to the decoded second residual values 'res $a^2$'. At step 1470, the decoder may determine the set 'a' of decoded attributes for the coded geometry S (e.g., the whole coded geometry), for example, by merging the first set of attributes ($a^2$) and the second set of attributes ($a^0$ and $a^1$). Step 1470 may be an inverse of step 1310.

Pred-lift schemes may be similar to the lifting scheme used for (e.g., applied to) wavelets in image coding. A pre-lift scheme may comprise update steps that are not in prediction transform scheme (e.g., in addition to the prediction steps in the prediction transform scheme). The update steps may provide better compression performance (e.g., in combination with the prediction steps). This may compact the energy in the lowest level of details, which may reduce distortion with lossy coding.

Attributes may be coded using the RAHT scheme. The RAHT scheme may be based on the iterative use of a two-point transform. In point cloud attribute coding, the two-point RAHT transform may be used for (e.g., applied to) two sets ($A_1$ and $A_2$) of attributes. Each of $A_1$ and $A_2$ may have respectively $w_1$ and $w_2$ number of attributes. Each of $A_1$ and $A_2$ may have respective associated coefficients $c_{A1}$ and $c_{A2}$. Each of $c_{A1}$ and $c_{A2}$ is representative of the sum of attribute values over the corresponding set divided by the square root of the number of attributes.

$$c_{Ai} = \frac{1}{\sqrt{w_i}} \sum_{a \in A_i} a. \qquad (w_i = \#A_i) \qquad (*)$$

The two-point RAHT transform may depend on the weights $w_1$ and $w_2$. The two-point RAHT transform may be defined by a 2x2 matrix as follows

$$\mathrm{RAHT}(w_1, w_2) = \frac{1}{\sqrt{w_1+w_2}} \begin{bmatrix} \sqrt{w_1} & \sqrt{w_2} \\ -\sqrt{w_2} & \sqrt{w_1} \end{bmatrix}.$$

Two new coefficients DC and AC may be determined, for example, if used for (e.g., applied to) the two coefficients $c_{A1}$ and $c_{A2}$.

$$\begin{bmatrix} DC \\ AC \end{bmatrix} = \text{RAHT}(w_1, w_2) \begin{bmatrix} c_{A1} \\ c_{A2} \end{bmatrix}$$

As described herein, the above property (*) on coefficients may hold for the DC coefficient.

$$DC = \frac{1}{\sqrt{w_1 + w_2}} \left( \sqrt{w_1} c_{A1} + \sqrt{w_2} c_{A2} \right) = \frac{1}{\sqrt{w_1 + w_2}} \left( \sum_{a \in A_1} a + \sum_{a \in A_2} a \right)$$

$$= \frac{1}{\sqrt{w_1 + w_2}} \sum_{a \in A_1 \cup A_2} a = c_{A1 \cup A2}$$

The two point RAHT transform may be iteratively used for (e.g., applied to) DC coefficients. This may be referred to as the RAHT iterative method. AC coefficients may not undergo further transformation, for example, after being determined. At the start of the RAHT iterative method, there may be as many initial sets $A_i$ of attributes as there are points in the coded geometry S. Each initial set $A_i$ of attributes may contain one attribute (w;=1).The coefficient $c_{Ai}$ may be equal to the value of the one attribute, and/or may fulfill the property (*). By induction, the property (*) may hold for subsequent DC coefficients (e.g., all subsequent DC coefficients) determined, for example, after iterative application of the two point RAHT transform.

At a particular stage of the RAHT iterative method, determined coefficients may be the union of a set of DC coefficients fulfilling the property (*) and a set of AC coefficients. The RAHT iterative method may continue until DC coefficients are depleted and only one DC coefficient may be left. The one DC coefficient may be equal to $C_A$ where A may be the set of attributes (e.g., all attributes) associated with the coded geometry S (e.g., the complete coded geometry S). The RAHT iterative method may follow an order among pairs of DC coefficients.

The two-point inverse RAHT transform may be defined by a 2x2 matrix as follows

$$\text{iRAHT}(w_1, w_2) = \frac{1}{\sqrt{w_1 + w_2}} \begin{bmatrix} \sqrt{w_1} & -\sqrt{w_2} \\ \sqrt{w_2} & \sqrt{w_1} \end{bmatrix}$$

The two-point inverse RAHT transform may be used with respect to (e.g., applied to) DC and AC coefficients for obtaining back the two coefficients $c_{A1}$ and $c_{A2}$.

$$\begin{bmatrix} c_{A1} \\ c_{A2} \end{bmatrix} = \text{iRAHT}(w_1, w_2) \begin{bmatrix} DC \\ AC \end{bmatrix}$$

The inverse iterative RAHT method may use (e.g., apply) the inverse two-point RAHT to DC and AC coefficient in reverse order relative to their obtention by the iterative RAHT method. At the end of the inverse iterative RAHT method, coefficients $c_{Ai}$ associated with the initial sets $A_i$ of attributes may be obtained. These coefficients $c_{Ai}$ may be equal to the values of the one attribute associated with the initial sets $A_i$.

For lossy RAHT compression of attributes, coefficients may be further compressed based on using (e.g., applying) a quantization to the DC and AC coefficients, for example, before encoding in the bitstream. The decoder may use (e.g., apply) a dequantization, for example, after decoding of the quantized DC and AC coefficients from the bitstream.

The RAHT iterative method may follow an octree as a specific iterative order, for example, in G-PCC. One or more (e.g., up to eight) DC coefficients, associated with one or more (e.g., up to eight) occupied child nodes of a parent node in the octree, may undergo a cascade of two-point RAHT transformations until one DC coefficient remains, together with the remaining (e.g., up to seven) AC coefficients. This one DC coefficient may be pushed at parent node level. The method may be repeated at upper octree depth, for example, until the root node is reached.

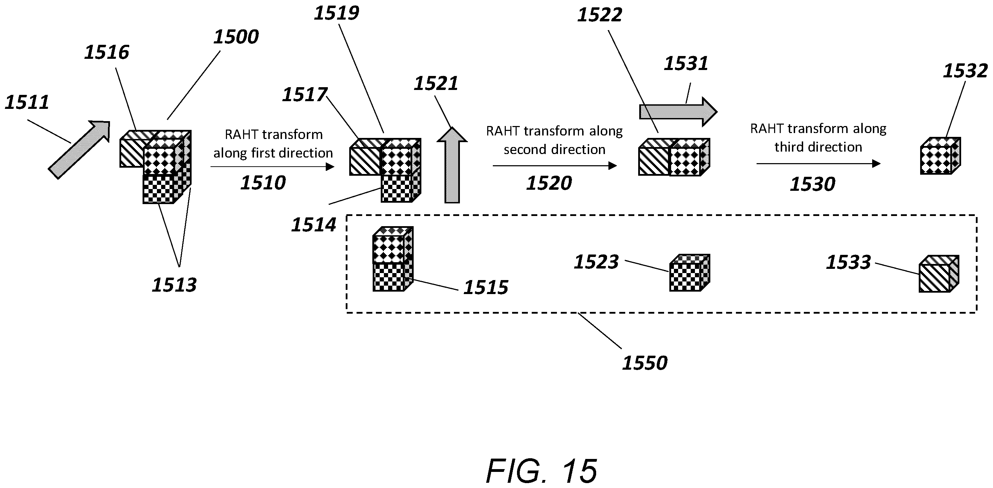

FIG. 15 shows an example RAHT transformation. The RAHT transformation may be applied on child nodes of an octree parent node along three successive directions. The parent node 1500 may have multiple (e.g., five) occupied child nodes each having a respective associated coefficient c; and weight w;. A first RAHT transformation 1510 may be performed along a first direction 1511. If there are two adjacent occupied child nodes 1513 along the first direction, the two adjacent occupied child nodes 1513 may undergo a two-point RAHT transform. A new DC coefficient 1514 and an AC coefficient 1515 may be determined and pushed to a set 1550 of AC coefficients. The node may be left as is and its DC coefficient may be kept 1517, for example, if there is only one occupied child node 1516 along the first direction. In this example, the child nodes may be collapsed along the first direction to determine a new set 1519 of nodes (e.g., a set of three nodes), with associated new DC coefficients, may be determined.

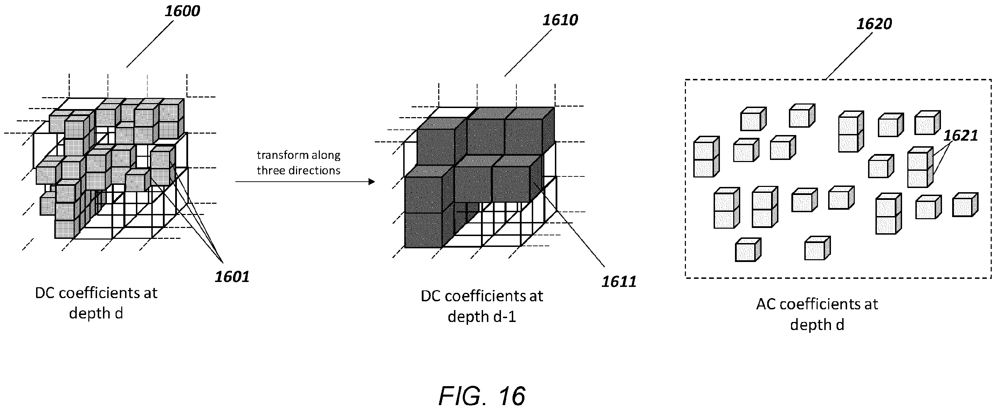

A second RAHT transformation 1520 may be performed, for example, after the first RAHT transformation. The second RAHT transformation may be along a second direction 1521. The second RAHT transformation may be performed similarly to the first RAHT transformation. The child nodes 1522 may be determined. The child nodes 1522 may have been collapsed along the first two directions 1511 and 1521. The AC coefficients 1523 may be pushed to the set 1550 of AC coefficients. A third RAHT transformation 1530 may be performed, for example, after the second RAHT transformation. The third RAHT transformation may be along a third direction 1531. The third RAHT transformation may be performed similarly to the first and/or second RAHT transformation. A (e.g., unique) child node 1532 may be determined. The child node 1532 may result from the collapse along all three directions. The AC coefficients 1533 may be pushed to the set 1550 of AC coefficients. The child node 1532 may have an associated DC coefficient that is pushed to the parent node (e.g., as shown for example in FIG. 16).

FIG. 16 shows an example RAHT transformation. The RAHT transformation may be used for (e.g., applied to) octree nodes (e.g., all octree nodes) at depth 'd' to determine DC coefficients at depth d-1 and AC coefficients. Occupied nodes 1600 of an octree may be at depth d. Occupied nodes 1600 may undergo a RAHT transformation along the three directions. DC coefficients for each node may be pushed up to the corresponding occupied parent nodes 1610 that belong to the octree at depth d-1. The three DC coefficients of the child nodes 1601 may, for example, undergo a RAHT transformation along the three directions. A unique DC coefficient associated with the parent node 1611 may be determined and two AC coefficients 1621 may be pushed to a set 1620 of AC coefficients. By performing this method for (e.g., all) occupied nodes 1600 of the octree at depth d, the DC coefficients associated with occupied nodes of the octree at depth d may be transformed into DC coefficients associated with occupied nodes 1610 of the octree at depth d-1 and a set 1620 of AC coefficients.

This bottom-up method may be repeated depth per depth, for example, until reaching the minimum depth (the root node). The result of the RAHT transformation over the octree (e.g., complete octree) may be a set of coefficients comprising a unique DC coefficient and a set of (many) AC coefficients. The RAHT transformation method may start from the highest depth where occupied child nodes correspond to a unique point (voxel) of the coded point cloud S. The unique point may be associated with a unique attribute among the set 'a' of attributes. The DC coefficient at highest depth may be set as the value of the unique attribute associated with each occupied node. The weights 'w' may be set to 1.

The inverse RAHT method on an octree may be a top-down method, from the root node down to the last depth made of leaf nodes that each contain one point of the point cloud, and one associated attribute. The DC coefficients of occupied nodes 1610 of the octree at depth d-1 may be inverse transformed into DC coefficients of occupied nodes 1600 of the octree at depth d, for example, by using (e.g., applying) the inverse two-point RAHT transform to the DC coefficient of each of the occupied node of the octree at depth d-1 and to the related AC coefficients from set 1620 of AC coefficients. The inverse two-point RAHT transform may be applied along the three directions, in reverse order to invert the node transformation as described herein with respect to FIG. 15. DC coefficients of the leaf nodes may be obtained, and the values of the DC coefficients may correspond to the attributes associated with the unique point of each of the leaf nodes. Like geometry coding of a point cloud, coding of attributes associated with the points of a current point cloud may benefit from inter frame prediction using a motion compensated point cloud. The motion compensated point cloud may inherit attributes from a reference point cloud that has been motion compensated. If, for example, motion occurs, points may keep their associated attributes. The motion compensated attributes (e.g., the attributes associated with the points of the motion compensated point cloud) may be used. This may improve compression of the attributes of the coded geometry of the current point cloud.

Inter pred-lift scheme may use motion compensated attributes or residual attributes based on differences between attributes and motion-compensated attributes. Using residual attributes may increase compression. Inter pred-lift scheme may be used in the pred-lift scheme, for example, by plugging the inter pred-lift scheme to the prediction steps 1120, 1150, 1220, 1250, 1320, 1350, 1420 and/or 1450. Attributes (or residual attributes) a' of the set S' of points may be predicted, for example, by attributes (or residual attributes) of the subsets $a^0, ..., a^{i-1}$ of the lower level of details $S^0 \cup ... \cup S^{i-1}$. Additionally or alternatively, attributes (or residual attributes) a' of the set S' of points may be predicted by motion compensated attributes (or residual attributes) of a set $a^{inter}$ associated with points of a motion compensated point cloud $S^{inter}$. The prediction step may be performed, for example, based on attributes (or residual attributes) of subsets $a^0, ..., a^{i-1}$ and of a set $a^{inter}$ of an augmented lower level of details $S^0 \cup ... \cup S^{i-1} \cup S^{inter}$.

The encoder and/or decoder may determine predictive values of the attributes (or residual attributes) of the fourth set of attributes (or residual attributes) (subset $a^0$ of the coarsest level of details $S^0$) from the motion compensated attributes (or residual attributes) of the set $a^{inter}$ associated with the points of a motion compensated point cloud $S^{inter}$. The encoder and/or decoder may subtract the predictive values from the attributes (or residual attributes) of the fourth set of attributes (or residual attributes) to determine residual values 'res $a^0$'. The encoder may encode the residual values 'res $a^0$' (or residual of residual attributes) into the bitstream instead of the attributes (or residual attributes) of the fourth set of attributes.

Inter RAHT scheme may use inter prediction for predicting the values of the DC and the AC coefficients determined by the RAHT iterative method. It may be beneficial to maintain a common attribute octree structure for both a current point cloud $S^{coded}$ to be coded and a motion compensated point cloud $S^{inter}$, for example, because the generation of DC and AC coefficients follows an octree. A common bounding box encompassing both point clouds may be determined. An octree partitioning may be performed, from a root node associated with the common bounding box, for both point clouds. This may lead to two octree partitioning that may be differently, for example, if the point clouds are not equal. The two octrees may have a common subtree starting from the root node. On the common subtree, occupied node topology may be the same, and/or a common set of DC and AC coefficients may be determined for both point clouds. The subset of DC and AC coefficients, associated with nodes of the common subtree and determined from the attributes of the current point cloud $S^{coded}$, may be predicted from DC and AC coefficients determined from the attributes of the motion compensated point cloud $S^{inter}$. The encoder and/or decoder may determine coefficient residual values, for example, by subtracting the DC and AC coefficients, determined from the attributes of the motion compensated point cloud $S^{inter}$, from the DC and AC coefficients associated with nodes of the common subtree and determined from the attributes of the current point cloud $S^{coded}$. The encoder may encode, into the bitstream, the coefficient residual values and/or may not encode, into the bitstream, the DC and AC coefficients associated with nodes of the common subtree and determined from the attributes of the current point cloud $S^{coded}$.

The DC and AC coefficients that are not associated with nodes of the common subtree may not be predicted, and/or may be coded directly in a similar way as performed without inter prediction. Additionally or alternatively, predicted DC coefficients of the current point cloud $S^{coded}$ may be determined at some depth (e.g., without predicting AC coefficients at the same depth). This may be based on the assumption that both the octree of the current point cloud $S^{coded}$ and the octree of the motion compensated point cloud $S^{inter}$ have a same occupancy of a node at this depth. The predicted DC coefficients may be determined from the corresponding co-located DC coefficients of the motion compensated point cloud $S^{inter}$. DC residual values may be determined, for example, by subtracting the predicted DC coefficients from the DC coefficients of the current point cloud $S^{coded}$. The RAHT transformation may go up in the octree starting from DC residual values replacing the DC coefficients of the coded current point cloud, for example, after the predicted DC coefficients be determined.

A RAHT scheme that does not use information from a reference frame different from the current frame may be called an intra RAHT scheme. Intra prediction may be performed between DC and AC coefficients of an intra RAHT scheme. Inter-depth prediction within a current frame may have been integrated into, for example, the RAHT scheme of GPCC. The inter-depth prediction mechanism may predict the DC coefficients associated with nodes of the octree at depth d, for example, by using interpolation of DC coefficients associated with nodes of the octree at lower depth d-1.

Targeting AR/VR use cases, for example, attribute related data constitute a large portion of the bitstream, and compressing these data efficiently may significantly improve storage and/or transmission of such point clouds, in the context of compressing colored dynamic dense point cloud. The geometry may be lossy compressed (e.g., using a TriSoup scheme) and the colors may be lossy compressed (e.g., using the RAHT transform or the pred-lift scheme). The RAHT transform, for many use cases for point cloud compression, may be selected because it has better performance than the pred-lift scheme.

Inter RAHT scheme based on the prediction of coefficients from a motion compensated colored point cloud has achieved gains of compression compared to the intra RAHT. These gains may drop significantly in regions where the motion is complex because the compensation is unable (e.g., unlikely) to provide a large enough common part to the two octree partitioning for, on one hand, the current point cloud $S^{coded}$ and, on the other hand, the motion compensated point cloud $S^{inter}$. Consequently, the number of DC and AC coefficients that may be inter predicted may be limited and the inter RAHT scheme may be not efficient. In general, the inter RAHT scheme may be very sensitive to geometry differences between the current point cloud $S^{coded}$ and the motion compensated point cloud $S^{inter}$ and does not allow for exploiting fully the attribute correlation between these two point clouds.

Compression of attributes of point clouds may be improved using a projection-base scheme. Projected attributes, using the projection-based scheme, may be determined, for example, based on projecting attributes of a reference point cloud frame for attributes onto a reconstructed geometry of a point cloud frame and to code (e.g., encode and/or decode) attributes associated with the decoded geometry of the point cloud frame using the attribute predictors determined from the projected attributes. Attributes of one or more points from the reference point cloud frame may be used to determine an attribute predictor (e.g., also referred to as a projected attribute) of an attribute of a point in the reconstructed geometry of the point cloud frame. The one or more points from the reference point cloud frame may be selected to predict attribute information of the point from the reconstructed point cloud frame, for example, based on geometry information of the one or more points and geometry information of the point of the reconstructed point cloud frame. Projected attributes and coded attributes belong to the same geometry of the point cloud frame and the prediction of the coded attributes based on the projected attributes may be much more efficient because the geometry discrepancy has been removed.

The encoder and decoder may both determine the same attribute predictors, and may perform inverse operations during coding of the attributes of the point clouds. An encoder may determine attributes of a reconstructed geometry of a point cloud frame, for example, based on attributes of a geometry of the point cloud frame. The encoder, such as in lossy compression, may map attributes of the geometry of the point cloud frame to the reconstructed geometry, for example, to determine the attributes of the reconstructed geometry. The encoder may determine attribute predictors of the attributes of the reconstructed geometry, for example, based on projecting attributes of a reference point cloud frame for attributes onto the reconstructed geometry. The attributes of the reconstructed geometry may be encoded, for example, based on the attribute predictors. The attributes may be encoded, for example, as attribute residuals indicating differences between the attributes of the reconstructed geometry and the attribute predictors.

A decoder may perform inverse operations to reconstruct (e.g., decode) the attributes of the point cloud frame. The decoder may decode a geometry of a point cloud frame to determine a reconstructed geometry of the point cloud frame. This reconstructed geometry may be, for example, the same reconstructed geometry as that at the encoder. Attribute predictors of attributes of the reconstructed geometry may be determined similarly as performed by the encoder by, for example, based on projecting attributes of a reference point cloud frame, for attributes, onto the reconstructed geometry. The attribute predictors need not be indicated (e.g., signaled) in the bitstream because the attribute predictors may be reciprocally (e.g., independently and identically) determined by the encoder and the decoder. The decoder may decode the attributes of the reconstructed geometry, for example, based on the attribute predictors. The decoder may determine (e.g., decoded) attribute residuals, for example, from a bitstream. The decoded attribute may be determined, for example, based on adding the attribute predictors to the attribute residuals received and decoded/determined from the bitstream.

The reference point cloud frame for attributes may be an already-coded reference frame. The already-coded reference frame may be a reference frame, for example, used to encode geometry of the point cloud frame. The already-coded reference frame, for example, may be a different reference frame than the one used to encode the geometry of the point cloud frame.

The reference point cloud frame for attributes may be a motion-compensated point cloud frame. The motion-compensated point cloud frame may be determined (e.g., generated), for example, based on the already-coded reference frame, as described herein with respect to FIG. 10.

The attribute residuals may be further compressed (e.g., encoded and/or decoded) using an intra transform scheme. The intra transform scheme may include a pred-lift transform or a RAHT scheme, as described herein.

Examples described herein, the decoded geometry of a point cloud frame may correspond to a reconstructed geometry of the point cloud frame. An encoder may determine the reconstructed geometry, for example, based on successively encoding a geometry of the point cloud frame and may decode the encoded geometry. This reconstructed geometry at the encoder may be the same as the geometry as decoded at the decoder; therefore, the decoder may reconstruct the same reconstructed geometry as that at the encoder.

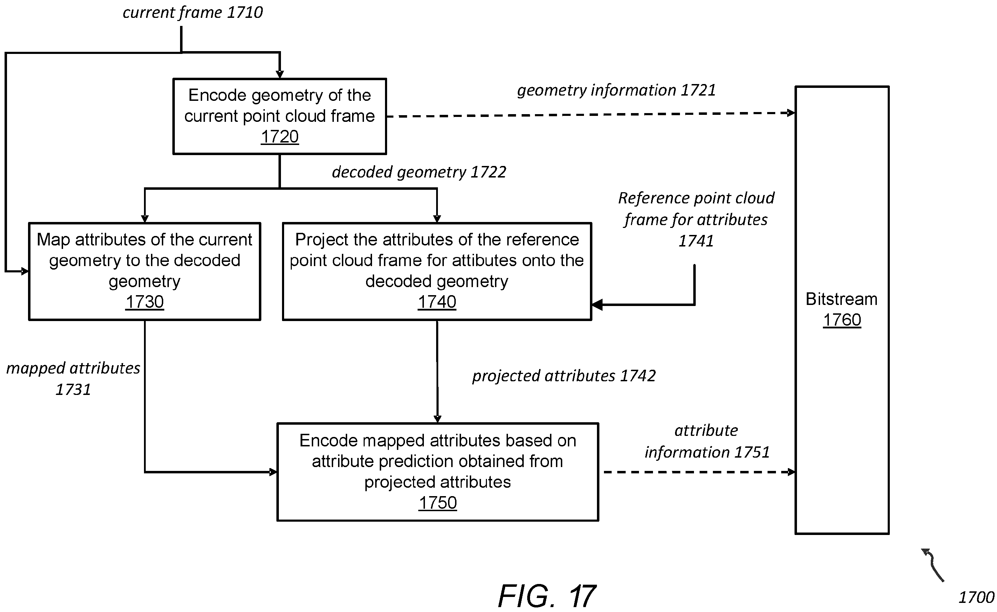

FIG. 17 shows an example method for encoding point cloud frames. Geometry and/or attributes of a current point cloud frame (e.g., current point cloud frame 1710) may be encoded. The current point cloud frame 1710 may be a frame of a sequence of point cloud frames (e.g., a dynamic point cloud). One or more steps of the example method of FIG. 17 (e.g., method 1700) may be performed and/or implemented by an encoder (e.g., encoder 114 of FIG. 1), an example computer system 2800 in FIG. 28, and/or an example computing device 2930 in FIG. 29. In some examples, steps 1720, 1730, 1740, and 1750 may represent components within the encoder. Steps (e.g., blocks) of the example method of FIG. 17 may be omitted, performed in other orders, and/or otherwise modified and/or one or more additional steps may be added.

At step 1720, an encoder (e.g., a geometry encoder) may encode geometry information 1721 of the current point cloud frame 1710. The encoded geometry information 1721 may be sent into a bitstream 1760. The encoder may determine a decoded geometry 1722 (e.g., reconstructed geometry) of the current point cloud frame. The encoder may determine the decoded geometry 1722, for example, based on decoding the encoded geometry information 1721. The decoded geometry 1722 and the geometry (e.g., original geometry) of the current point cloud frame 1710 may differ. The decoded geometry 1722 and the geometry (e.g., original geometry) may differ significantly, for example, if the geometry compression is lossy.

At step 1730, the encoder (e.g., an attributes determiner) may determine mapped attributes 1731 associated with the decoded geometry 1722 of the current point cloud frame. The encoder may determine the mapped attributes 1731, for example, by mapping the attributes associated with the geometry (e.g., original) of the current point cloud frame 1710 to the decoded geometry 1722 of the current point cloud frame.

Attributes may comprise colors. The mapped attributes may be determined, for example, based on recoloring the attributes. Mapped attributes may be determined, for example, based on a k nearest neighbor (KNN) search algorithm to determine nearest points from the geometry of the current point cloud frame 1710 to the decoded geometry 1722. The k nearest neighbor (KNN) search algorithm may include, for example, using a space partitioning algorithm such as a KD Tree search, a Ball/metric Tree search, a Brute force search, etc.). A mapped attribute of a point of the decoded geometry 1722 may be, for example, the average attribute values associated with the nearest points of the current point cloud frame 1710 relative to the point of the decoded geometry. The decoded geometry 1722 (e.g., reconstructed geometry) of the geometry of the current point cloud frame may be the same as the geometry (e.g., original geometry) of the current point cloud frame 1710, for example, if the geometry compression is lossless. The attribute mapping may associate attributes of each point of the geometry of the current point cloud frame to the same point of the decoded geometry 1722.

At step 1740, the encoder (e.g., an attributes projector) may determine projected attributes 1742, for example, by projecting the attributes of a reference point cloud frame for attributes 1741 onto the decoded geometry 1722. At step 1750, the encoder (e.g., an attributes encoder) may encode (e.g., generate) attribute information 1751 and send/signal the attribute information 1751 to/into the bitstream 1760. The attribute information 1751 may represent the mapped attributes 1731 associated with the decoded geometry 1722. The attribute information 1751 may be based on attribute prediction determined from the projected attributes 1742. Attribute prediction may comprise attribute predictors determined from the projected attributes 1742 as described herein.

The reference point cloud frame for attributes may be an already-coded reference point cloud frame. The already-coded reference point cloud frame may have been previously selected to encode geometry of the current point cloud frame (e.g., at step 1720). The already-coded reference point cloud frame for determining the project attributes 1742 may be different from the already-coded reference point cloud frame used at step 1720. The already-coded reference point cloud frame may be motion compensated, for example, by using a motion vector (MV) field. The already-coded reference point cloud frame and/or the MV field may be encoded in bitstream 1760.

The reference point cloud frame for attributes 1741 may be determined from the already-coded reference point cloud frame. The already-coded reference point cloud frame may be motion compensated by a MV field that may be encoded in bitstream 1760. The attributes of the already-coded reference point cloud frame may be moved together with the points such that the reference point cloud frame for attributes 1741 possesses attributes, for example, if motion compensation occurs.

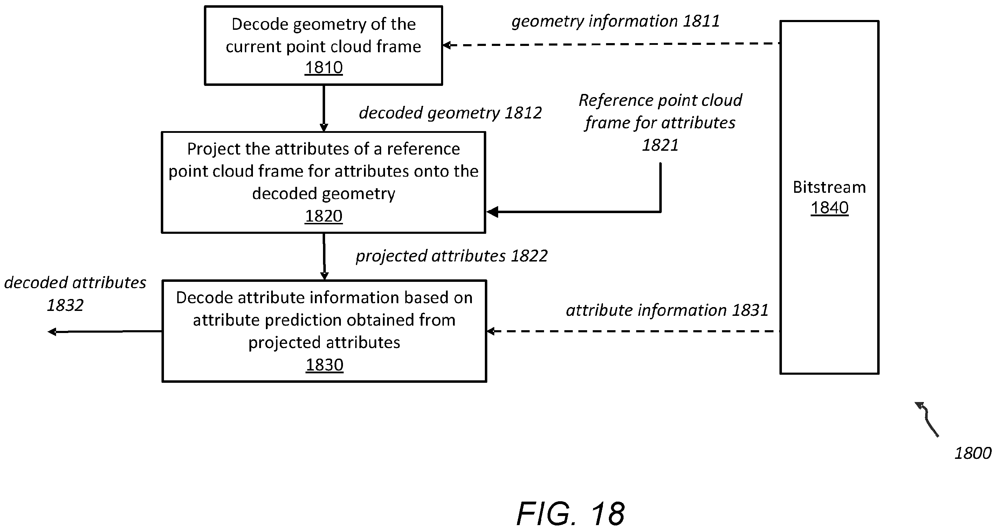

FIG. 18 shows an example method for decoding point cloud frames. Geometry and/or attributes of a current point cloud frame may be decoded. The current point cloud frame may be a frame of a sequence of point cloud frames (e.g., a dynamic point cloud). The current point cloud frame may be encoded as described herein with respect to FIG. 17. One or more steps of the example method of FIG. 18 (e.g., method 1800) may be performed and/or implemented by a decoder (e.g., decoder 120 of FIG. 1), an example computer system 2800 in FIG. 28, and/or an example computing device 2930 in FIG. 29. In some examples, steps 1810, 1820, and 1830 may represent components within the decoder. Steps (e.g., blocks) of the example method of FIG. 18 may be omitted, performed in other orders, and/or otherwise modified and/or one or more additional steps may be added.

At step 1810, the decoder (e.g., a geometry decoder) may provide (e.g., determine) decoded geometry 1812 (e.g., the reconstructed geometry at the encoder) of the current point cloud frame. The decoded geometry 1812 may be provided/determined by decoding geometry information 1811 from a bitstream 1840. The decoded geometry 1812 may be the decoded geometry 1722 as described herein with respect to FIG. 17.

At step 1820, the decoder (e.g., an attributes projector) may determine projected attributes 1822. The projected attributes may be determined, for example, by projecting the attributes of a reference point cloud frame for attributes 1821 onto the decoded geometry 1812. Projected attributes 1822 may be the same as the projected attributes 1742 as described herein with respect to FIG. 17. Similarly, the reference point cloud frame for attributes 1821 may be the same as the reference point cloud frame for attributes 1741 as described herein with respect to FIG. 17.

At step 1830, the decoder (e.g., an attributes decoder) may determine decoded attributes 1832 associated with the decoded geometry 1812. The decoded attributes 1832 may be determined, for example, by decoding attribute information 1831 from bitstream 1840 based on attribute prediction. The attribute prediction and/or the decoded attributes 1832 may be determined from the projected attributes 1822.

The reference point cloud frame for attributes 1821 may be an already-coded reference point cloud frame. The already-coded reference point cloud frame may have been previously determined to decode geometry of the current point cloud frame at step 1810. A motion vector, indicating the already-coded reference point cloud frame, may be decoded from geometry information 1811. The already-coded reference point cloud frame for determining the project attributes 1822 may be either the same or different from the already-coded reference point cloud frame used at step 1810. The already-coded reference point cloud frame may be motion compensated, for example, by using a MV field. The already-coded reference point cloud frame and/or the MV field may be decoded from bitstream 1840.

The reference point cloud frame for attributes 1821 may be a motion compensated point cloud frame determined from the already-coded reference point cloud frame. The motion compensated point cloud frame may be motion compensated by a MV field. The MV field may be decoded from the bitstream 1840. The attributes of the already-coded reference point cloud frame may be moved together with the points such that the reference point cloud frame for attributes 1821 may possess attributes, for example, if motion compensation occurs. The reference point cloud frame for attributes 1821 may be the same as (or different from) the reference point cloud frame for attributes 1741 as described herein with respect to FIG. 17.

Projected attributes 1742, projected attributes 1822, mapped attributes 1731, and/or decoded attributes 1832, may belong to the same decoded geometry 1722 (and/or decoded geometry 1812). Attribute predictors for mapped attributes 1731 (e.g., corresponding to the current frame 1710) may be determined from the projected attributes 1742 and/or projected attributes 1822. Attribute predictors for mapped attributes 1731 (e.g., corresponding to the current frame 1710) may be determined from the projected attributes 1742 and/or projected attributes 1822 in a similar manner as described herein with respect to steps 1750 and 1830. Determining attribute prediction (e.g., attribute predictors) from projected attributes may be performed reciprocally (e.g., independently and/or identically) at the encoder and decoder. This may result in reducing the size of the compressed attribute information 1751 in bitstream 1760, (and/or reducing the size of the compressed attribute information 1831 in bitstream 1840).

Attribute predictors (e.g., residual attribute predictors if an intra transform is used for (e.g., applied to) residual attributes) may be determined based on a pred-lift scheme (e.g., as described herein with respect to FIG. 11 and/or FIG. 13). The attribute predictors may be determined, for example, based on predicting attributes a' of the set S' of points from attributes $a^0, ..., a^{i-1}$ of the lower level of details $S^0 \cup ... \cup S^{i-1}$ and/or from the projected attributes 1742. It is appreciated that the inputs a' may represent residual attributes. The inputs a' may or may not represent attribute values.

Attribute predictors may be determined based on the pred-lift schemes (e.g., as described herein with respect to FIG. 12 and/or FIG. 14). Attributes a' of the set S' of points may be predicted, for example, from attributes $a^0, ..., a^{i-1}$ of the lower level of details $S^0$ U ... U $S^{i-1}$ and/or from the projected attributes 1822. Attribute prediction may be determined, for example, from projected attributes 1742 (and/or projected attributes 1822). The attribute prediction may be based on (e.g., use) an inter RAHT scheme. The RATH scheme may use the same octree partitioning for mapped attributes 1731, decoded attributes 1832, projected attributes 1742, and/or projected attributes 1822. A same octree partitioning may be use, for example, if the mapped attributes and projected attributes are both associated with a same decoded geometry 1722 (and/or decoded geometry 1812).

Each DC and/or AC coefficient determined as output of the inter RAHT scheme applied on mapped attributes 1731 may be predicted by the co-located DC and/or AC coefficients obtained as output of the inter RAHT scheme applied on the projected attributes 1742. Each DC and/or AC coefficient determined as output of the inter RAHT scheme applied on decoded attributes 1832 may be predicted by the co-located DC and/or AC coefficients obtained as output of the inter RAHT scheme applied on the projected attributes 1822. The problem of the sensitivity of the inter RAHT schema to geometry differences between the current point cloud and the motion compensated point cloud may be solved, for example, if the mapped, projected, and/or decoded attributes are associated with a same decoded geometry 1722 (and/or a same decoded geometry 1812).

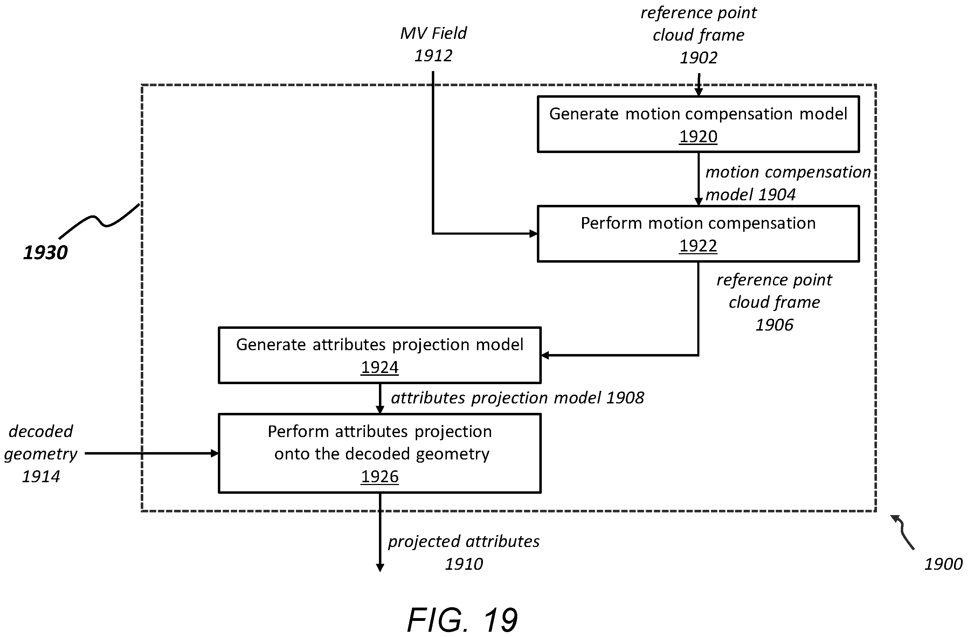

FIG. 19 shows an example method for obtaining projected attributes. More specifically, FIG. 19 shows an example process 1900 of a method for projecting attributes from a reference point cloud frame 1902 to obtain projected attributes (e.g., attribute predictors) 1910 associated with attributes of decoded geometry 1914. Projected attributes 1910 may be used as attribute predictors for attributes of points in decoded geometry 1914. The points may correspond to a current point cloud frame to be coded (e.g., encoded and/or decoded). One or more steps of the example method may be performed and/or implemented by an encoder (e.g., encoder 114 of FIG. 1) and/or a decoder (e.g., decoder 120 of FIG. 1). The example method may be performed identically at both the encoder and the decoder to generate the same projected attributes 1910. The operations (e.g., steps) of FIG. 19 may be performed separately by the encoder and the decoder. The example method may correspond to step 1740 of FIG. 17 and/or to step 1820 of FIG. 18. The example method may provide additional details for how attribute projection (or attributes projection) is performed. The decoded geometry 1914 may correspond to the decoded geometry 1722 of FIG. 17 and/or the decoded geometry 1812 of FIG. 18. The reference point cloud frame 1902 may correspond to the reference point cloud frame for attributes 1741 of FIG. 17 and/or the reference point cloud frame for attributes 1821 of FIG. 18. The projected attributes 1910 may correspond to the projected attributes 1742 of FIG. 17 and/or the projected attributes 1822 of FIG. 18. Steps (e.g., blocks) of the example method of FIG. 19 may be omitted, performed in other orders, and/or otherwise modified and/or one or more additional steps may be added.

The example method for obtaining projected attributes may include performing motion compensation. For example, the method for obtaining projected attributes of reference point cloud frame 1902 onto decoded geometry 1914 of a current point cloud frame may include, for example, performing motion compensation on the reference point cloud frame 1902 to generate a reference point cloud frame 1906. The reference point cloud frame 1906 may be referred to as a motion-compensated reference point cloud frame. The reference point cloud frame 1906 may correspond to the reference point cloud frame for attributes 1741 of FIG. 17 and/or the reference point cloud frame for attributes 1821 of FIG. 18.

Block 1930 shows operations (e.g., steps) of the example method for obtaining projected attributes (or of projecting attributes). For example, block 1930 may include steps 1920 and 1922 related to determining a reference point cloud frame 1906. The reference point cloud frame 1906 may correspond to the motion compensating reference point cloud frame 1902 using MV field 1912. Block 1930 may further include steps 1924 and 1926 related to projecting attributes of points of the reference point cloud frame 1906 onto points of the decoded geometry 1914. Block 1930 may correspond to step 1740 of FIG. 17 and/or step 1820 of FIG. 18.

Block 1930 may include steps 1924 and 1926. Reference point cloud frame 1906 may represent and correspond to reference point cloud frame for attributes 1741 of FIG. 17 and/or reference point cloud frame for attributes 1821 of FIG. 18.

At step 1920, a motion compensation model 1904 may be generated. A motion compensation model 1904 may be generated, for example, based on a reference point cloud frame 1902. The reference point cloud frame 1902 may be a decoded point cloud frame. For example, the reference point cloud frame 1902 may be a previously/already decoded point cloud frame in the decoding order of a sequence of point cloud frames. The motion compensation model 1904 may enable processing of computing motion compensation, for example, at a faster speed. For example, the motion compensation model 1904 may include a data structure used to enable faster processing of computing motion compensation. For example, the data structure may be used to quickly determine (e.g., find or obtain position information of) the points of the reference point cloud frame 1902 to be motion compensated.

At step 1922, motion compensation may be performed. Motion compensation may be performed, for example, by applying/using MV field 1912 on points of the reference point cloud frame 1902. The MV field 1912 may be applied/used on points of the reference point cloud frame 1902, for example, as determined or selected by motion compensation model 1904. In some examples, MV field 1912 may be part of geometry information associated with a current frame (e.g., current frame 1710). The geometry information may be, for example, geometry information 1721 and geometry information 1811. For example, at the decoder, MV field 1912 may be received in geometry information 1811 decoded from bitstream 1840. For example, at the encoder, MV field 1912 may be determined. MV field 1912 may be determined, for example, based on a motion search performed between the decoded geometry 1914 of the current frame and geometry of reference point cloud frame 1902, as described herein with respect to FIG. 10.

The MV field 1912, determined or received for coding attributes information of decoded geometry 1914, may be the same as the MV field used to code decoded geometry 1914. For example, step 1920 and step 1922 may be part of step 1030 of FIG. 10. At step 1030 of FIG. 10, the motion compensate reference frame may be determined in the encoder. For example, step 1920 and step 1922 may be part of an equivalent step in the decoder. The reference point cloud frame 1906 may correspond to (e.g., be equivalent to) the motion compensated frame 1031 and may include the attributes associated with the motion compensated points of motion compensated frame 1031.

An MV field used to code attributes information may be different from an MV field used to code decoded geometry. For example, MV field 1912 used to code the attributes information may be different from that used to code decoded geometry 1914. An already-coded point cloud frame for predicting attributes information of decoded geometry 1914 may be selected, for example, by determining (e.g., independently) an MV field 1912 for attributes. The already-coded point cloud frame may be suitable for predicting (e.g., may best predict) attributes information of decoded geometry 1914, for example, by reducing attributes residuals. The MV field 1912 used in step 1922 may be different from the MV field (motion vectors) used in step 1030. The reference cloud frame 1906 and motion compensated frame 1031 may be different. The reference cloud frame 1906 may include the attributes associated with the motion compensated points. The motion compensated frame 1031 may not include the attributes associated with the motion compensated points.

The motion compensation at step 1922 may be performed for sub-volumes (e.g., cuboids) of a volume containing reference point cloud frame 1902. The points contained in a cuboid of the reference point cloud frame 1902 may be moved (e.g., translated), for example, based on a motion vector of MV field 1912. The points contained in a cuboid of the reference point cloud frame 1902 may be all moved (e.g., translated), for example, based on (e.g., according to) a motion vector of MV field 1912. The points contained in a cuboid of the reference point cloud frame 1902 may be moved (e.g., translated), for example, to obtain points within a corresponding cuboid in reference point cloud frame 1906. MV field 1912 may represent and/or include a set of motion vectors. The set of motion vectors may be for a set of cuboids within reference point cloud frame 1902. The set of motion vectors may correspond to a set of cuboids in the motion compensated reference point cloud frame 1906. The set of cuboids may correspond to occupied cuboids (e.g., containing at least one point) at a certain depth within the occupancy tree of reference point cloud frame 1902. In some examples, the set of cuboids may correspond to occupied cuboids (e.g., containing at least one point) at a certain depth within the occupancy tree of decoded geometry 1914.

Motion compensation model 1904 may enable motion compensation computation for cuboid volumes of reference point cloud frame 1902. Motion compensation model 1904 may include, for example, a tree data structure (e.g., an octree) to enable motion compensation computation for cuboid volumes of reference point cloud frame 1902. Efficient motion compensation computation for cuboid volumes of reference point cloud frame 1902 may be realized, for example, by using the tree data structure. Each node in the tree data structure may correspond to an occupied cuboid within reference point cloud frame 1902 and/or may be associated with all the points of the reference point frame 1902 belonging to that occupied cuboid. The motion compensation model 1904 may correspond to an occupancy tree (e.g., the occupancy tree as described with respect to FIG. 3). The occupancy tree may be built, for example, if encoding/decoding of a preceding frame occurs. The preceding frame may be used as the reference point cloud frame 1902 for encoding/decoding the current point cloud frame.

The tree data structure may be used to determine (e.g., find, select) and extract points belonging to the reference point cloud frame 1902 that are contained within a cuboid region. The tree data structure may be used to (e.g., quickly) determine (e.g., find, select) and extract all the points belonging to the reference point cloud frame 1902 that are contained within a cuboid region. Positions of these points may be moved (e.g., translated), for example, to determine corresponding positions of points in a cuboid belonging to the motion compensated reference point cloud frame 1906. Positions of these points may be moved (e.g., translated), for example, by applying/using corresponding motion vectors in MV field 1912.

Motion compensation at step 1922 may be performed for each cuboid region (e.g., per occupied cuboid, or for each set of cuboids, etc.) of the reference point cloud frame 1906. Motion compensation at step 1922 may be iteratively performed (or repeated) for each cuboid region of the reference point cloud frame 1906. Motion compensation at step 1922 may be performed (e.g., iteratively performed) for each cuboid region, for example, by obtaining a motion vector (e.g., from the MV field 1912) correspond to each cuboid region.

Steps 1920 and 1922 may be part of the method to encode geometry of the current point cloud frame at step 1720, with the reference point cloud frame 1902 being used for the encoding of the decoded geometry 1914. Steps 1920 and 1922 may be part of the method to decode geometry of the current point cloud frame at step 1810, with the reference point cloud frame 1902 being used for the decoding of the decoded geometry 1914.

At step 1924, an attribute projection model (or attributes projection model) may be generated. For example, an attribute projection model 1908 may be generated (e.g., built or configured) from the reference point cloud frame 1906. At step 1926, attribute projection may be performed onto a decoded geometry. For example, attribute projection of the reference point cloud frame 1906 may be performed onto the decoded geometry 1914. The attribute projection of the reference point cloud frame 1906 onto the decoded geometry 1914 may be performed, for example, by using the attribute projection model 1908. As points of reference point cloud frame 1906 may represent motion compensated points of reference point cloud frame 1902, points of reference point cloud frame 1906 may correspond to points of reference point cloud frame 1902. The result of the attribute projection at step 1926 may be a form of projection of attributes of reference point cloud frame 1902 onto the decoded geometry 1914, for example, after applying/using MV field 1912.

The attribute projection model 1908 may be a data structure used to perform (e.g., efficiently perform) attribute projection onto a specific position of a point. For example, the data structure may be a spatial-partitioning data structure such as a tree data structure (e.g., a k-d tree or an octree). The data structure may be used to search for one or more points belonging to the reference point cloud frame. The one or more points may be a set of points. The one or more points may comprise specific positions. For example, the one or more points may comprise positions in the neighborhood of a particular point from a decoded geometry. For example, the data structure may be used to search for a set of one or more points $N_{pts}$, belonging to the reference point cloud frame 1906 (corresponding to motion compensated points of reference point cloud frame 1902), with positions in the neighborhood of a particular point p from the decoded geometry. One or more points (e.g., a set of points) may be determined to be within a neighborhood of a point, for example, based on distances of the points from the point. One or more points may be determined to be within a neighborhood of a point, for example, based on distances of the points from the point being within (or less than, no more than, below, etc.) a threshold value. For example, the set of points $N_{pts}$ may be determined to be within the neighborhood for point p based on distances of the set of points $N_{pts}$ from the point p being within or less than a threshold value. The threshold value may be a predetermined value or may be computed by the encoder and signaled to the decoder in the bitstream. In some other examples, the set of points $N_{pts}$ may be determined as a number (or quantity) of points with positions that are closest to the point p. The number may be a predetermined quantity or may be computed by the encoder and signaled to the decoder in the bitstream. Various types of distances may be used. For example, the distance may be a Manhattan distance (i.e., L1 norm), an Euclidean distance (i.e., L2 norm), a Chebyshev distance (i.e., L-infinity or L∞ norm), or a Minkowski difference.

At step 1926, values of projected attributes for a point may be determined. Values of projected attributes for a point may be determined, for example, based on values of attributes associated with each point of a set of points as described herein. The attribute values associated with each point within the set of points $N_{pts}$ may be used at step 1926 for determining projected attribute values for the point p. The projected attribute values may be attribute predictors of attributes for the point p. A value of each attribute of a point may be predicted or projected, for example, based on values of corresponding attributes (with the same type as the each attribute) of a set of one or more points. For example, a value of each attribute of point p may be predicted or projected based on values of corresponding attributes (with the same type as the each attribute) of the set of one or more points $N_{pts}$.

A projected attribute (e.g., attribute predictor) for a point may be determined as an average of attribute values of a set of one or more points. A projected attribute (e.g., attribute predictor) for a point may be determined as an average of attribute values of a set of one or more points, for example, weighted by respective distance between the set of one or more points and the point. For example, a projected attribute (e.g., attribute predictor) for the point p may be determined as an average of the attribute values, of the set of one or more points $N_{pts}$, weighted by respective distance between the points $N_{pts}$ and the point p. The distance may be a Manhattan distance (i.e., L1 norm), an Euclidean distance (i.e., L2 norm), a Chebyshev distance (i.e., L-infinity or L∞ norm), or a Minkowski difference.

Projected attributes representing attribute predictors for a point (e.g., a first point) may be determined to be corresponding values of attributes of another point from a reference point cloud frame (e.g., a second point) closest to the point (e.g., the first point). For example, the projected attributes representing the attribute predictors for the point p may be determined to be the corresponding values of the attributes of the point from the reference point cloud frame 1906 closest to the point p. Improvements such as faster projection may be generated, for example, because only one point is searched and selected from the reference point cloud frame to determine attribute predictors for a point (e.g., point p) from a decoded geometry.

In some examples, the MV field 1912 may not be used to transform reference point cloud frame 1902. For example, all motion vectors in the MV field 1912 may be set to zero. In these examples, the motion compensation model 1904 may be omitted and reference point cloud frame 1906 may be set to be the same as reference point cloud frame 1902.

In at least some technologies, as described herein with respect to FIGS. 18-20, attributes of a reference point cloud frame may be used (e.g., directly) in the projection of reference attributes onto the geometry of a decoded geometry (e.g., reconstructed geometry) of a current point cloud frame, for example, to determine projected attributes representing attribute predictors of the attributes of the decoded geometry. The attributes of a reference point cloud frame may comprise attributes of points of geometry of the reference point cloud frame. This direct projection may be simple and may have lower computational complexity than motion compensating the reference point cloud frame. Motion may be applied to (e.g., used for) motion compensating the reference point cloud frame, for example, as part of the projection to determine attribute predictors, as described herein with respect to FIG. 19. The motion compensation performed on the reference point cloud frame may introduce discontinuities in the motion-compensated reference point cloud. Attributes of selected points from the motion-compensated reference point cloud may be used to determine attribute predictors of points in the decoded geometry. These discontinuities may be introduced on the boundaries of prediction units within the motion compensated point cloud frame. The prediction units may be, for example, prediction volumes within which the same motion parameters of the MV field are applied/used. The discontinuities of geometry of the motion compensated point cloud frame may lead to discontinuities of values of the attributes from which attribute predictors are determined. Projection of attributes of the reference point cloud frame based on motion compensating the reference point cloud frame may lead to inconsistent and/or poor attribute projection (e.g., attribute prediction), and may also result in less efficient compression of attribute values of the decoded/reconstructed geometry of the current point cloud frame.

As described herein with respect to FIG. 19, projecting attributes from the motion compensated point cloud frame may require generation of an attribute projection model 1908 (e.g., using an octree or a k-d tree) to accelerate the search of a neighborhood of points in the motion-compensated point cloud frame. The attribute projection/prediction may be performed, for example, based on the neighborhood of points. Though the use of this data structure may reduce the overall complexity of performing the projection of the attributes, the generation of attribute projection model 1908 may require additional memory to store the data structure.

Examples described herein may provide solutions for improving compression of attributes of point clouds by improving the quality of attribute projection. Motion compensation may be part of projecting attributes of a reference point cloud frame onto a decoded geometry (e.g., reconstructed geometry) of a current point cloud frame. Motion compensation may be performed on the points of the decoded geometry to determine second reference points. Attributes of the reference point cloud frame may be configured to be projected on the second reference points. The second reference points may represent motion-compensated points of the decoded geometry of the current point cloud frame. The second reference points may have a one-to-one correspondence with the points of the decoded geometry. The projected attributes may be associated with the original positions of the points of the decoded geometry. The original positions may be, for example, positions before motion compensation. The projected attributes may be associated with the original positions of the points of the decoded geometry. The projected attributes may be associated with the original positions of the points of the decoded geometry, for example, by transforming (e.g., translating) points of the decoded geometry into the same time frame of points of the geometry of the reference point cloud frame.

The points of the reference point cloud frames may not have discontinuity of geometry and attribute values. The points of the reference point cloud frames may not have discontinuity of geometry and attribute values, for example, due to motion compensation being applied to (e.g., used for) the decoded geometry. A set of one or more points may be configured to be selected from the points of the reference point cloud frames. A set of one or more points may be configured to be selected from the points of the reference point cloud frames, for example, to determine attribute predictors for each point of the decoded geometry. A neighborhood of points may be selected for the motion-compensated points of the decoded geometry. The neighborhood of points selected from the reference point cloud frame may be more accurate than a neighborhood of points obtained (e.g., by searching) from a motion-compensated reference point cloud frame. A neighborhood of points having an increased accuracy may increase the accuracy of attribute prediction, for example, based on the projected attributes. A neighborhood of points having an increased accuracy may increase compression of attribute values, for example, by reducing attribute residuals.

An entire reference point cloud frame may need to be motion compensated. An entire reference point cloud frame may need to be motion compensated, for example, before performing attribute projection. An entire reference point cloud frame may need to be motion compensated, for example, if a neighborhood of points for a point of a decoded geometry is to be selected from the motion-compensated reference point cloud frame. Examples described herein may select the neighborhood of points from the reference point cloud frame. Points of the reference point cloud frame that are in a neighborhood for each point of the decode geometry may be selected. Points of the reference point cloud frame that are in a neighborhood for each point of the decode geometry may be selected, for example, after each point is adjusted by a motion vector as part of motion compensation. Attribute projection in the examples may be performed point-by-point for each point of the decoded geometry. There may be no need to first generate a motion-compensated point cloud frame for the decoded geometry of the current point cloud frame. Improvements such as reduced memory, lower power consumption and runtime for maintaining and using memory, etc. may be achieved.

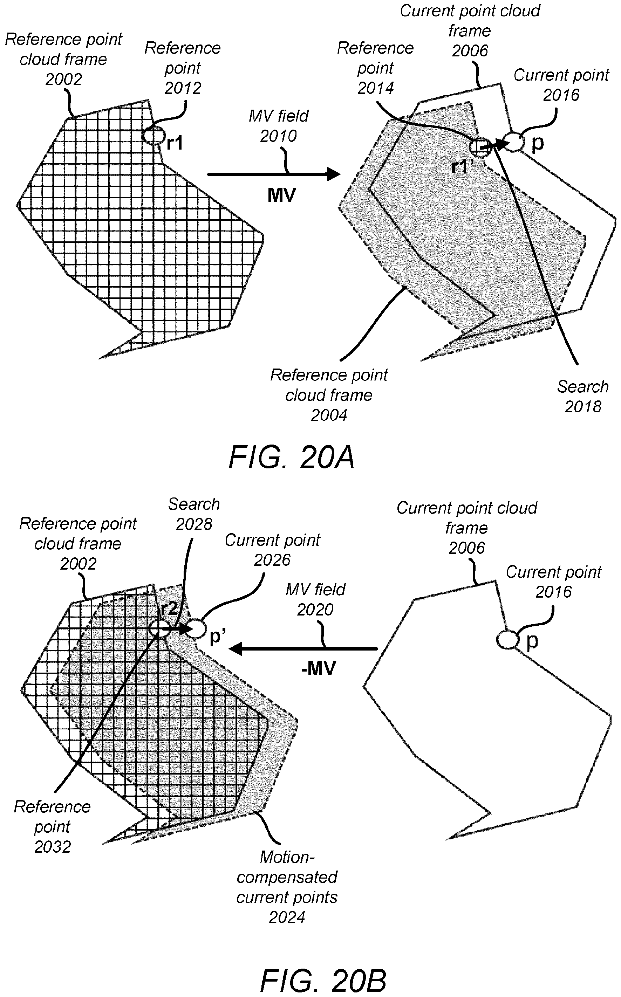

FIG. 20A and FIG. 20B show examples of different approaches of projecting attributes. More specifically, FIG. 20A and FIG. 20B show examples of different approaches of projecting attributes of a reference point cloud frame 2002 onto a current point cloud frame 2006 to determine attribute predictors for points such as a current point 2016 of a geometry of the current point cloud frame 2006. The attribute projection may be performed (e.g., identically) at the encoder and/or the decoder to generate attribute predictors for attributes of the decoded geometry of the current point cloud frame 2006.

FIG. 20A shows an example of projecting attributes of a reference point cloud frame based on motion compensating a reference point cloud frame. More specifically, FIG. 20A shows an example of projecting attributes of a reference point cloud frame 2002 based on motion compensating the reference point cloud frame 2002 by MV field 2010 to generate a reference point cloud frame 2004. MV field 2010 may include a set of motion vectors including a motion vector (MV) used to move (e.g., translate) a reference point 2012 (r1) to a reference point 2014 (r1') in the reference point cloud frame 2004, as described herein with respect to FIG. 19. A set of one or more points, which may include the reference point 2014, in a neighborhood of a current point 2016, may be selected in a search 2018. Attribute values (or values of attributes) of the selected set of one or more points may be used to generate attribute predictors for coding the current point 2016. As described herein, discontinuities of the geometry of the reference point cloud frame 2004 may be introduced, for example, due to MV field 2010. MV field 2010 may not provide a granular translation of points. For example, MV field 2010 may include one MV applied to (e.g., used for, associated with) the reference point cloud frame 2002 or an MV determined for a set of cuboids or per cuboid of the reference point cloud frame 2002, but not per point of the reference point cloud frame 2002, for example, due to high complexity. The entirety of the reference point cloud frame 2004 may need to be generated and maintained, for example, before search 2018 for each point of the current point cloud frame 2006 may be performed. The entirety of the reference point cloud frame 2004 may need to be generated and maintained before search 2018 for each point of the current point cloud frame 2006 may be performed, for example, because search 2018 is performed on points of the reference point cloud frame 2004.

FIG. 20B shows an example of projecting attributes of a reference point cloud frame based on motion compensating points of a current point cloud frame. More specifically, FIG. 20B shows an example of projecting attributes of a reference point cloud frame 2002 based on motion compensating points of a current point cloud frame 2006 by MV field 2020 (-MV) to result in motion-compensated current points 2024. MV field 2020 may be an inverse of MV field 2010. MV field 2020 may include a motion vector (-MV) that is the inverse (e.g., having an opposite sign) as that in MV field 2010.

A current point may be moved (e.g., translated) by a motion vector (-MV) of an MV field to determine a motion-compensated position for the current point. For example, a current point 2016 may be moved (e.g., translated) by a motion vector (-MV) of an MV field 2020 to determine a motion-compensated position for the current point 2016 and shown as a current point 2026 (p') in FIG. 20B. A search may be performed to select a set of one or more points in a neighborhood of the current point, for example, to determine attribute predictors for attribute values of the current point. Attribute predictors for attribute values of the current point may be determined, for example, if attribute projection of a reference point cloud frame is performed. A search 2028 may be performed to select a set of points, including a reference point 2032 (r2), in a neighborhood of the current point 2026 to determine attribute predictors for attribute values of the current point 2026, for example, if attribute projection of a reference point cloud frame 2002 is performed. The current point 2026 may correspond to the current point 2016. The one or more selected points may be more accurate for predicting attributes of the current point 2016, for example, because positions of reference points of the reference point cloud frame 2002 may be maintained. For example, the reference point 2032 (r2) may not be (e.g., is likely not) the same as the reference point 2012 (r1).

The motion-compensated current point 2024 may be shown to graphically represent the adjustments to the positions of points in the geometry of the current point cloud frame 2006 as part of the attribute projection. An entirety of motion-compensated current points may not need to be generated and maintained in a memory as a motion-compensated current frame corresponding to the current point cloud frame, for example, because attribute predictors are determined per point in the current point cloud frame 2006. The attribute projection (e.g., as shown in FIG. 20B) may achieve advantages such as increased accuracy and less memory usage.

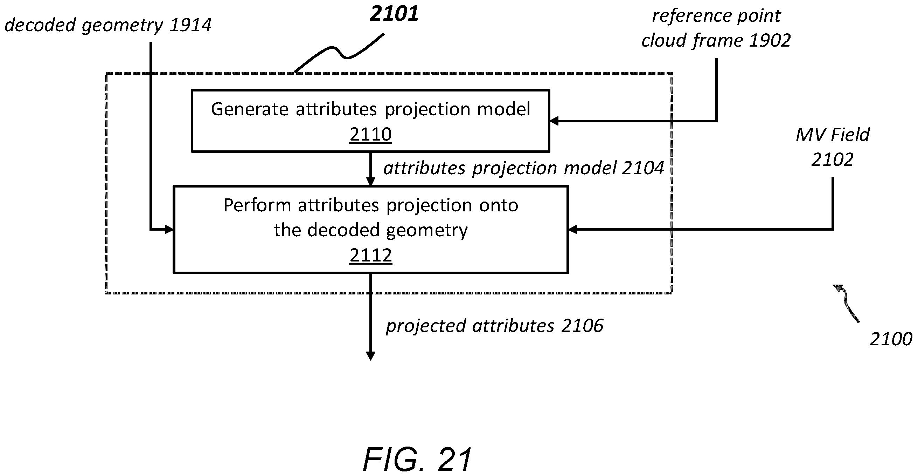

FIG. 21 shows an example method for obtaining projected attributes. More specifically, FIG. 21 shows an example process 2100 of a method for projecting the attributes of the reference point cloud frame 1902 onto decoded geometry 1914, for example, by applying/using motion compensation onto the points of the decoded geometry 1914 to obtain the projected attributes 2106. Block 2101 shows example operations (e.g., steps) of the example method of projecting attributes. Block 2101 may include steps 2110 and 2112. One or more steps of the example method may be performed and/or implemented by an encoder (e.g., encoder 114 of FIG. 1) and/or a decoder (e.g., decoder 120 of FIG. 1). For example, block 2101 may be performed identically at the encoder and the decoder to determine the same projected attributes as attributes predictors for attribute values of points in the decoded geometry 1914. Block 2101 may correspond to step 1740 of FIG. 17 and step 1820 of FIG. 18. Steps (e.g., blocks) of the example method of FIG. 21 may be omitted, performed in other orders, and/or otherwise modified and/or one or more additional steps may be added.

At step 2110, an attribute projection model may be generated. An attribute projection model 2104 may be generated (e.g., built or configured), for example, based on the reference point cloud frame 1902. Attribute projection model 2104 may be generated in a similar way as generating the attribute projection model 1908 as described herein, with a following difference: The attribute projection model 2104 is generated for searching points within the reference point cloud frame 1902 (e.g., directly), rather than searching points within the reference point cloud frame 1906 representing a motion compensated reference point cloud frame 1902.

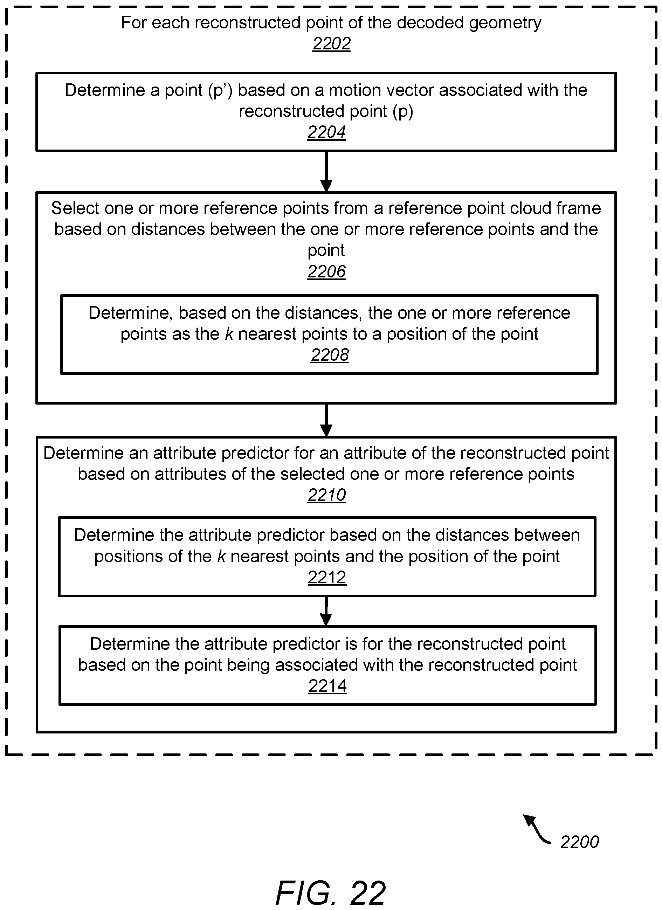

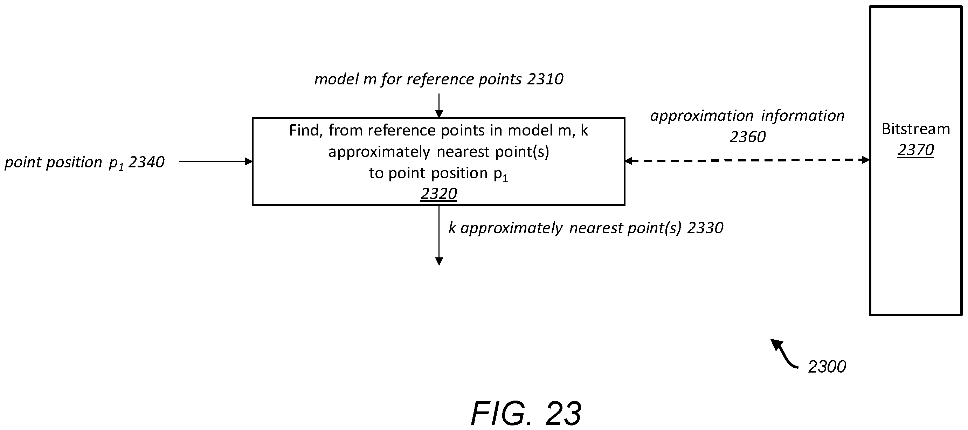

At step 2112, attribute projection (or attributes projection) may be performed onto decoded geometry. Attribute projection may be performed from reference point cloud frame 1902 onto decoded geometry 1914, for example, based on applying/using motion vector (MV) field 2102, as described herein with respect to FIG. 20B and further described herein with respect to FIG. 22 and FIG. 23.

MV field 2102 may include one or more motion vectors (MVs) applied to (or used for/on) points of decoded geometry 1914. MV field 2102 may include one motion vector applied to (e.g., used for) all points of decoded geometry 1914. MV field 2102 may include a set of (or a plurality of) motion vectors applied to (e.g., used for) respective sets of (or a plurality of) cuboids spatially partitioning a volume containing decode geometry 1914. For example, the cuboids may be indicated by an occupancy tree and may represent sub-volumes of the volume containing one or more points of decode geometry 1914. The same motion vector may be applied to (e.g., used for) points within a set of cuboids. Alternatively, the MV field 2102 may include a set of motion vectors applied to (e.g., used for) a plurality of respective cuboids spatially partitioning the volume. A motion vector may be (e.g., independently) applied to (e.g., used for) each cuboid.

The attribute projection model 2104 may be the same as the motion compensation model. No additional computation may be required to generate the attribute projection model. For example, the same data structure, such as an octree, may be used for performing both motion compensation and attribute projection onto the decoded geometry 1914. The motion compensation may be, for example, as described herein with respect to step 1030 of FIG. 10 which may be included in step 1720 of FIG. 17 and in step 1810 of FIG. 18. Additionally, compared to using the attribute projection model 1908 generated from the reference point cloud frame 1906 in FIG. 19, memory requirements may be reduced, for example, because a single model may be used for both motion compensation and attribute projection. Memory requirements may be further reduced, for example, because attributes may not need to be stored within the motion compensated frame 1031 for attribute projection.

FIG. 22 shows an example method for obtaining projected attributes. More specifically, FIG. 22 shows a flowchart 2200 of an example method for performing attribute projection from a reference point cloud frame (e.g., reference point cloud frame 1902 of FIG. 21) to a decoded geometry of a current point cloud frame (e.g., decoded geometry 1914 of FIG. 21), for example, based on applying/using an MV field (e.g., MV field 2102 of FIG. 21) to/for/on reconstructed/decoded points of the decoded geometry. FIG. 22 may provide an example implementation of block 2101 of FIG. 21. One or more steps of the example method may be performed and/or implemented by an encoder (e.g., encoder 114 of FIG. 1) and/or a decoder (e.g., decoder 120 of FIG. 1). Operations (e.g., steps) of the example method may be performed similarly at the encoder and the decoder. Steps (e.g., blocks) of the example method may be omitted, performed in other orders, and/or otherwise modified and/or one or more additional steps may be added.

At block 2202, operations (e.g., steps) of the example method may be performed (e.g., applied) iteratively for each reconstructed point (e.g., point p) of the decoded geometry of the current point cloud frame. For example, block 2202 may include steps 2204-2214. At step 2204, a point (e.g., point p') may be determined. The point (e.g., point p') may be determined, for example, based on a motion vector associated with the reconstructed point (e.g., point p). The motion vector may be obtained from the MV field (e.g., MV field 2102) and may be associated with the reconstructed point. The motion vector may be associated with all the reconstructed points. The motion vector may be associated with a set of cuboids spatially partitioning a volume. The volume may contain the decoded geometry and the reconstructed point. The motion vector may be associated with a specific cuboid, of the set of cuboids, that contains the reconstructed point.

The reconstructed point (e.g., point p) may be moved (e.g., translated), for example, based on the motion vector, to determine the point (e.g., point p'). A position of the reconstructed point (e.g., point p) may be converted to be in the same time frame as points in the reference point cloud frame. A position of the reconstructed point (e.g., point p) may be converted to be in the same time frame as points in the reference point cloud frame, for example, by using/applying the motion vector. The conversion may result in a motion compensated point (e.g., point p'). The point (e.g., point p') may correspond to the position of the reconstructed point (e.g., point p) within the time frame of the reference point cloud frame. The MV field may contain motion vectors representing (e.g., corresponding to) a displacement (or movement, translation) from reference points of the reference point cloud frame towards/to the reconstructed points of the decoded geometry (e.g., decoded geometry 1914). An inverse motion (or inverse of a motion vector) may be applied to (e.g., used for) a reconstructed point to obtain its motion compensated point (or position). For example, the point p may obtain its motion compensated point (or position) p', for example, based on applying/using an inverse of the motion vector mv obtained for the reconstructed point p. For example, the point p' may be obtained based on the following equation: p' = p + (-mv). In some other examples, the MV field may contain motion vectors representing (e.g., corresponding to) the displacement (or movement, translation) from the reconstructed points of decoded geometry (e.g., decoded geometry) 1914 towards/to the reference points of the reference point cloud frame (e.g., reference point cloud frame 1902). In these examples, the motion vector may be (e.g., directly) applied/used to/for a reconstructed point, for example, to obtain its motion compensated point (or position). The motion compensated point or position p' may be obtained, for example, based on the reconstructed point p and the motion vector mv. For example, the point p' may be obtained based on the following equation: p' = p + mv.

At step 2206, one or more reference points (e.g., reference points $N_{pts}$) from a reference point cloud frame may be determined (e.g., selected). The one or more reference points (e.g., reference points $N_{pts}$) from a reference point cloud frame may be determined (e.g., selected), for example, based on distances between the one or more reference points and the point (e.g., point p'). The distance may be, for example, a Manhattan distance, a Euclidean distance, or a Minkowski distance. Step 2206 may include a substep 2208.

At substep 2208, the one or more reference points (e.g., reference points $N_{pts}$) may be determined, for example, based on shortest distances between the one or more reference points and the point (e.g., point p'). The one or more reference points (e.g., reference points $N_{pts}$) may be determined, for example, as the nearest points (e.g., $k$ nearest points) to a position of the point (e.g., point p'). An attribute projection model (e.g., attribute projection model 2104) may be used for determining the one or more reference points (e.g., reference points $N_{pts}$). An attribute projection model (e.g., attribute projection model 2104) may be used for determining (e.g., searching for) the neighboring points (e.g., $k$ neighboring points) of the point (e.g., point p'). The point (e.g., point p') is in the same time frame as the reference point cloud frame.

The nearest (or neighboring) points (e.g., $k$ nearest points) of a point (e.g., point p') may be determined, for example, using a spatial (or space) partitioning data structure. For example, a search (e.g., a k-nearest neighbor search) may be performed to determine the nearest points (e.g., $k$ nearest points) of the point (e.g., point p'). The search may be performed, for example, using the attribute projection model. The number/quantity of (e.g., $k$) neighboring points may be predetermined. The number/quantity of (e.g., $k$) neighboring points may be signaled by the encoder to the decoder in the bitstream. The number/quantity of (e.g., $k$) neighboring points may be reduced, for example, to reduce searching complexity. For example, the number/quantity (e.g., $k$) may be set to one. A (one) reference point, from (or out of) the reference points, that is closest to (or with the shortest distance from) the point (e.g., point p'), may be selected, for example, if the number/quantity (e.g., $k$) is set to one. Attributes of the reference point (e.g., closest to the point p') may be selected and/or used to determine attribute predictors for the reconstructed point (e.g., point p) corresponding to the point (e.g., point p').

Determining (e.g., searching) for the nearest points (e.g., $k$ nearest points) may reduce (or control) computational complexity (e.g., of the search), for example, if the determining (e.g., searching) uses spatial partitioning data structure such as the K-D tree or an octree. A maximum number/quantity of points may be controlled, for example, by using encoding profiles and levels to ensure limited complexity.

Generating the attribute projection model (e.g. attributes prediction model 2104) may include generating a spatial (or space) partitioning tree (e.g., an octree structure). The spatial partitioning tree may correspond to an input point cloud frame. The input point cloud frame may be the reference point cloud frame (e.g., reference point cloud frame 1902). Neighbor(s) (or neighboring point(s), e.g., the nearest neighbor(s)) of reconstructed points may be determined (e.g., searched), for example, based on (e.g., from) the input point cloud frame. An example method will be described herein for determining (e.g., searching for) neighboring points (e.g., nearest neighbors or neighboring points), for example, based on the octree structure. The method for determining neighboring points may be based on other types of spatial partitioning data structures.

The root node of the octree may be associated with a cuboid. The root node of the octree may be associated with a cuboid including points of the reference point cloud frame. The root node of the octree may be associated with a cuboid including (e.g., encompassing, covering) all the points of the reference point cloud frame. Each of the dimensions (e.g., (x, y, z) dimensions) of the cuboid for the root node may be higher than the dimensions of the reference point cloud frame along each of the three axes. Each of the dimensions (e.g., (x, y, z) dimensions) of the cuboid for the root node may be equal to the same power of 2 (two). Nodes of the octree may be recursively generated according to the following construction rules, until a given depth of the octree or a given node size is reached. First, the cuboid for a given node of the octree may be partitioned into a 2x2x2 partition of 8 (eight) non overlapping sub-cuboids. Each sub-cuboid may be half the size of the cuboid along each one of the 3 (three) dimensions, which results in a sub-volume that is one-eighth of the volume of the cuboid. For each one of the 8 sub-cuboids, the sub-cuboid may be determined to be occupied. A child node may be added to the node with the child node being associated with the sub-cuboid, for example, if the sub-cuboid contains at least one point. The process of generating the octree structure may be similar to that used to generate the octree for representing points of a current point cloud frame, as described herein with respect to FIGS. 3-4.

The reference points of the reference point cloud frame and associated attributes of the reference points may be reordered. The reference points of the reference point cloud frame and associated attributes of the reference points may be reordered, for example, based on (e.g., according to) the octree nodes. The reference points of the reference point cloud frame and associated attributes of the reference points may be reordered based on (e.g., according to) the octree nodes, for example, if the octree structure is built. The reordering may generate advantages such as reducing complexity of the nearest neighbor(s) search. The reordering may be performed such that each cuboid may be associated with a range of point indexes represented by a starting point index and an ending point index. In some examples, each range of point indexes for the cuboid may include indexes of all the reference points, and only the reference points, belonging to that cuboid. The node may be associated with the corresponding reference points. The reordering may be performed, for example, using a counting sort algorithm that is recursively applied/used on the nodes. The counting sort algorithm may be applied/used, for example, if the cuboid of a node into sub-cuboids is partitioned to move all the points (with their associated attributes) contained within each one of the sub-cuboids (e.g., eight sub-cuboids) from their actual point index to a point index within one of a quantity of (e.g., 8) ranges of consecutive point indexes with one range for each of the sub-cuboids. Some ranges may be empty if the sub-cuboid is not occupied.

The selection of the one or more reference points for the point (e.g., point p') may be performed, for example, by using a spatial partitioning tree (e.g., the octree structure) to determine (e.g., search for) the closest neighbors (or neighboring points) to the position of the point (e.g., point p'). An example method of selecting the closest or nearest reference point is described herein. This example method may be extended to determining (e.g., searching for) the *k* nearest (or closest) points with *k* being greater than one. The determining (e.g., searching for) the nearest reference point (or nearest neighbor, nearest point, etc.) may include identifying the nodes (e.g., leaf nodes) in the octree that may contain the nearest reference point, and searching the reference points within these nodes to find the nearest reference point with a smallest distance to the point (e.g., point p'). Identifying the nodes (e.g., leaf nodes) may be performed recursively from the root node to the leaf nodes. Identifying the nodes (e.g., leaf nodes) may be performed recursively from the root node to the leaf nodes, for example, by searching for child nodes in the octree that may contain the nearest reference point. Cuboids corresponding to traversed child nodes may be tracked (e.g., sorted), for example, in a queue, based on (e.g., according to) their distance from the position of the point (e.g., point p'). For example, any child node whose corresponding cuboid is determined to be nearer (or closer) to the position of the point (e.g., point p') than cuboids of previously traversed child nodes may be added to the front of a queue of processed nodes, for example, during traversal of child nodes of the octree structure. A maximum possible distance (or maximum distance) $d_{max}$ between the nearest reference point and the position of the point (e.g., point p') may be updated, for example, as child nodes are traversed. The maximum distance $d_{max}$ may be updated, for example, based on a maximum distance between a current cuboid being processed and the position (e.g., position $p_1$) of the point (e.g., point p') being less than the maximum distance $d_{max}$.

A spatial partitioning tree (e.g., the octree) may be searched using traversal of the nodes of the tree. For example, the octree may be searched using a breadth first traversal of the nodes of the octree. An example pseudo code for the breadth first traversal is provided below:

> Set maximum distance $d_{max}$ equal to infinity (or maximum representable distance value);
> Add the root node in a queue 'q';
> Perform the following, for example, if the queue 'q' is not empty and the node in front of the queue is not a leaf node:
>
> > select (e.g., pop out) the node 'n' in front of the queue;
> > for each child node 'c' of the node 'n', perform the following:
> >
> > > compute the minimum distance $c_{min}$ between the position $p_1$ and the boundaries of the cuboid associated with the child node 'c';
> > > if the minimum distance $c_{min}$ is less than or equal to the maximum distance $d_{max}$, perform the following:
> > >
> > > > push the child node at the back of the queue;
> > > > compute the maximum distance $c_{max}$ between the position $p_1$ and the cuboid associated with the child node 'c';
> > > > if the maximum distance $c_{max}$ is lower than the maximum distance $d_{max}$, set $d_{max}$ equal to $c_{max}$.
>
> Set distance 'd' equal to infinity (or maximum representable distance value);
> set the index of the closest neighbor equal to -1;
> Perform the following, for example, if a queue 'q' is not empty:
>
> > select (e.g., pop out) the node 'n' in front of the queue;
> > compute the minimum distance $c_{min}$ between the position $p_1$ and (e.g., the boundaries of) the cuboid associated with the node 'n';
> > if the minimum distance $c_{min}$ is lower or equal to the maximum distance $d_{max}$, perform the following:
> > for each point $p_c$ within the cuboid associated with the node 'n', perform the following:
> >
> > > compute the distance $d_c$ between $p_c$ and $p_1$;

if the distance $d_c$ is lower than the distance d, set d equal to $d_c$ and set the index of the closest neighbor equal to the index of the point $p_c$;

if the distance $d_c$ is lower than the maximum distance $d_{max}$, set $d_{max}$ equal to $d_c$.

The octree may be searched, for example, using a depth first traversal of the nodes of the octree. For example, instead of a breath first traversal, a depth first traversal may be performed on nodes of the octree to identify the leaf nodes and to determine (e.g., compute, update) the maximum distance $d_{max}$.

The maximum distance between a position (e.g., position $p_1$) of a point (e.g., point p') and a cuboid may be determined (e.g., computed), for example, based on the maximum distance between the point position (e.g., position $p_1$) and any one of the vertices of the cuboid. This maximum distance may correspond to the highest (or biggest) possible (e.g., worst case) distance between the point (e.g., point p') and any point within the cuboid.

The minimum distance between a position (e.g., position $p_1$) of a point (e.g., point p') and a cuboid may be 0 (zero). The minimum distance between a point position (e.g., position $p_1$) and a cuboid may be 0 (zero), for example, if the point position (e.g., position $p_1$) is located within the cuboid. In other examples, the minimum distance between a point position (e.g., position $p_1$) and a cuboid may be the minimum distance between the point position (e.g., position $p_1$) and the boundaries (e.g., one of vertices, edges and faces) of the cuboid. The minimum distance may correspond to the smallest possible (e.g., best case) distance between the point position (e.g., position $p_1$) and any point within the cuboid.

The determined (e.g., computed) distances may be any number of suitable distances. For example, the determined (e.g., computed) distances may be the Euclidean distances (i.e., L2 norm), the Manhattan distance (i.e., L1 norm or Taxicab norm), or the Chebyshev distance (i.e., L-infinity or L∞ norm), etc..

The search may be accelerated, for example, based on initializing the maximum distance $d_{max}$. The search may be accelerated, for example, by initializing the maximum distance $d_{max}$ with an already known maximum distance $d_{max}$ between the point position (e.g., position $p_1$) and its nearest neighbor (or neighboring point). For example, the maximum distance $d_{max}$ is not initialized with infinity value or a very large value. The maximum distance $d_{max}$ may be initialized, for example, using the distance $d_{prev}$ between a preceding point position $p_{-1}$ and its nearest neighbor $nn_{-1}$ (previously determined), and also using the distance between the preceding point position $p_{-1}$ and the point position $p_1$. For example, the maximum distance $d_{max}$ may be determined (e.g., computed, calculated) based on the following equations: $d_{prev} = d(nn_{-1}, p_{-1})$ and $d_{max} = d_{prev} + d(p_1, p_{-1})$, where $d(a, b)$ is the distance between a point $a$ and a point $b$. With this determination (e.g., estimation), a single distance value $d_{prev}$ may need to be stored between successive points. Alternatively, a determination (e.g., estimation) of the maximum distance $d_{max}$ may use the following equation: $d_{max} = d(p_1, nn_{-1})$. Such determination may be more accurate, but may require storage between successive points the 3 dimensional coordinates of the nearest neighbor $nn_{-1}$ of the preceding point position $p_{-1}$ (or its index in the point cloud and to access/read the corresponding memory when needed). In another example, a maximum distance $d_{max}$ may be determined (e.g., estimated by using a (fast) depth first descent in the octree to find the (deepest) (occupied) node $c_1$ with the smallest associated cuboid encompassing point position $p_1$. The maximum distance $d_{max}$ may be determined (e.g., estimated) as the maximum distance between the point position $p_1$ and the boundaries of the cuboid associated with the node $c_1$. In yet another example, the maximum distance $d_{max}$ may be determined (e.g., estimated) by taking the minimum value of $d_{max}$ within the previous examples. The closer the estimation of the maximum distance $d_{max}$ will be to the actual distance to the nearest neighbor, the faster will be the search for the nearest neighbor (or nearest reference point).

A table (e.g., table t) containing indexes to the reference points of the reference point cloud frame may be reordered. The table (e.g., table t) containing indexes to the reference points of the reference point cloud frame may be reordered, for example, based on (e.g., according to) the octree structure instead of reordering the points themselves. Reordering based on the octree structure may avoid modifying the initial point order in the reference point cloud. Each cuboid may be associated with a range of indexes of elements within the table (e.g., table t). The range may be represented by and/or may include a start index and an end index. Both the start index and the end index may be indexes of elements within the table (e.g., table t). The elements of the table (e.g., table t) may contain all the indexes to the points belonging to the cuboid, for example, for that range of elements. The table may be associated with the cuboid. The node may be associated with the corresponding points.

At step 2210, an attribute predictor for an attribute of the reconstructed point may be determined. The attribute predictor for an attribute of the reconstructed point may be determined, for example, based on attributes of the selected one or more reference points. An attribute predictor for an attribute of the reconstructed point may be determined, for example, based on averaging the values of attributes of the selected one or more reference points. An attribute predictor for an attribute of a first type of the reconstructed point (e.g., point p) may be determined, for example, based on averaging the values of attributes of the first type of the selected one or more reference points. The values of the attributes of the selected one or more reference points may be averaged, for example, based on (e.g., according to) respective weights determined for the selected one or more reference points. For example, at substep 2212, the attribute predictor may be determined, for example, based on the distances between positions of the nearest points (e.g., k nearest points) and the position of the point. A weight for each of the nearest points (e.g., k nearest points) may be determined, for example, in the weighted average. A weight for each of the nearest points (e.g., k nearest points) may be determined, for example, based on (e.g., according to) a respective distance between each of the nearest points (e.g., k nearest points) and the position of the point (e.g., point p'). The nearest points (e.g., k nearest points) may correspond to the selected one or more reference points. For example, a weight for a selected reference point may be inversely proportional to a distance between the selected reference point and the point (e.g., point p'). At substep 2214, the attribute predictor may be determined for the reconstructed point (e.g., point p), for example, based on the point (e.g., point p') being associated with the reconstructed point (e.g., point p).

Substep 2214 may be performed for each type of attribute to be coded (e.g., encoded or decoded) for the reconstructed point. For example, values of the same type of attributes of the selected one or more reference points may be used to generate the attribute predictor for the same type of attribute of the reconstructed point.

The points of the decoded geometry may be determined to be contained within cuboids. The points of the decoded geometry may be determined to be contained within cuboids (e.g., indicated by occupancy trees), for example, if an encoding and decoding process is performed. The same motion vector may be applied/used to/for more than one point (e.g., all points) in a cuboid, for example, if the attribute projection process is performed. The same motion vector may be applied/used to/for more than one point (e.g., all points) in a cuboid, for example, to reduce the computation required for retrieval of the motion vector for each reconstructed point. All the points in a cuboid may be applied to (e.g., used for) the same motion vector during the attribute projection process such that the computation required for retrieval of the motion vector for each reconstructed point may be kept low. The MV field may include a motion vector for each cuboid. The MV field may include a motion vector for each set of sets of cuboids.

Reconstructed points of the decoded geometry may be motion compensated in batches. Reconstructed points of the decoded geometry may be motion compensated in batches, for example, in sets of points. The attribute projection process may be performed for each set of reconstructed points, for example, to determine attribute predictors for the set of reconstructed points. A set of reconstructed points may contain the points belonging to a cuboid of the decoded geometry. For example, a set of reconstructed points may contain all the points belonging to a cuboid of the decoded geometry. Advantages such as reducing the complexity of looking (or searching) for the neighboring points of each point (e.g., individually) may be achieved.

In at least some technologies, a *k*-nearest neighbor search may need to be performed on reference points of a reference point cloud frame with respect to motion-compensated reconstructed points of the decoded geometry. The *k*-nearest neighbor search may need to be performed on the reference points, for example, to project attributes of the reference points to determine attributes predictors of reconstructed points of a decoded geometry of a current point cloud frame. The *k*-nearest neighbor search may be performed to find a set of reference points ($N_{pts}$) that are nearest (in terms of distance) to the reconstructed point and whose attributes values may be projected to determine the attribute predictors, for example, to determine attribute predictors for attributes of a reconstructed point of the current point cloud frame. The *k*-nearest neighbor search may be facilitated using an attributes projection model (e.g., attributes projection model 2104) that groups sets of reference points using a spatial-partitioning tree. Recursively processing cuboids indicated by the spatial-partitioning tree and checking reference points within selected cuboids to determine the *k*-nearest neighbor search may remain too computationally expensive and slow, especially for practical applications where point cloud compression is needed in real time.

Examples described herein are related to an approach for approximating the *k*-nearest neighbor search to find a set of reference points that are representative of the true *k* nearest reference points to determine attribute predictors for reconstructed points of a decoded geometry of a current point cloud frame. By using (e.g., applying) a tunable approximation scheme, computational complexity of the compression of the attributes of point clouds may be significantly reduced and slight decreases in quality of the attributes projection may be induced.

An approximate k-nearest neighbor search may be used (e.g., applied) instead of the k-nearest neighbor search used in at least some implementations of attributes projection. A degree of approximation may be controlled by approximation information signaled in the bitstream from the encoder to the decoder. The approximation information may indicate, for example, how the k reference points representing an approximation of the k-nearest reference points are to be selected.

A plurality of approximation schemes may be implemented to select the k reference points. The approximation information may indicate which approximation scheme of the plurality of approximation schemes are used (e.g., applied) for determining attributes predictors for the decoded geometry of the current point cloud frame.

FIG. 23 shows an example method for finding reference points. More specifically, FIG. 23 shows an example process 2300 for a method of finding k reference points, from reference points of a reference point cloud frame, that approximate the *k*-nearest reference points of a reconstructed point using an approximate k-nearest neighbor search. Attribute values of these k reference points shown as k approximately nearest points 2330 may be used to determine attribute predictors for attributes of the reconstructed point, as explained herein with respect to FIG. 19 and FIGS. 21-22. The reference point cloud frame may refer to reference point cloud frame 1902 of FIG. 21. The reference point cloud frame may refer to reference point cloud frame 1906 of FIG. 19.

Operations of the example method described herein with respect to FIG. 23 may replace step 2208 and/or step 2206 of FIG. 22. The selected one or more reference points described in FIG. 22 may refer to the k selected reference points. The attribute predictor may be determined, for example, based on distances between positions of the $k$ approximately nearest points and the position of the point. The attribute predictor may be determined based on distances between positions of the $k$ approximately nearest points and the position of the point, instead of determining the attribute predictor, for example, based on distances between positions of the $k$ nearest points and the position of the point at step 2212. The example method described herein with respect to FIG. 23 may be performed similarly at the encoder and the decoder. Differences in operations between the encoder and the decoder are separately described herein.

At step 2320, a model m for reference points 2310 may be used to find, from reference points within the model m, k approximately nearest point(s) 2330 to point position $p_1$ 2340 of the reconstructed point. Operations of step 2320 may be performed for each reconstructed point to select k approximately nearest point(s) 2330 to determine attributes predictors for each reconstructed point.

Finding the k approximately nearest point(s) 2330 to point position $p_1$, at step 2320, may be parameterized by approximation information 2360. Approximation information 2360 may specify one or more parameters that control a degree/level of approximation, how the search is to be performed, and/or an indication of an approximation scheme from a plurality of approximation schemes. The encoder, at the encoder side for example, may determine these one or more parameters and may encode the approximation information 2360 into the bitstream 2370. The decoder, at the decoder side, may decode the approximation information 2360 from the bitstream 2370.

The approximation information 2360 may include the value of k that indicates the number of approximately nearest point(s) to find from the model m of reference points 2310. The approximation information 2360 may include one or more parameters that specifies how model m for reference points 2310 is to be constructed from the reference points of the reference point cloud frame. The approximation information 2360 may include a parameter that indicates a depth to be used, for example, if building the space partitioning data structure (e.g., an octree or a K-D tree) of the model m for reference points 2310. The approximation information 2360 may include a parameter that indicates the leaf node size (or dimensions) used to build the space partitioning tree.

One or more of the parameters in approximation information 2360 may be encoded into and/or decoded from a parameter set. The parameter set may include a sequence parameter set for a sequence of point cloud frames, a frame parameter set specific to the current point cloud frame, or attributes parameter sets related to attributes for the current point cloud frame. One or more of the parameters in approximation information 2360 may be encoded into and/or decoded from an attribute slice header.

One or more of the parameters in approximation information 2360 may be omitted from being signaled in bitstream 2370. These one or more parameters may be configured at the encoder and/or decoder. The parameters may be based on, for example, a coding profile (e.g., an encoding profile or an encoding level) that is signaled in the bitstream. The coding profile may be associated with a set of parameters including one or more parameters in approximation information 2360.

The value of k, for example, may be fixed to 1. The leaf node size, for example, may be fixed at both the encoder and decoder to a specific dimensions of a cuboid such as a 2x2x2 cuboid, a 4x4x4 cuboid, or an 8x8x8 cuboid.

The example method described herein with respect to FIG. 19 may be used to generate attribute predictors for reconstructed points of a decoded geometry. The model m for reference points 2310 may be generated from reference points from a first reference point cloud corresponding to (e.g., the same as) a reference point cloud frame for attributes such as reference point cloud frame 1906, reference point cloud frame for attributes 1741, and reference point cloud frame for attributes 1821.

The example method descried herein with respect to FIG. 21 may be used to generate attribute predictors for reconstructed points of a decoded geometry, and the model m for reference points 2310 may be generated from reference points from a second reference point cloud corresponding to (e.g., the same as) a reference point cloud frame 1902 of FIG. 21. The model m for reference points 2310 may be the same, for example, as the attributes projection model 2104. Model m for reference points 2310 may be a space partitioning data structure (or model), for instance a K-D tree or an octree, as previously described herein with respect to FIG. 21. The approach to find k approximately nearest point(s) 2330 to point position $p_1$ 2340 with model m at step 2320 may differ from the search process described herein with respect to FIGS. 19 and 21-22 in either (or both) of how model m for reference points 2310 is generated and/or selection of reference points that approximate the $k$-nearest points to point position $p_1$ 2340..

The model m for reference points 2310 may be a model specific to approximate nearest neighbor search. Reference points of the reference point cloud frame may be bucketed into a plurality of buckets, for example, using locality-sensitive hashing (LSH). Finding the k approximately nearest point(s) 2330 may include identifying a bucket, of the plurality of buckets, with LSH and finding points within the bucket nearest or approximately nearest to point position $p_1$ 2340. The model m for reference points 2310 may group the reference points into a plurality of clusters. Clustering schemes, for example, vector quantization techniques may be used/applied. The mode m of clusters of points may be used, for example, to determine (e.g., identify) a cluster vector quantization of $p_1$ to find k nearest point(s) or k approximately nearest point(s) 2330 within the cluster with respect to point position $p_1$ 2340.

The example method described herein with respect to FIG. 19 may be used to generate attribute predictors for reconstructed points of a decoded geometry. The model m for reference points 2310 may be generated from reference points of a third reference point cloud frame constructed, for example, based on the first reference point cloud frame (e.g., reference point cloud frame 1906). The third reference point cloud frame may contain less points than the first reference cloud frame and represents an approximation of the points in the first reference point cloud frame.

of the example method described herein with respect to FIG. 21 may be used to generate attribute predictors for reconstructed points of a decoded geometry, and the model m for reference points 2310 may be generated from reference points of a fourth reference point cloud constructed, for example, based on the second reference point cloud (e.g., reference point cloud frame 1902 of FIG. 21). The fourth reference point cloud frame may contain less points than the second reference cloud frame and represents an approximation of the points in the second reference point cloud frame

The third (respectively fourth) reference point cloud frame may be generated from a subset of reference points selected from the first (respectively second) reference point cloud frame. The subset of points may be obtained, for example, by subsampling the first (respectively second) reference point cloud frame, for example, by taking one point every $N_0$ points from the first (respectively second) reference point cloud frame. The subsampling may be performed, for example, in decoding point order of the reference points. The number $N_0$ may be in the range from 2 to 32. The value of $N_0$ may be included in a parameter in approximation information 2360.

The third (respectively fourth) reference point cloud frame may be generated by constructing new points, for example, based on the first (respectively second) reference point cloud. The new points may be obtained, for example, by averaging the position of $N_1$ neighboring points of the first (respectively second) reference point cloud. The $N_1$ successive points may be, for example, in Morton order, and by associating new attributes to the new points. The new attributes may be obtained, for example, by averaging the attributes values of the $N_1$ neighboring points. The value of $N_1$ may be in the range from 2 to 32. The value of $N_1$ may be included in a parameter in approximation information 2360.

The construction of the model may be accelerated, as well as the search for the k approximately nearest points(s) 2330, by generating model m for reference points 2310 that contains less points than that of the reference point cloud frame. A k-nearest neighbor search may be performed at step 2320 to find the k nearest points within the third (respectively fourth) reference point cloud frame, which approximates the geometry of the first (respectively second) reference point cloud frame, in which model m for reference points 2310 may be generated from reference points of the reference point cloud frame. The searched k nearest points, due to the use of an approximation of the reference points of the reference point cloud frame, may represent the k approximately nearest points 2330 relative to the original reference points of the reference point cloud frame. At step 2320 of FIG. 23, a k approximate nearest neighbor search may be performed on the third (respectively, fourth) reference point cloud frame to further accelerate the searching process.

The model m for reference points 2310 may contain a significantly reduced number of points as compared to the reference point cloud frame used to build it. The number of points may be reduced, for example, during the construction of the model. The number of points may be reduced during the construction of the model, for example by subsampling or by averaging position of a subset (or all) neighboring points and of their attributes located inside of a same partition, tree (leaf) node, bucket, or cluster. By reducing the number of points within the model m, some noise may be removed (for instance, if averaging points and attributes), which may result in reducing the number of computations to find k approximately nearest point(s) 2330.

The model m for reference points 2310 may contain (or be associated with) the same points as the reference point cloud frame. The model m for reference points 2310 may contain the same number of points, for example, as that of the reference point cloud frame. The number of points considered from the model m may be reduced, for example, if finding k approximately nearest point(s) 2330. Only a subset of the points associated with a partition, a tree node, a bucket or a cluster may be considered, and compared to the point position $p_1$ 2340, for example, if a nearest neighbor search is performed within the partition, the tree node, the bucket or the cluster, etc. This subset may be selected, for example, by comparing positions of sampled points to point position $p_1$ 2340. One point over each successive $N_2$ points may be selected and whose position may be compared to position $p_1$ 2340 to determine the k approximately nearest points 2330. The value of $N_2$ may be in the range from 2 to 32. The value of $N_2$ may be signaled in a parameter of the approximation information 2360. The generation process can be accelerated, for example, by using the reference points in the reference point cloud frame as the model m for reference points 2310. The generation process can be accelerated because positions of the reference points of the reference point cloud frame are already stored in memory, and likely cached, so no further allocation/copy of positions of reference points is needed.

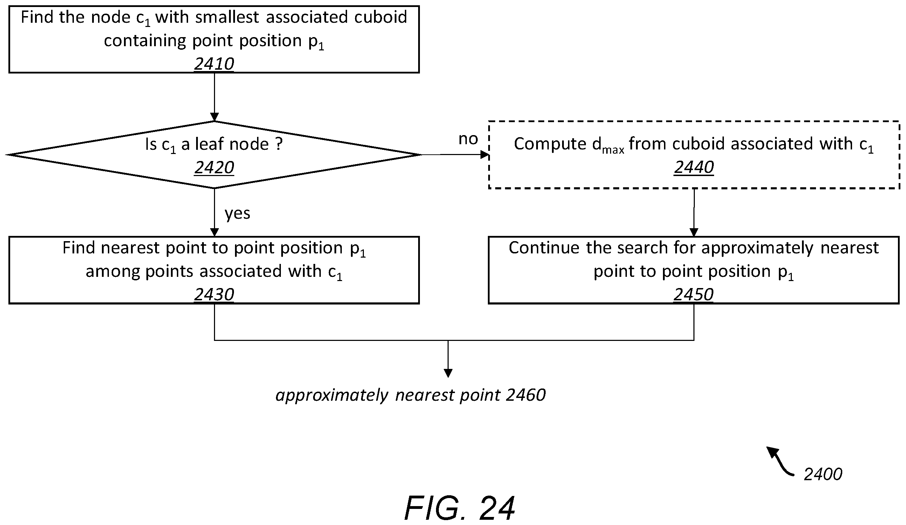

FIG. 24 shows an example method for finding approximately nearest points. More specifically, FIG. 24 shows a flowchart 2400 of an example method for finding approximately nearest points, from reference points corresponding to reference points of a reference point cloud frame, to a point position $p_1$ of a reconstructed point, for example, if an attributes projection process occurs. Flowchart 2400 may be an example of operations performed at step 2320 of FIG. 23. Operations of flowchart 2400 may be described with respect to finding one approximately nearest point 2460 (also referred to a nearest neighboring point) to point position p1 of the reconstructed point using a model m for reference points (e.g., model m for reference points 2310) that is a space partitioning data structure such as a tree (e.g., a K-D tree or an octree). The tree may include nodes indicating cuboids that spatially partition a volume of the reference point cloud frame and indicates sub-volumes associated with the reference points contained by respective cuboids. The operations of flowchart 2400 may be extended and iterated to find k approximately nearest points and the approximately nearest point 2460 may be one of the k approximately nearest points 2330 of FIG. 23. Operations of flowchart 2400 may relate to finding the approximately nearest point 2460, which is performed similarly (e.g., identically) at the encoder and the decoder.

At step 2410, a node $c_1$ with the smallest associated cuboid containing point position $p_1$ may be found in a space partitioning data structure. The space partitioning data structure may be a tree model (e.g., model m for reference points 2310). At step 2420, it may be determined whether node $c_1$ is a leaf node in the tree model. The nearest points to point position $p_1$ among the points associated with node $c_1$ may be found, for example, if node c1 is a leaf node, at step 2430. Distances between the points (reference points) contained in the node $c_1$ and point position $p_1$ may be compared, for example, as described herein with respect to FIG. 21. The point with the smallest distance may be determined as the approximately nearest point 2460.

At step 2440, a maximum distance $d_{max}$ between point position $p_1$ and its nearest neighbor may be determined (e.g., computed). The maximum distance $d_{max}$ may be determined from the maximum distance between the point position $p_1$ and the cuboid associated with the node $c_1$, for example, if node $c_1$ is not a leaf node. The maximum distance may be determined, for example, between the point position $p_1$ and the boundaries (e.g., vertex, edge, or face) of the cuboid. Step 2440 may be optionally performed as shown in dotted lines.

At step 2450, the search for an approximately nearest point 2460 to point position $p_1$ may continue and may use the computed $d_{max}$.

At step 2410, a depth first descent in the space partitioning tree may be performed. The depth first descent in the space partitioning tree may be performed to find the (deepest) node $c_1$ with smallest associated cuboid containing point position $p_1$. This depth first descent may be performed, for example, by processing the nodes as follows. Starting from a current node being the root node, if the current node is a leaf node, the current node is the node $c_1$ and the step 2410 is finished. One of the child nodes of the current node may be iterated on by using it as the current node, for example, if the child node is associated with a cuboid containing the point position $p_1$. The current node may be the node $c_1$, and the step 2410 is finished, for example, if none of the child nodes of the current node is associated with a cuboid containing the point position $p_1$.

At step 2450, the approximately nearest point 2460 may be found among the child nodes of $c_1$. The nearest point to point position $p_1$ among the child nodes of $c_1$ may be determined using the previously described algorithm for finding the nearest neighbor with a breadth first search in the space partitioning tree, as described herein with respect to FIG. 22. The queue q may be initialized with the child nodes of $c_1$, instead of initializing the queue q with the root node of the tree, and the value of $d_{max}$ may be set to the value of $d_{max}$ computed from $c_1$.

The searching process described herein with respect to FIG. 24 may use a depth first search and possibly a bread first search to determine approximately nearest point 2460. Step 2410 relates to using a depth first search to first identify a node $c_1$ from a space partitioning tree that partitions a volume containing reference points from which the approximately nearest point 2460 is determined.. A breadth first search may be performed, for example, based on the node $c_1$ not being a leaf node. The breadth first search may be performed on children nodes of node $c_1$, based on the node $c_1$ not being a leaf node, to determine approximately nearest point 2460.

The operations of described herein with respect to FIG. 24 may be further enhanced to slightly improve the quality of the approximate nearest neighbor, resulting in higher quality of the projected attribute, at a slight computational cost. The search may be performed from an ancestor node at step 2450, instead of performing a search for the nearest neighbor from node $c_1$ (and so in in its child nodes), for example, if the node $c_1$ is not a leaf node. The ancestor may be the parent node or the grand-parent node of node $c_1$. Searching from an ancestor node may be more relevant, for example, if the distance between the point position $p_1$ and any cuboid associated with each child nodes of $c_1$ is too high (e.g. higher than some threshold), because the node $c_1$ not being a leaf node means that the point position $p_1$ is not contained by any child node of $c_1$.

A search for a nearest point at step 2450 may be performed from an ancestor node of $c_1$ to increase the quality without a significant increase in complexity, for example, if a first condition is met. The first condition may be based on, for example, the distance between the point position $p_1$ and some boundaries of the cuboid associated to $c_1$ and/or some boundaries of the cuboids associated to the child nodes of $c_1$ and/or of its ancestors.

The first condition may be met if $d_{max}$ is higher than a threshold $T_0$. The ancestor node may be the parent node, the distances to point position $p_1$ may be computed using a distance metric (e.g., L1 norm), and the threshold $T_0$ may be equal to a multiple (e.g., 2 or 3) of the minimum sizes (in any of its 3 dimensions) of the cuboid associated the node $c_1$.

A distance $d_{min}$ may be determined (e.g., computed) as the minimum distance between the point position $p_1$ and the boundaries of the cuboid associated with node $c_1$. The first condition may be met, for example, if $d_{min}$ is lower than a threshold $T_1$. The ancestor node may be the parent node, the distances to point position $p_1$ may be computed using a distance metric (e.g., L1 norm), and the threshold $T_1$ may be equal to one half, one fourth, or one eighth of the minimum sizes (in any of its 3 dimensions) of the cuboid associated the node $c_1$.

The nearest point to point position $p_1$, with these enhancements, may be searched in sibling nodes of $c_1$ (i.e., some neighbors of $c_1$), for example, if the sibling nodes exist and if the point position $p_1$ is somewhat closer to the boundaries of $c_1$ rather than to its center.

Using an space partitioning tree such as an octree as model m for reference points 2310, a distance $d_{ext}$ may be determined (e.g., computed) as the distance between the point position $p_1$ and the vertex $v_0$ of the cuboid associated with node $c_1$ which is also a vertex of the cuboid associated to the parent node of $c_1$. The first condition may be met, for example, if the distance $d_{ext}$ is higher than a threshold $T_2$. The ancestor node may be the parent node, the distances to point position $p_1$ may be computed using the distance metric (e.g., L1 norm), and the threshold $T_2$ may be equal to a multiple (e.g., 2 or 3 times) of the minimum sizes (in any of its 3 dimensions) of the cuboid associated the node $c_1$.

A distance $d_{int}$ may be determined (e.g., computed) as the distance between the point position $p_1$ and the vertex of the cuboid associated with node $c_1$ which is in the center of the cuboid associated to the parent node of $c_1$. The first condition may be met if $d_{int}$ is lower than a threshold $T_3$. The ancestor node may be the parent node, the distances to point position $p_1$ may be determined (e.g., computed) using distance metric (e.g., L1 norm), and the threshold $T_3$ may be equal to one half, one fourth, or one eighth of the minimum sizes (in any of its 3 dimensions) of the cuboid associated the node $c_1$. The nearest point to point position $p_1$ may be searched in sibling nodes of $c_1$, if the sibling nodes exist and if the point position $p_1$ is somewhat closer to the center of the parent node of $c_1$ rather than to its boundaries.

The search for a nearest point in step 2450 may be performed from a grandparent of node of node $c_1$, using the space partitioning tree as model m for reference points 2310 to further increase the quality with minimal complexity increase, for example, if a second condition is met. The second condition may be based on, for example, the distance between the point position $p_1$ and some boundaries of the cuboid associated to $c_1$ and/or some boundaries of the cuboids associated to the ancestor nodes of $c_1$. The second condition is met, for example, if the distance $d_{ext}$ is lower than a threshold $T_4$ and the vertex $v_0$ is in the center of the cuboid associated to the grandparent node of $c_1$. The second ancestor node may be the grandparent node, the distances to point position $p_1$ may be computed using a distance metric (e.g., L1 norm), and the threshold $T_4$ may be equal to one half, one fourth, or one eighth of the minimum sizes (in any of its 3 dimensions) of the cuboid associated the node $c_1$.

The nearest point to point position $p_1$ may be searched in sibling nodes of the parent node of $c_1$, for example, if the sibling nodes exist and if point position $p_1$ is somewhat close to the center of the grandparent node of $c_1$. The thresholds $T_0$, $T_1$, $T_2$, $T_3$, and/or $T_4$ may be signaled in one or more parameters in the approximation information 2360.

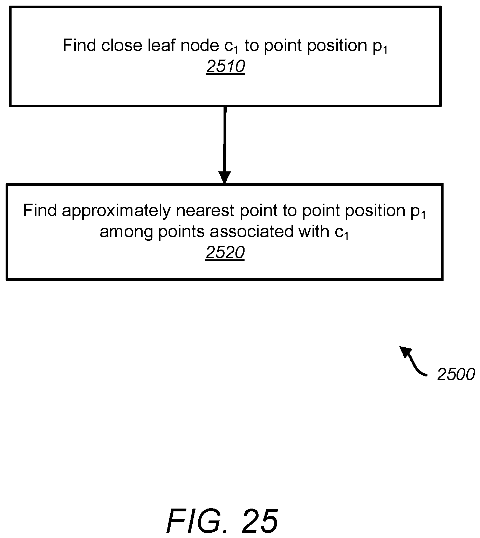

FIG. 25 shows an example method for finding approximately nearest points. More specifically, FIG. 25 shows a flowchart 2500 of an example method for finding approximately nearest points, from reference points corresponding to reference points of a reference point cloud frame, to a point position $p_1$ of a reconstructed point, for example, if an attributes projection process occurs. Flowchart 2500 may be an example of operations performed at step 2320 of FIG. 23. Operations of flowchart 2500 may be described herein with respect to finding one approximately nearest point (also referred to a nearest neighboring point) to point position p1 of the reconstructed point using a model m for reference points (e.g., model m for reference points 2310) that is a space partitioning data structure such as a tree (e.g., a K-D tree or an octree). The tree may include nodes indicating cuboids that spatially partition a volume of the reference point cloud frame and indicates sub-volumes associated with the reference points contained by respective cuboids. The operations of flowchart 2500 may be extended and iterated to find k approximately nearest points and the approximately nearest point may be one of the k approximately nearest points 2330 of FIG. 23. Operations of flowchart 2500 may relate to finding the approximately nearest point, which is performed similarly (e.g., identically) at the encoder and the decoder.

At step 2510, a close leaf node $c_1$ to point position $p_1$ may be found. The close leaf node $c_1$ may be determined, for example, based on the minimum distance between the point position $p_1$ and the cuboid associated with the leaf node. In some examples, at step 2510, a leaf node $c_1$ close to point position $p_1$ may be found. The minimum distance between the point position $p_1$ and the cuboid may be determined/computed, for example, based on the boundaries of the cuboid. The minimum distance may be determined to be 0, for example, if the point position $p_1$ is contained in the cuboid. Otherwise, the minimum distance may be determined between the point position p1 and the boundaries of the cuboid (e.g., vertices, edges, and/or faces of the cuboid).

At step 2520, the nearest point to point position $p_1$ may be found among the points associated with $c_1$. This nearest point may be one of the k approximately nearest points 2330 of FIG. 23.

Operations of step 2510 may be similar to operations of steps 2410, 2420, and 2430 as described herein with respect to FIG. 24, and at step 2450, the approximately nearest point 2460 may be determined by continuing the descent in the space partitioning tree until the node $c_1$ is a leaf node. This descent in the space partitioning tree may be performed by taking, at each subsequent depth in the space partitioning tree, a new node $c_1$ which may be the closest child node of current node $c_1$ to point position $p_1$. In some examples, a new node $c_1$ may be a leaf node $c_1$ close to point position $p_1$. The closest child node may be determined, for example, based on the minimum distance between the point position $p_1$ and the cuboids associated with each child node. Operations of step 2520 may be used for (e.g., applied to) node $c_1$, for example, if the node $c_1$ is a leaf node. The nearest points to point position $p_1$ among the points associated with the leaf node $c_1$ may be

used as the approximately nearest points 2330.

Operations of flowchart 2500 may speed up the operations of the example method discussed herein with respect to FIG. 24, but may result in less close nearest neighboring points. As a result, the quality of the projected attributes determined from these less close nearest neighboring points may be reduced, which results in a slight decrease in compression efficiency. However, the reduction in complexity and processing time may be worth the tradeoff in slight increases in compression bitrate.

The encoder and decoder may support multiple approximation schemes used to determine k approximately nearest points, such as the schemes and examples described herein with respect to FIGS. 23-25, with each approximation scheme providing a different tradeoff between complexity and prediction quality (related to compression efficiency). Each of these approximation schemes may be associated with and identified by an index. This index may be signaled in a parameter of approximation information 2360. The encoder may, for example, select one scheme from the plurality of approximation schemes best suited for a target application, and may encode an index identifying the selected scheme in the bitstream. The decoder may decode the index from the approximation information received in the bitstream and use (e.g., apply) the indicated approximation scheme to predict attributes of reconstructed points of the decoded geometry of a current point cloud frame.

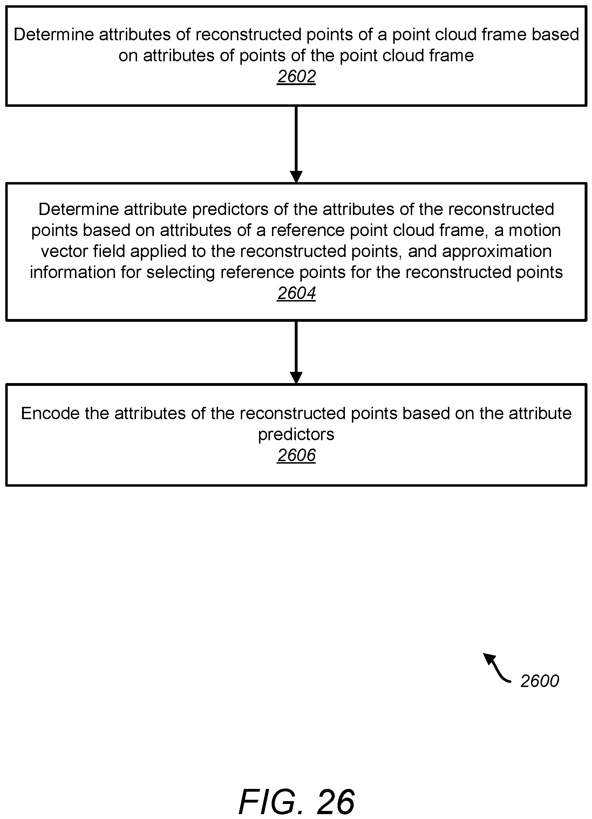

FIG. 26 shows an example method for encoding attributes of a point cloud frame. More specifically, FIG. 26 shows a flowchart 2600 of an example method for encoding attributes of the point cloud frame (e.g., a current point cloud frame) based on attribute predictors. The method described herein with respect to FIG. 26 may be implemented by an encoder, such as encoder 114 as described herein with respect to FIG. 1. The example method described herein with respect to FIG. 26 may correspond to the example method described herein with respect to FIG. 17.

At step 2602, an encoder (e.g., a geometry encoder) may determine attributes of reconstructed points of a point cloud frame. The encoder may determine attributes of reconstructed points of the point cloud frame, for example, based on attributes of points of the point cloud frame. The reconstructed points are of a reconstructed geometry of the point cloud frame and the points of the point cloud are of a geometry of the point cloud. The determining the attributes of the reconstructed points may include mapping attributes of the geometry of the point cloud frame to the reconstructed geometry. The attribute predictors may be determined further, for example, based on the mapped attributes. The attributes may be colors and the mapped attributes are determined, for example, based on recoloring. The mapped attributes for each point of the reconstructed geometry may be determined, for example, based on a nearest neighbor search of nearest points, from the geometry of the point cloud frame, to the point of the reconstructed geometry.

At step 2604, the encoder may determine attribute predictors of the attributes of the reconstructed points. The encoder may determine attribute predictors of the attributes of the reconstructed points, for example, based on attributes of a reference point cloud frame, a motion vector field used for (e.g., applied to) the reconstructed points, and approximation information for selecting reference points for the reconstructed points. The reference point cloud frame may be an already-coded reference point cloud frame. The attribute predictors may be determined according to the processes described herein with respect to FIG. 21 and FIG. 22.

Attributes of one or more reference points, for each reconstructed point of the reconstructed points, selected from a model, corresponding to the reference point cloud frame, may be projected (e.g., used) to determine attribute predictors for the reconstructed point, as explained herein with respect to FIGS. 22-25. The model may be a space partitioning tree generated from the reference point cloud frame. The model may be a space partitioning tree generated from a second reference point cloud frame approximating the geometry of the reference point cloud frame. The second reference point cloud frame may be determined, for example, by subsampling reference points of the reference point cloud frame. The second reference point cloud frame may be determined, for example, by averaging sets of reference points of the reference point cloud frame.

The one or more selected reference points may be a k approximately nearest points to the position of the reconstructed point, as explained herein with respect to FIGS. 23-25. These one or more selected reference points may be selected to approximate the true k-nearest reference points to the reconstructed point.

The approximation information includes one or more parameters that may specify how the approximately nearest points are to be determined, as explained herein with respect to FIGS. 23-25. The approximation information may be the approximation information 2360 of FIG. 23. The encoder may encode the approximation information in the bitstream to enable the decoder to use (e.g., apply) the same one or more parameters used by the encoder in selecting the approximately nearest points.

At step 2606, the encoder may encode the attributes of the reconstructed points. The encoder may encode the attributes of the reconstructed points, for example, based on the attribute predictors. The encoder may determine residual attributes, for example, based on differences between the attributes of the reconstructed points and the attribute predictors, and encodes the residual attributes in a bitstream.

Encoding the residual attributes may include determining transformed coefficients, for example, based on using (e.g., applying) an intra transform to the residual attributes. Encoding the residual attributes may include encoding the transformed coefficients corresponding to (e.g., representing or indicating) the residual attributes in the bitstream.

Encoding the residual attributes may include quantizing the transformed coefficients such that the quantized transformed coefficients are entropy encoded.

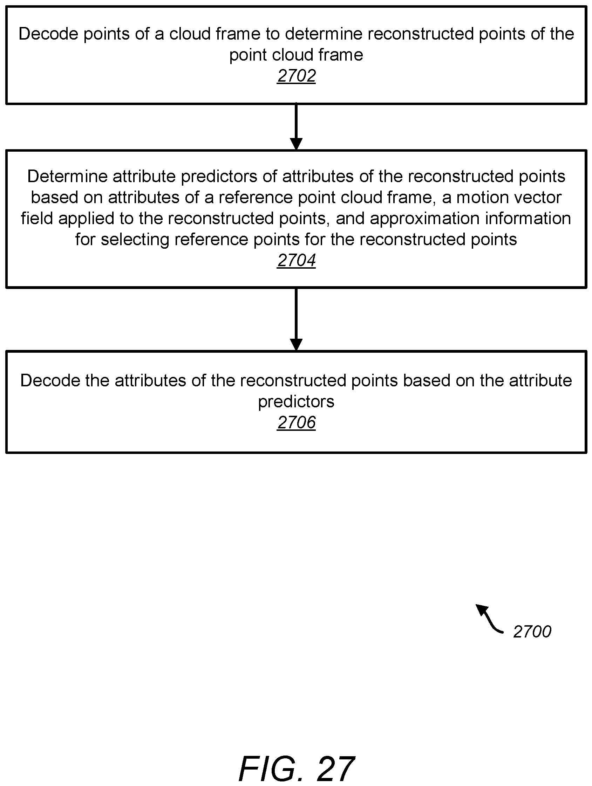

FIG. 27 shows an example method for decoding attributes of a point cloud frame. More specifically, FIG. 27 shows a flowchart 2700 of an example method for decoding attributes of a point cloud frame (e.g., a current point cloud frame) based on attribute predictors. The example method described herein with respective to 27 may be implemented by a decoder, such as decoder 120 as described herein with respective to FIG. 1. The example method described herein with respect to FIG. 27 may correspond to the example method described herein with respect to FIG. 18. The decoder may comprise a geometry decoder, an attributes decoder, and an attributes projector/determiner, which are represented in process 1800.

At step 2702, a decoder (e.g., a geometry decoder) may decode points of a cloud frame to determine reconstructed points of the point cloud frame. The points may be from a geometry of the point cloud frame. The decoder may decode geometry information of the point cloud from a bitstream. The decoded geometry may correspond to the geometry of the point cloud frame reconstructed (e.g., encoded and then decoded) at an encoder. The decoder may decode, from a bitstream, residual attributes indicating differences between the attributes of the reconstructed geometry and the attribute predictors to decode the attributes associated with the reconstructed geometry. The decoded attributes may be determined, for example, based on adding the attribute predictors and the decoded residual attributes.

Decoding the residual attributes may comprise entropy decoding, from the bitstream, transformed coefficients corresponding to (e.g., representing or indicating) the residual attributes. The residual attributes may be determined, for example, based on using (e.g., applying) an inverse intra transform to the decoded transformed coefficients. Decoding the residual attributes may further comprise dequantizing the transformed coefficients, the residual attributes being determined by using (e.g., applying) the inverse intra transform to the dequantized transformed coefficients.

At step 2704, the decoder may determine attribute predictors of attributes of the reconstructed points. The decoder may determine attribute predictors of attributes of the reconstructed points, for example, based on attributes of a reference point cloud frame, a motion vector field used for (e.g., applied to) the reconstructed points, and approximation information for selecting reference points for the reconstructed points. The reference point cloud frame for attributes may be an already-coded reference point cloud frame. Step 2704 may include the same operations as those in step 2604 of FIG. 26. Examples of the parameters contained in the approximation information may be described with respect to FIGS. 22-25. The approximation information may be decoded from the bitstream. At step 2706, the decoder may decode the attributes of the reconstructed points. The decoder may decode the attributes of the reconstructed points, for example, based on the attribute predictors.

As explained herein with respect to FIGS. 17, 18, 22, and 23, attributes predictors may be determined reciprocally (e.g., independently and identically) at the encoder and decoder. The attribute predictors may be determined, for example, based on projecting attributes of a reference point cloud frame to reconstructed points of the point cloud frame with a motion vector (MV) field applied.

The attribute predictors may comprise a respective attribute predictor, for each respective point of reconstructed points of the reconstructed/decoded geometry, that is, for example, based on a projected attribute, of the projected attributes, corresponding to the point.

An indication (e.g., an index or ID) of the already-coded reference point cloud frame may be signaled in the bitstream (e.g., encoded by the encoder and decoded by the decoder). The decoder may decode this indication to select an already-coded point cloud frame as the reference point cloud frame from which attribute predictors are determined to decode attributes of the current point cloud frame.

As explained herein, the attributes predictors may be used to determine residual attributes (at the encoder) and combined with decoded residual attributes (at the decoder) to decode (e.g., reconstruct) attributes at the decoder. The residual attributes may be encoded and decoded, for example, based on an intra transform scheme (e.g., a prediction with lifting (pred-lift) transform scheme, an Adaptive-DCT and corresponding inverse A-DCT, a RAHT transform and a corresponding inverse RAHT transform of a RAHT scheme, a Haar transform and a corresponding inverse Haar transform).

FIG. 28 shows an example computer system in which examples of the present disclosure may be implemented. For example, the example computer system 2800 shown in FIG. 28 may implement one or more of the methods described herein. For example, various devices and/or systems described herein (e.g., in FIG. 1) may be implemented in the form of one or more computer systems 2800. Furthermore, each of the steps of the flowcharts depicted in this disclosure may be implemented on one or more computer systems 2800.

The computer system 2800 may comprise one or more processors, such as a processor 2804. The processor 2804 may be a special purpose processor, a general purpose processor, a microprocessor, and/or a digital signal processor. The processor 2804 may be connected to a communication infrastructure 2802 (for example, a bus or network). The computer system 2800 may also comprise a main memory 2806 (e.g., a random access memory (RAM)), and/or a secondary memory 2808.

The secondary memory 2808 may comprise a hard disk drive 2810 and/or a removable storage drive 2812 (e.g.,

a magnetic tape drive, an optical disk drive, and/or the like). The removable storage drive 2812 may read from and/or write to a removable storage unit 2816. The removable storage unit 2816 may comprise a magnetic tape, optical disk, and/or the like. The removable storage unit 2816 may be read by and/or may be written to the removable storage drive 2812. The removable storage unit 2816 may comprise a computer usable storage medium having stored therein computer software and/or data.

The secondary memory 2808 may comprise other similar means for allowing computer programs or other instructions to be loaded into the computer system 2800. Such means may include a removable storage unit 2818 and/or an interface 2814. Examples of such means may comprise a program cartridge and/or cartridge interface (such as in video game devices), a removable memory chip (such as an erasable programmable read-only memory (EPROM) or a programmable read-only memory (PROM)) and associated socket, a thumb drive and USB port, and/or other removable storage units 2818 and interfaces 2814 which may allow software and/or data to be transferred from the removable storage unit 2818 to the computer system 2800.

The computer system 2800 may also comprise a communications interface 2820. The communications interface 2820 may allow software and data to be transferred between the computer system 2800 and external devices. Examples of the communications interface 2820 may include a modem, a network interface (e.g., an Ethernet card), a communications port, etc. Software and/or data transferred via the communications interface 2820 may be in the form of signals which may be electronic, electromagnetic, optical, and/or other signals capable of being received by the communications interface 2820. The signals may be provided to the communications interface 2820 via a communications path 2822. The communications path 2822 may carry signals and may be implemented using wire or cable, fiber optics, a phone line, a cellular phone link, an RF link, and/or any other communications channel(s).

A computer program medium and/or a computer readable medium may be used to refer to tangible storage media, such as removable storage units 2816 and 2818 or a hard disk installed in the hard disk drive 2810. The computer program products may be means for providing software to the computer system 2800. The computer programs (which may also be called computer control logic) may be stored in the main memory 2806 and/or the secondary memory 2808. The computer programs may be received via the communications interface 2820. Such computer programs, when executed, may enable the computer system 2800 to implement the present disclosure as discussed herein. In particular, the computer programs, when executed, may enable the processor 2804 to implement the processes of the present disclosure, such as any of the methods described herein. Accordingly, such computer programs may represent controllers of the computer system 2800.

Features of the disclosure may be implemented in hardware using, for example, hardware components such as application-specific integrated circuits (ASICs) and gate arrays. Implementation of a hardware state machine to perform the functions described herein will also be apparent to persons skilled in the relevant art(s).

FIG. 29 shows example elements of a computing device that may be used to implement any of the various devices described herein, including, for example, a source device (e.g., 102), an encoder (e.g., 114), a destination device (e.g., 106), a decoder (e.g., 120), and/or any computing device described herein. The computing device 2930 may include one or more processors 2931, which may execute instructions stored in the random-access memory (RAM) 2933, the removable media 2934 (such as a Universal Serial Bus (USB) drive, compact disk (CD) or digital versatile disk (DVD), or floppy disk drive), or any other desired storage medium. Instructions may also be stored in an attached (or internal) hard drive 2935. The computing device 2930 may also include a security processor (not shown), which may execute instructions of one or more computer programs to monitor the processes executing on the processor 2931 and any process that requests access to any hardware and/or software components of the computing device 2930 (e.g., ROM 2932, RAM 2933, the removable media 2934, the hard drive 2935, the device controller 2937, a network interface 2939, a GPS 2941, a Bluetooth interface 2942, a WiFi interface 2943, etc.). The computing device 2930 may include one or more output devices, such as the display 2936 (e.g., a screen, a display device, a monitor, a television, etc.), and may include one or more output device controllers 2937, such as a video processor. There may also be one or more user input devices 2938, such as a remote control, keyboard, mouse, touch screen, microphone, etc. The computing device 2930 may also include one or more network interfaces, such as a network interface 2939, which may be a wired interface, a wireless interface, or a combination of the two. The network interface 2939 may provide an interface for the computing device 2930 to communicate with a network 2940 (e.g., a RAN, or any other network). The network interface 2939 may include a modem (e.g., a cable modem), and the external network 2940 may include communication links, an external network, an in-home network, a provider's wireless, coaxial, fiber, or hybrid fiber/coaxial distribution system (e.g., a DOCSIS network), or any other desired network. Additionally, the computing device 2930 may include a location-detecting device, such as a global positioning system (GPS) microprocessor 2941, which may be configured to receive and process global positioning signals and determine, with possible assistance from an external server and antenna, a geographic position of the computing device 2930.

The example in FIG. 29 may be a hardware configuration, although the components shown may be implemented as software as well. Modifications may be made to add, remove, combine, divide, etc. components of the computing device 2930 as desired. Additionally, the components may be implemented using basic computing devices and components, and the same components (e.g., processor 2931, ROM storage 2932, display 2936, etc.) may be used to implement any of the other computing devices and components described herein. For example, the various components described herein may be implemented using computing devices having components such as a processor executing computer-executable instructions stored on a computer-readable medium, as shown in FIG. 29. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: decoding points of a point cloud frame, associated with content, to determine reconstructed points of the point cloud frame.

Clause 1B. The method of clause 1A, further comprising: generating a space partitioning tree comprising a plurality of nodes that associates one or more reference points, of a reference point cloud frame for attributes, with a plurality of sub-volumes associated with the reference point cloud frame.

Clause 1C. The method of clause 1B, further comprising: for each reconstructed point of the reconstructed points: determining a point based on a motion vector, of a motion vector field, associated with the reconstructed point.

Clause 1D. The method of clause 1C, further comprising: for each reconstructed point of the reconstructed points: determining a leaf node, of the plurality of the nodes, close to a position of the point.

Clause 1E. The method of clause 1D, further comprising: for each reconstructed point of the reconstructed points: selecting, from one or more reference points associated with the leaf node, one or more reference points closest to the position of the point.

Clause 1F. The method of clause 1E, further comprising: for each reconstructed point of the reconstructed points: determining, based on one or more attributes associated with the one or more selected reference points, an attribute predictor for an attribute associated with the reconstructed point. Reference to clause 1 herein may refer to one or each of clause 1A, clause 1B, clause 1C, clause 1D, clause 1E and clause 1F.

Clause 2. The method of clause 1, further comprising: for each reconstructed point of the reconstructed points: decoding, from a bitstream, a residual attribute indicating a difference between the attribute associated with each reconstructed point and the attribute predictor; and decoding, based on the attribute predictor and the decoded residual attribute, the attribute associated with the each reconstructed point of the reconstructed points.

Clause 3. The method of any one of clauses 1-2, wherein the determining the attribute predictor is further based on: approximation information for searching the one or more reference points from the reference point cloud frame.

Clause 4. The method of any one of clauses 1-3, wherein the one or more selected reference points comprise a plurality of selected reference points; and the method further comprising: determining, based on a weighted average of the plurality of attributes, the attribute predictor, wherein the weighted average of the plurality of attributes is based on respective distances between the plurality of selected reference points and the position of the point.

Clause 5. The method of any one of clauses 1-4, further comprising: selecting, based on distances between the one or more reference points and the position of the point, the one or more reference points close to the position of the point, wherein the distances comprise at least one of a Manhattan distance, a Euclidean distance, Chebyshev distance, or a Minkowski distance.

Clause 6. The method of any one of clauses 1-5, wherein the determining the point is further based on translating the reconstructed point by the motion vector.

Clause 7. The method of any one of clauses 1-6, wherein the motion vector is associated with all points of the reconstructed points.

Clause 8. The method of any one of clauses 1-7, wherein the selecting the one or more reference points comprises: performing a depth-first search on the space partitioning tree to determine a node, of the plurality of nodes, associated with the smallest sub-volume containing the position of the point.

Clause 9. The method of any one of clauses 1-8, wherein the determined node is the leaf node.

Clause 10. The method of any one of clauses 1-9, wherein based on the determined node being a non-leaf node, the leaf node is determined as a child node of the determined node.

Clause 11. The method of any one of clauses 1-10, further comprising: determining the reference point cloud frame for the attributes from an already-coded reference point cloud frame, wherein the already-coded reference point cloud frame is used to decode a geometry of the point cloud frame; and decoding at least one of: the motion vector field; or an indication of the already-coded reference point cloud frame.

Clause 12. The method of any one of clauses 1-11, wherein the decoding of the residual attribute further comprises: decoding, from the bitstream, a transformed coefficient corresponding to the residual attribute; and determining, based on applying an inverse intra transform to the decoded transformed coefficient, the residual attribute.

Clause 13. The method of clause 12, further comprising: dequantizing the transformed coefficient, wherein the determining the residual attribute is based on applying an inverse intra transform to the dequantized transformed coefficient.

Clause 14. The method of clause 13, wherein the inverse intra transform comprises at least one of: an inverse Adaptive-DCT (A-DCT); an inverse RAHT transform of a RAHT scheme; or an inverse Haar transform.

Clause 15. The method of any one of clauses 1-14, wherein the one or more reference points is one reference point.

Clause 16. The method of any one of clauses 1-15, wherein the one or more reference points comprise a plurality of reference points and the attribute predictor is determined based on attributes of the plurality of reference points.

Clause 17. The method of any one of clauses 1-16, wherein the motion vector is associated with a set of cuboids spatially partitioning a volume containing a decoded geometry of the point cloud frame.

Clause 18. The method of any one of clauses 1-17, wherein the space partitioning tree comprises an octree structure.

Clause 19. A computing device comprising one or more processors and memory storing instructions that, when executed by the one or more processors, cause the computing device to perform the method of any one of clauses 1-18.

Clause 20. A system comprising: a computing device configured to perform the method of any one of clauses 1-18, and a second computing device configured to encode the points of the point cloud frame.

Clause 21. A computer-readable medium storing instructions that, when executed, cause performance of the method of any one of clauses 1-18.

Clause 22A. A method comprising: decoding points of a point cloud frame, associated with content, to determine reconstructed points of the point cloud frame.

Clause 22B. The method of clause 22A, further comprising: determining, based on attributes associated with a reference point determined from an approximate nearest neighbor search, attribute predictors for attributes associated with the reconstructed points.

Clause 22C. The method of clause 22B, further comprising: for each reconstructed point of the reconstructed points: decoding, from a bitstream, a residual attribute indicating a difference between the attribute associated with the reconstructed point and the corresponding attribute predictor.

Clause 22D. The method of clause 22C, further comprising: for each reconstructed point of the reconstructed points: decoding, based on the corresponding attribute predictor and the decoded residual attribute, the attribute associated with the reconstructed point. Reference to clause 22 herein may refer to one or each of clause 22A, clause 22B, clause 22C and clause 22D.

Clause 23. The method of clause 22, wherein the decoding of the residual attribute further comprises: decoding, from the bitstream, a transformed coefficient corresponding to the residual attribute; and determining, based on applying an inverse intra transform to the decoded transformed coefficient, the residual attribute.

Clause 24. The method of clause 23, further comprising: dequantizing the transformed coefficient, wherein the determining the residual attribute is based on applying an inverse intra transform to the dequantized transformed coefficient.

Clause 25. The method of clause 23, wherein the inverse intra transform comprises at least one of: an inverse Adaptive-DCT (A-DCT); an inverse RAHT transform of a RAHT scheme; or an inverse Haar transform.

Clause 26. The method of any one of clauses 22-25, wherein the decoding the residual attribute is based on a prediction with lifting (pred-lift) transform scheme.

Clause 27. A computing device comprising one or more processors and memory storing instructions that, when executed by the one or more processors, cause the computing device to perform the method of any one of clauses 22-26.

Clause 28. A system comprising: a computing device configured to perform the method of any one of clauses 19-26, and a second computing device configured to encode the points of the point cloud frame.

Clause 29. A computer-readable medium storing instructions that, when executed, cause performance of the method of any one of clauses 22-26.

Clause 30A. A method comprising: decoding points of a point cloud frame, associated with content, to determine reconstructed points of the point cloud frame.

Clause 30B. The method of clause 30A, further comprising: based on attributes associated with a reference point cloud frame, a motion vector field applied to the reconstructed points, and approximation information for searching reference points from the reference point cloud frame for the reconstructed points, determining attribute predictors for attributes associated with the reconstructed points.

Clause 30C. The method of clause 30B, further comprising: decoding, based on the determined attribute predictors, attributes associated with the reconstructed points. Reference to clause 30 herein may refer to one or each of clause 30A, clause 30B and clause 30C.

Clause 31. The method of clause 30, further comprising: decoding, from a bitstream, the approximation information, wherein the approximation information is decoded from at least one of: a parameter set for the point cloud frame; a sequence parameter set for a sequence of point cloud frames comprising the point cloud frame; or an attribute parameter set associated with the attributes associated with the point cloud frame.

Clause 32. The method of any one of clauses 30-31, wherein the approximation information indicates a quantity of reference points to be searched to determine each reconstructed point of the reconstructed points; and wherein each reconstructed point of the reconstructed points is used to determine each attribute predictor associated with each attribute of the reconstructed point.

Clause 33. The method of any one of clauses 30-32, wherein the approximation information indicates a leaf node size associated with a space partitioning tree generated to order the reference points from the reference point cloud frame.

Clause 34. The method of any one of clauses 30-33, wherein the approximation information indicates that a reference point is searched for a reconstructed point to determine an attribute predictor for the attribute associated with the corresponding reconstructed point.

Clause 35. The method of any one of clauses 30-34, wherein the determining the attribute predictors further comprises: generating a space partitioning tree corresponding to the reference point cloud frame, and wherein: the space partitioning tree comprises an octree structure; and the reference points from the reference point cloud frame are reordered based on octree nodes in the octree structure.

Clause 36. The method of any one of clauses 30-35, wherein the one or more reference points is one reference point.

Clause 37. The method of any one of clauses 30-36, wherein the one or more reference points comprise a plurality of reference points and the attribute predictor is determined based on attributes of the plurality of reference points.

Clause 38. The method of any one of clauses 30-37, wherein the octree structure comprises a plurality of cuboids with each cuboid including a range of indices corresponding to reference points contained within the cuboid.

Clause 39. The method of any one of clauses 30-38, wherein the space partitioning tree is generated based on the approximation information.

Clause 40. The method of any one of clauses 30-39, wherein the approximation information is decoded from an attribute slice header.

Clause 41. A computing device comprising one or more processors and memory storing instructions that, when executed by the one or more processors, cause the computing device to perform the method of any one of clauses 30-40.

Clause 42. A system comprising: a computing device configured to perform the method of any one of clauses 30-40, and a second computing device configured to encode the points of the point cloud frame.

Clause 43. A computer-readable medium storing instructions that, when executed, cause performance of the method of any one of clauses 30-40.

A computing device may perform a method comprising multiple operations. The computing device may comprise a decoder. The computing device may decode points of a point cloud frame, associated with content, to determine reconstructed points of the point cloud frame; generate a space partitioning tree comprising a plurality of nodes that associates one or more reference points, of a reference point cloud frame for attributes, with a plurality of sub-volumes associated with the reference point cloud frame; for each reconstructed point of the reconstructed points: may determine a point based on a motion vector, of a motion vector field, associated with the reconstructed point; for each reconstructed point of the reconstructed points: may determine a leaf node, of the plurality of the nodes, close to a position of the point; for each reconstructed point of the reconstructed points: may select, from one or more reference points associated with the leaf node, one or more reference points closest to the position of the point; for each reconstructed point of the reconstructed points: may determine, based on one or more attributes associated with the one or more selected reference points, an attribute predictor for an attribute associated with the reconstructed point. The computing device may, for each reconstructed point of the reconstructed points, may decode, from a bitstream, a residual attribute indicating a difference between the attribute associated with each reconstructed point and the attribute predictor; and decode, based on the attribute predictor and the decoded residual attribute, the attribute associated with the each reconstructed point of the reconstructed points; wherein the determining the attribute predictor may be further based on: approximation information for searching the one or more reference points from the reference point cloud frame; wherein the one or more selected reference points may comprise a plurality of selected reference points. The computing device may determine, based on a weighted average of the plurality of attributes, the attribute predictor, wherein the weighted average of the plurality of attributes may be based on respective distances between the plurality of selected reference points and the position of the point. The computing device may select, based on distances between the one or more reference points and the position of the point, the one or more reference points close to the position of the point, wherein the distances may comprise at least one of a Manhattan distance, a Euclidean distance, Chebyshev distance, or a Minkowski distance; wherein the determining the point may be further based on translating the reconstructed point by the motion vector; wherein the motion vector may be associated with all points of the reconstructed points; wherein the selecting the one or more reference points may comprise: performing a depth-first search on the space partitioning tree to determine a node, of the plurality of nodes, associated with the smallest sub-volume containing the position of the point; wherein the determined node may be the leaf node; wherein based on the determined node being a non-leaf node, the leaf node may be determined as a child node of the determined node. The computing device may determine the reference point cloud frame for the attributes from an already-coded reference point cloud frame, wherein the already-coded reference point cloud frame may be used to decode a geometry of the point cloud frame; and may decode at least one of: the motion vector field; or an indication of the already-coded reference point cloud frame; wherein the decoding of the residual attribute may further comprise: decoding, from the bitstream, a transformed coefficient corresponding to the residual attribute; and determining, based on applying an inverse intra transform to the decoded transformed coefficient, the residual attribute. The computing device may dequantize the transformed coefficient, wherein the determining the residual attribute may be based on applying an inverse intra transform to the dequantized transformed coefficient; wherein the inverse intra transform may comprise at least one of: an inverse Adaptive-DCT (A-DCT); an inverse RAHT transform of a RAHT scheme; or an inverse Haar transform; wherein the one or more reference points may be one reference point; wherein the one or more reference points may comprise a plurality of reference points and the attribute predictor may be determined based on attributes of the plurality of reference points; wherein the motion vector may be associated with a set of cuboids spatially partitioning a volume containing a decoded geometry of the point cloud frame; wherein the space partitioning tree may comprise an octree structure. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

A computing device may perform a method comprising multiple operations. The computing device may comprise a decoder. The computing device may decode points of a point cloud frame, associated with content, to determine reconstructed points of the point cloud frame; determine, based on attributes associated with a reference point determined from an approximate nearest neighbor search, attribute predictors for attributes associated with the reconstructed points; for each reconstructed point of the reconstructed points: may decode, from a bitstream, a residual attribute indicating a difference between the attribute associated with the reconstructed point and the corresponding attribute predictor; for each reconstructed point of the reconstructed points: may decode, based on the corresponding attribute predictor and the decoded residual attribute, the attribute associated with the reconstructed point; wherein the decoding of the residual attribute may further comprise: decoding, from the bitstream, a transformed coefficient corresponding to the residual attribute; and determining, based on applying an inverse intra transform to the decoded transformed coefficient, the residual attribute. The computing device may dequantize the transformed coefficient, wherein the determining the residual attribute is based on applying an inverse intra transform to the dequantized transformed coefficient; wherein the inverse intra transform may comprise at least one of: an inverse Adaptive-DCT (A-DCT); an inverse RAHT transform of a RAHT scheme; or an inverse Haar transform; wherein the decoding the residual attribute may be based on a prediction with lifting (pred-lift) transform scheme. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

A computing device may perform a method comprising multiple operations. The computing device may comprise a decoder. The computing device may decode points of a point cloud frame, associated with content, to determine reconstructed points of the point cloud frame; based on attributes associated with a reference point cloud frame, a motion vector field applied to the reconstructed points, and approximation information for searching reference points from the reference point cloud frame for the reconstructed points, determine attribute predictors for attributes associated with the reconstructed points; decode, based on the determined attribute predictors, attributes associated with the reconstructed points. The computing device may decode, from a bitstream, the approximation information, wherein the approximation information may be decoded from at least one of: a parameter set for the point cloud frame; a sequence parameter set for a sequence of point cloud frames comprising the point cloud frame; or an attribute parameter set associated with the attributes associated with the point cloud frame; wherein the approximation information may indicate a quantity of reference points to be searched to determine each reconstructed point of the reconstructed points; and wherein each reconstructed point of the reconstructed points may be used to determine each attribute predictor associated with each attribute of the reconstructed point; wherein the approximation information may indicate a leaf node size associated with a space partitioning tree generated to order the reference points from the reference point cloud frame; wherein the approximation information may indicate that a reference point is searched for a reconstructed point to determine an attribute predictor for the attribute associated with the corresponding reconstructed point; wherein the determining the attribute predictors further may comprise: generating a space partitioning tree corresponding to the reference point cloud frame, and wherein: the space partitioning tree may comprise an octree structure; and the reference points from the reference point cloud frame are reordered based on octree nodes in the octree structure; wherein the one or more reference points may be one reference point; wherein the one or more reference points may comprise a plurality of reference points and the attribute predictor may be determined based on attributes of the plurality of reference points; wherein the octree structure may comprise a plurality of cuboids with each cuboid including a range of indices corresponding to reference points contained within the cuboid; wherein the space partitioning tree may be generated based on the approximation information; wherein the approximation information is decoded from an attribute slice header. The computing device may comprise one or more processors and memory, storing instructions that, when executed by the one or more processors, perform the method described herein. A system may comprise the computing device configured to perform the described method, additional operations, and/or include additional elements; and a second computing device configured to encode the points of the point cloud frame. A computer-readable medium may store instructions that, when executed, cause performance of the described method, additional operations, and/or include additional elements.

One or more examples herein may be described as a process which may be depicted as a flowchart, a flow diagram, a data flow diagram, a structure diagram, and/or a block diagram. Although a flowchart may describe operations as a sequential process, one or more of the operations may be performed in parallel or concurrently. The order of the operations shown may be re-arranged. A process may be terminated when its operations are completed, but could have additional steps not shown in a figure. A process may correspond to a method, a function, a procedure, a subroutine, a subprogram, etc. If a process corresponds to a function, its termination may correspond to a return of the function to the calling function or the main function.

Operations described herein may be implemented by hardware, software, firmware, middleware, microcode, hardware description languages, or any combination thereof. When implemented in software, firmware, middleware or microcode, the program code or code segments to perform the necessary tasks (e.g., a computer-program product) may be stored in a computer-readable or machine-readable medium. A processor(s) may perform the necessary tasks. Features of the disclosure may be implemented in hardware using, for example, hardware components such as application-specific integrated circuits (ASICs) and gate arrays. Implementation of a hardware state machine to perform the functions described herein will also be apparent to persons skilled in the art.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein. Computer-readable medium may comprise, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

A non-transitory tangible computer readable media may comprise instructions executable by one or more processors configured to cause operations described herein. An article of manufacture may comprise a non-transitory tangible computer readable machine-accessible medium having instructions encoded thereon for enabling programmable hardware to cause a device (e.g., an encoder, a decoder, a transmitter, a receiver, and the like) to allow operations described herein. The device, or one or more devices such as in a system, may include one or more processors, memory, interfaces, and/or the like.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information.

An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more of the operations described herein may be conditional. For example, one or more operations may be performed if certain criteria are met, such as in computing device, a communication device, an encoder, a decoder, a network, a combination of the above, and/or the like. Example criteria may be based on one or more conditions such as device configurations, traffic load, initial system set up, packet sizes, traffic characteristics, a combination of the above, and/or the like. If the one or more criteria are met, various examples may be used. It may be possible to implement any portion of the examples described herein in any order and based on any condition.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:

   decoding points of a point cloud frame, associated with content, to determine reconstructed points of the point cloud frame;
   generating a space partitioning tree comprising a plurality of nodes that associates one or more reference points, of a reference point cloud frame for attributes, with a plurality of sub-volumes associated with the reference point cloud frame; and
   for each reconstructed point of the reconstructed points:

   determining a point based on a motion vector, of a motion vector field, associated with the reconstructed point;
   determining a leaf node, of the plurality of the nodes, close to a position of the point;
   selecting, from one or more reference points associated with the leaf node, one or more reference points closest to the position of the point; and
   determining, based on one or more attributes associated with the one or more selected reference points, an attribute predictor for an attribute associated with the reconstructed point.

2. The method of claim 1, further comprising:
   for each reconstructed point of the reconstructed points:

   decoding, from a bitstream, a residual attribute indicating a difference between the attribute associated with each reconstructed point and the attribute predictor; and
   decoding, based on the attribute predictor and the decoded residual attribute, the attribute associated with the each reconstructed point of the reconstructed points.

3. The method of any one of claims 1-2, wherein the determining the attribute predictor is further based on: approximation information for searching the one or more reference points from the reference point cloud frame.

4. The method of any one of claims 1-3, wherein the one or more selected reference points comprise a plurality of selected reference points, the method further comprising:
determining, based on a weighted average of the plurality of attributes, the attribute predictor, wherein the weighted average of the plurality of attributes is based on respective distances between the plurality of selected reference points and the position of the point.

5. The method of any one of claims 1-4, further comprising:
selecting, based on distances between the one or more reference points and the position of the point, the one or more reference points close to the position of the point, wherein the distances comprise at least one of a Manhattan distance, a Euclidean distance, Chebyshev distance, or a Minkowski distance.

6. The method of any one of claims 1-5, wherein the determining the point is further based on translating the reconstructed point by the motion vector.

7. The method of any one of claims 1-6, wherein the motion vector is associated with all points of the reconstructed points.

8. The method of any one of claims 1-7, wherein the selecting the one or more reference points comprises:
performing a depth-first search on the space partitioning tree to determine a node, of the plurality of nodes, associated with the smallest sub-volume containing the position of the point.

9. The method of any one of claims 1-8, further comprising:

determining the reference point cloud frame for the attributes from an already-coded reference point cloud frame, wherein the already-coded reference point cloud frame is used to decode a geometry of the point cloud frame; and decoding at least one of:

the motion vector field; or
an indication of the already-coded reference point cloud frame.

10. The method of any one of claims 2-9, wherein the decoding of the residual attribute further comprises:

decoding, from the bitstream, a transformed coefficient corresponding to the residual attribute; and
determining, based on applying an inverse intra transform to the decoded transformed coefficient, the residual attribute.

11. The method of claim 10, further comprising:
dequantizing the transformed coefficient, wherein the determining the residual attribute is based on applying an inverse intra transform to the dequantized transformed coefficient.

12. The method of claim 11, wherein the inverse intra transform comprises at least one of:

an inverse Adaptive-DCT (A-DCT);
an inverse RAHT transform of a RAHT scheme; or
an inverse Haar transform.

13. A computing device comprising: one or more processors; and memory storing instructions that, when executed by the one or more processors, cause the computing device to perform:
the method of any one of claims 1-12.

14. A system comprising:

a computing device configured to perform:
the method of any one of claims 1-12; and
a second computing device configured to encode the points of the point cloud frame.

15. A computer-readable medium storing instructions that, when executed, cause performance of:
the method of any one of claims 1-12.

FIG. 1

FIG. 2

*FIG. 3*

FIG. 4

FIG. 5

```
┌─────────────────────────────────────┐
│  Determine occupancy configuration β │
│                602                   │
└─────────────────────────────────────┘
                   │
                   ▼
┌─────────────────────────────────────┐
│   Dynamically reduce using DR$^n$    │
│                604                   │
└─────────────────────────────────────┘
                   │
                   ▼
┌─────────────────────────────────────┐
│       Lookup context index in LUT    │
│                606                   │
└─────────────────────────────────────┘
                   │
                   ▼
┌─────────────────────────────────────┐
│            Select context            │
│                608                   │
└─────────────────────────────────────┘
                   │
                   ▼
┌─────────────────────────────────────┐
│  Entropy code occupancy of current   │
│            child cuboid              │
│                610                   │
└─────────────────────────────────────┘
```

FIG. 6

FIG. 7

EP 4 589 535 A1

FIG. 8A

FIG. 8B

EP 4 589 535 A1

FIG. 8C

$u+v+w = 1$

$0 \leq u, v, w$

(A,u)

(B,v)

910

P

912

(C,w)

$P = uA + vB + wC$

*FIG. 9B*

900

902

904

901

$P_{int}$

$P_{start}$

905

*FIG. 9A*

1000

current frame 1001

already-coded reference frame 1010

motion search
1020

motion vectors 1021

entropy code motion vectors
1025

bitstream 1050

motion compensate reference frame
1030

motion compensated frame 1031

inter frame predict current frame
1040

inter residual 1041

entropy code inter residual
1045

bitstream 1050

FIG. 10

FIG. 11

EP 4 589 535 A1

FIG. 12

EP 4 589 535 A1

EP 4 589 535 A1

```
                  Subtract predicted
                     attributes          res a²
                   from attributes  ─────────────────────────────────────────────────────┐
                        1330                                                               │
                          │                                                                │
                          ▼                                                                │
                   Predict attributes          Subtract predicted                         │
                        1320                       attributes        res up a¹            │
                          ▲                       from attributes  ──────────────┐        │
                          │            Obtain          1360                      │        │
                          │            update            ▲                       │        │
            a²            │          attributes           │          Obtain update attributes
                          │             1375       Predict attributes        1385        │
                          │                              1350                  │          │
                          │                               ▲                    │          │
            up a¹         │                               │                    │      Encode
                          │                               │                    │       into
  a    Split attributes   │   Add update attributes   Split attributes   Add update attributes  bitstream
      ──►     1310        │     to attributes             1340     up a⁰    to attributes       1370
            a⁰, a¹        │        1380                              ──►        1390
                                                                                              up up a⁰

                                         up a⁰
                                         up a¹
```

FIG. 13

1300

FIG. 14

FIG. 15

DC coefficients at
depth d

transform along
three directions

DC coefficients at
depth d-1

AC coefficients at
depth d

FIG. 16

EP 4 589 535 A1

current frame 1710

Encode geometry of the
current point cloud frame
1720

geometry information 1721

decoded geometry 1722

Reference point cloud
frame for attributes
1741

Map attributes of the current
geometry to the decoded
geometry
1730

Project the attributes of the reference
point cloud frame for attibutes onto the
decoded geometry
1740

Bitstream
1760

mapped attributes
1731

projected attributes 1742

Encode mapped attributes based on
attribute prediction obtained from
projected attributes
1750

attribute
information 1751

FIG. 17

1700

```
┌─────────────────────┐                                          ┌──────────┐
│ Decode geometry of  │        geometry information 1811         │          │
│ the current point   │ <─ ─ ─ ─ ─ ─ ─ ─ ─ ─ ─ ─ ─ ─ ─ ─ ─ ─ ─ │          │
│ cloud frame         │                                          │          │
│       1810          │                                          │          │
└─────────────────────┘                                          │          │
           │                                                     │          │
           │ decoded geometry 1812    Reference point cloud      │          │
           │                          frame for attributes       │          │
           ▼                                 1821                 │          │
┌─────────────────────┐                        │                 │ Bitstream│
│ Project the         │                        │                 │   1840   │
│ attributes of a     │                        │                 │          │
│ reference point     │ <──────────────────────┘                 │          │
│ cloud frame for     │                                          │          │
│ attributes onto the │                                          │          │
│ decoded geometry    │                                          │          │
│       1820          │                                          │          │
└─────────────────────┘                                          │          │
           │                                                     │          │
           │ projected attributes 1822                           │          │
           ▼                                                     │          │
┌─────────────────────┐                                          │          │
│ Decode attribute    │        attribute information 1831        │          │
│ information based on │ <─ ─ ─ ─ ─ ─ ─ ─ ─ ─ ─ ─ ─ ─ ─ ─ ─ ─ ─ │          │
│ attribute prediction│                                          │          │
│ obtained from       │                                          └──────────┘
│ projected attributes│
│       1830          │
└─────────────────────┘
```

decoded attributes 1832

1800

## FIG. 18

FIG. 19

FIG. 20A

FIG. 20B

decoded geometry 1914

**2101**

reference point
cloud frame 1902

```
┌─────────────────────────────────────────────────┐
│   ┌─────────────────────────────────────┐        │ ◄──
│   │ Generate attributes projection model │        │
│   │              2110                    │        │
│   └─────────────────────────────────────┘        │
│          │ attributes projection model 2104      │
│   ┌─────────────────────────────────────┐        │
│   │ Perform attributes projection onto  │ ◄──     │
│   │       the decoded geometry          │        │
│   │              2112                    │        │
│   └─────────────────────────────────────┘        │
└─────────────────────────────────────────────────┘
```

MV Field
2102

projected attributes 2106

2100

*FIG. 21*

For each reconstructed point of the decoded geometry
*2202*

Determine a point (p') based on a motion vector associated with the reconstructed point (p)
*2204*

Select one or more reference points from a reference point cloud frame based on distances between the one or more reference points and the point
*2206*

Determine, based on the distances, the one or more reference points as the *k* nearest points to a position of the point
*2208*

Determine an attribute predictor for an attribute of the reconstructed point based on attributes of the selected one or more reference points
*2210*

Determine the attribute predictor based on the distances between positions of the *k* nearest points and the position of the point
*2212*

Determine the attribute predictor is for the reconstructed point based on the point being associated with the reconstructed point
*2214*

*2200*

*FIG. 22*

EP 4 589 535 A1

*model m for reference points 2310*

Find, from reference points in model m, k approximately nearest point(s) to point position $p_1$ 2320

*point position $p_1$ 2340*

*approximation information 2360*

Bitstream 2370

*k approximately nearest point(s) 2330*

2300

*FIG. 23*

Find the node $c_1$ with smallest associated cuboid
containing point position $p_1$
*2410*

Is $c_1$ a leaf node ?
*2420*

no

Compute $d_{max}$ from cuboid associated with $c_1$
*2440*

yes

Find nearest point to point position $p_1$
among points associated with $c_1$
*2430*

Continue the search for approximately nearest
point to point position $p_1$
*2450*

*approximately nearest point 2460*

*2400*

## FIG. 24

Find close leaf node $c_1$ to point position $p_1$
*2510*

Find approximately nearest point to point position $p_1$
among points associated with $c_1$
*2520*

*2500*

# FIG. 25

Determine attributes of reconstructed points of a point cloud frame based on attributes of points of the point cloud frame
*2602*

Determine attribute predictors of the attributes of the reconstructed points based on attributes of a reference point cloud frame, a motion vector field applied to the reconstructed points, and approximation information for selecting reference points for the reconstructed points
*2604*

Encode the attributes of the reconstructed points based on the attribute predictors
*2606*

*2600*

## FIG. 26

Decode points of a cloud frame to determine reconstructed points of the
point cloud frame
*2702*

Determine attribute predictors of attributes of the reconstructed points
based on attributes of a reference point cloud frame, a motion vector
field applied to the reconstructed points, and approximation information
for selecting reference points for the reconstructed points
*2704*

Decode the attributes of the reconstructed points based on the attribute
predictors
*2706*

*2700*

*FIG. 27*

**FIG. 28**

FIG. 29

Europäisches
Patentamt
European
Patent Office
Office européen
des brevets

# EUROPEAN SEARCH REPORT

**Application Number**

EP 25 15 2370

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAQUET (OFINNO) J ET AL: "[GPCC][EE16.60 related] Improvement of local motion search", 143. MPEG MEETING; 20230717 - 20230721; GENEVA; (MOTION PICTURE EXPERT GROUP OR ISO/IEC JTC1/SC29/WG11), , no. m64001 12 July 2023 (2023-07-12), XP030324645, Retrieved from the Internet: URL:https://dms.mpeg.expert/doc_end_user/documents/143_Geneva/wg11/m64001-v1-m64001_v1.zip m64001 [GPCC][EE13.60 related] Improvement of local motion search.pptx [retrieved on 2023-07-12] * the whole document * | 1-15 | INV. G06T9/00 H04N19/597 H04N19/96 |
| X | TAQUET (OFINNO) J ET AL: "[GPCC][EE16.60 related] Improvement of local motion search", 143. MPEG MEETING; 20230717 - 20230721; GENEVA; (MOTION PICTURE EXPERT GROUP OR ISO/IEC JTC1/SC29/WG11), , no. m64001 12 July 2023 (2023-07-12), XP030324644, Retrieved from the Internet: URL:https://dms.mpeg.expert/doc_end_user/documents/143_Geneva/wg11/m64001-v1-m64001_v1.zip m64001 [GPCC][EE13.60 related] Improvement of local motion search.docx [retrieved on 2023-07-12] * the whole document * | 1-15 | |
| A | US 2023/045663 A1 (HUR HYEJUNG [KR]) 9 February 2023 (2023-02-09) * paragraph [0159] - paragraph [0161] * | 1-15 | TECHNICAL FIELDS SEARCHED (IPC) G06T H04N |

The present search report has been drawn up for all claims

| Place of search | Date of completion of the search | Examiner |
|---|---|---|
| Munich | 14 May 2025 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2370

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | Publication date | Patent family member(s) | | Publication date |
|---|---|---|---|---|
| US 2023045663 A1 | 09-02-2023 | CN | 117581541 A | 20-02-2024 |
| | | EP | 4362463 A1 | 01-05-2024 |
| | | JP | 2024525583 A | 12-07-2024 |
| | | KR | 20240032912 A | 12-03-2024 |
| | | US | 2023045663 A1 | 09-02-2023 |
| | | WO | 2023282581 A1 | 12-01-2023 |

EPO FORM P0459

For more details about this annex : see Official Journal of the European Patent Office, No. 12/82

**EP 4 589 535 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63621552